# EUROPEAN PATENT APPLICATION

(11) **EP 4 647 284 A2**
(43) Date of publication of application: **12.11.2025**
(21) Application number: 25204026.6
(22) Date of filing: 11.03.2022
(51) Int. Cl.: B60K 35/81

(54) **USER INTERFACES WITH VARIABLE APPEARANCES**

(30) Priority: 14.03.2021 US 202163160909 P; 14.06.2021 US 202163210388 P; 19.11.2021 US 202163281620 P
(62) Divisional of application: 22714301.3
(71) Applicant: Apple Inc., Cupertino, CA 95014 (US)
(72) Inventor: DELLINGER, Richard R., Cupertino, 95014 (US)
(74) Representative: COPA Copenhagen Patents

(57) **Abstract**

The present disclosure generally relates to variable appearances of user interfaces. In some examples, user interfaces are user-customizable. In some examples, user interfaces provide indications of exceed limits. In some examples, a layout/appearance elements of the user interface dynamically change to adapt to changing parameters.

## Description

### CROSS-REFERENCE TO RELATED APPLICATIONS

The application claims priority to U.S. Provisional Patent Application Serial No. 63/160,909, entitled "USER INTERFACES WITH VARIABLE APPEARANCES," filed on March 14, 2021, U.S. Provisional Patent Application Serial No. 63/210,388, entitled "USER INTERFACES WITH VARIABLE APPEARANCES," filed on June 14, 2021, and U.S. Provisional Patent Application Serial No. 63/281,620, entitled "USER INTERFACES WITH VARIABLE APPEARANCES," filed on November 19, 2021.

### BACKGROUND

Electronic instrument clusters provide the driver of a vehicle with information about the vehicle, such as a speed and fuel level of the vehicle.

### BRIEF SUMMARY

Some techniques for managing digital instrument clusters using electronic devices, however, are generally cumbersome and inefficient. For example, some existing techniques use a complex and time-consuming user interface, which may include multiple key presses or keystrokes. Existing techniques require more time than necessary, wasting user time and device energy. This latter consideration is particularly important in battery-operated devices.

Accordingly, the present technique provides electronic devices with faster, more efficient methods and interfaces for managing digital instrument clusters. Such methods and interfaces optionally complement or replace other methods for managing digital instrument clusters. Such methods and interfaces reduce the cognitive burden on a user and produce a more efficient human-machine interface. For battery-operated computing devices, such methods and interfaces conserve power and increase the time between battery charges. Further, such methods and techniques provide visual feedback to the user about the vehicle by optionally emphasizing relevant information and/or presenting the information in a customized manner, thereby reducing driver distraction.

In accordance with some embodiments, a method performed at a computer system that is in communication with a display generation component is described. The method includes: providing information to the display generation component that defines an appearance of a vehicle instrument cluster for display, via the display generation component, as a first vehicle instrument cluster interface with a first appearance, the first vehicle instrument cluster interface including a first set of one or more instrument cluster elements; subsequent to providing information to the display generation component that defines an appearance of the vehicle instrument cluster, detecting a sequence of one or more user reconfiguration inputs directed to a reconfiguration user interface for the vehicle instrument cluster; and after receiving the sequence of one or more user reconfiguration inputs, providing information to the display generation component that defines an updated appearance of the vehicle instrument cluster for display, via the display generation component, as a second vehicle instrument cluster interface with a second appearance that is different from the first appearance, the second vehicle instrument cluster interface including a second set of one or more instrument cluster elements that are different in appearance, location and/or arrangement from the first set of one or more instrument cluster elements.

In accordance with some embodiments, a non-transitory computer-readable storage medium is described. The non-transitory computer-readable storage medium stores one or more programs configured to be executed by one or more processors of a computer system that is in communication with a display generation component, the one or more programs including instructions for: providing information to the display generation component that defines an appearance of a vehicle instrument cluster for display, via the display generation component, as a first vehicle instrument cluster interface with a first appearance, the first vehicle instrument cluster interface including a first set of one or more instrument cluster elements; subsequent to providing information to the display generation component that defines an appearance of the vehicle instrument cluster, detecting a sequence of one or more user reconfiguration inputs directed to a reconfiguration user interface for the vehicle instrument cluster; and after receiving the sequence of one or more user reconfiguration inputs, providing information to the display generation component that defines an updated appearance of the vehicle instrument cluster for display, via the display generation component, as a second vehicle instrument cluster interface with a second appearance that is different from the first appearance, the second vehicle instrument cluster interface including a second set of one or more instrument cluster elements that are different in appearance, location and/or arrangement from the first set of one or more instrument cluster elements.

In accordance with some embodiments, a transitory computer-readable storage medium is described. The transitory computer-readable storage medium stores one or more programs configured to be executed by one or more processors of a computer system that is in communication with a display generation component, the one or more programs including instructions for: providing information to the display generation component that defines an appearance of a vehicle instrument cluster for display, via the display generation component, as a first vehicle instrument cluster interface with a first appearance, the first vehicle instrument cluster interface including a first set of one or more instrument cluster elements; subsequent to providing information to the display generation component that defines an appearance of the vehicle instrument cluster, detecting a sequence of one or more user reconfiguration inputs directed to a reconfiguration user interface for the vehicle instrument cluster; and after receiving the sequence of one or more user reconfiguration inputs, providing information to the display generation component that defines an updated appearance of the vehicle instrument cluster for display, via the display generation component, as a second vehicle instrument cluster interface with a second appearance that is different from the first appearance, the second vehicle instrument cluster interface including a second set of one or more instrument cluster elements that are different in appearance, location and/or arrangement from the first set of one or more instrument cluster elements.

In accordance with some embodiments, a computer system is described. The computer system comprises: a display generation component; one or more processors; and memory storing one or more programs configured to be executed by the one or more processors, the one or more programs including instructions for: providing information to the display generation component that defines an appearance of a vehicle instrument cluster for display, via the display generation component, as a first vehicle instrument cluster interface with a first appearance, the first vehicle instrument cluster interface including a first set of one or more instrument cluster elements; subsequent to providing information to the display generation component that defines an appearance of the vehicle instrument cluster, detecting a sequence of one or more user reconfiguration inputs directed to a reconfiguration user interface for the vehicle instrument cluster; and after receiving the sequence of one or more user reconfiguration inputs, providing information to the display generation component that defines an updated appearance of the vehicle instrument cluster for display, via the display generation component, as a second vehicle instrument cluster interface with a second appearance that is different from the first appearance, the second vehicle instrument cluster interface including a second set of one or more instrument cluster elements that are different in appearance, location and/or arrangement from the first set of one or more instrument cluster elements.

In accordance with some embodiments, a computer system is described. The computer system comprises: a display generation component; means for providing information to the display generation component that defines an appearance of a vehicle instrument cluster for display, via the display generation component, as a first vehicle instrument cluster interface with a first appearance, the first vehicle instrument cluster interface including a first set of one or more instrument cluster elements; means, subsequent to providing information to the display generation component that defines an appearance of the vehicle instrument cluster, for detecting a sequence of one or more user reconfiguration inputs directed to a reconfiguration user interface for the vehicle instrument cluster; and means, after receiving the sequence of one or more user reconfiguration inputs, for providing information to the display generation component that defines an updated appearance of the vehicle instrument cluster for display, via the display generation component, as a second vehicle instrument cluster interface with a second appearance that is different from the first appearance, the second vehicle instrument cluster interface including a second set of one or more instrument cluster elements that are different in appearance, location and/or arrangement from the first set of one or more instrument cluster elements.

In accordance with some embodiments, a computer program product is described. The computer program product comprises one or more programs configured to be executed by one or more processors of a computer system that is in communication with a display generation component. The one or more programs include instructions for: providing information to the display generation component that defines an appearance of a vehicle instrument cluster for display, via the display generation component, as a first vehicle instrument cluster interface with a first appearance, the first vehicle instrument cluster interface including a first set of one or more instrument cluster elements; subsequent to providing information to the display generation component that defines an appearance of the vehicle instrument cluster, detecting a sequence of one or more user reconfiguration inputs directed to a reconfiguration user interface for the vehicle instrument cluster; and after receiving the sequence of one or more user reconfiguration inputs, providing information to the display generation component that defines an updated appearance of the vehicle instrument cluster for display, via the display generation component, as a second vehicle instrument cluster interface with a second appearance that is different from the first appearance, the second vehicle instrument cluster interface including a second set of one or more instrument cluster elements that are different in appearance, location and/or arrangement from the first set of one or more instrument cluster elements.

In accordance with some embodiments, a method performed at a computer system that is in communication with a display generation component is described. The method includes: providing information to the display generation component that defines an appearance of a vehicle instrument cluster for display, via the display generation component, as a respective vehicle instrument cluster interface with a respective appearance, including: in accordance with a determination that the display generation component is a display generation component of a first type of vehicle, the information provided to the display generation component defines a first vehicle instrument cluster interface with a first appearance; and in accordance with a determination that the display generation component is a display generation component of a second type of vehicle different from the first type of vehicle, the information provided to the display generation component defines a second vehicle instrument cluster interface with a second appearance that is different from the first appearance.

In accordance with some embodiments, a non-transitory computer-readable storage medium is described. The non-transitory computer-readable storage medium stores one or more programs configured to be executed by one or more processors of a computer system that is in communication with a display generation component, the one or more programs including instructions for: providing information to the display generation component that defines an appearance of a vehicle instrument cluster for display, via the display generation component, as a respective vehicle instrument cluster interface with a respective appearance, including: in accordance with a determination that the display generation component is a display generation component of a first type of vehicle, the information provided to the display generation component defines a first vehicle instrument cluster interface with a first appearance; and in accordance with a determination that the display generation component is a display generation component of a second type of vehicle different from the first type of vehicle, the information provided to the display generation component defines a second vehicle instrument cluster interface with a second appearance that is different from the first appearance.

In accordance with some embodiments, a transitory computer-readable storage medium is described. The transitory computer-readable storage medium stores one or more programs configured to be executed by one or more processors of a computer system that is in communication with a display generation component, the one or more programs including instructions for: providing information to the display generation component that defines an appearance of a vehicle instrument cluster for display, via the display generation component, as a respective vehicle instrument cluster interface with a respective appearance, including: in accordance with a determination that the display generation component is a display generation component of a first type of vehicle, the information provided to the display generation component defines a first vehicle instrument cluster interface with a first appearance; and in accordance with a determination that the display generation component is a display generation component of a second type of vehicle different from the first type of vehicle, the information provided to the display generation component defines a second vehicle instrument cluster interface with a second appearance that is different from the first appearance.

In accordance with some embodiments, a computer system is described. The computer system comprises: a display generation component; one or more processors; and memory storing one or more programs configured to be executed by the one or more processors, the one or more programs including instructions for: providing information to the display generation component that defines an appearance of a vehicle instrument cluster for display, via the display generation component, as a respective vehicle instrument cluster interface with a respective appearance, including: in accordance with a determination that the display generation component is a display generation component of a first type of vehicle, the information provided to the display generation component defines a first vehicle instrument cluster interface with a first appearance; and in accordance with a determination that the display generation component is a display generation component of a second type of vehicle different from the first type of vehicle, the information provided to the display generation component defines a second vehicle instrument cluster interface with a second appearance that is different from the first appearance.

In accordance with some embodiments, a computer system is described. The computer system comprises: a display generation component; and means for providing information to the display generation component that defines an appearance of a vehicle instrument cluster for display, via the display generation component, as a respective vehicle instrument cluster interface with a respective appearance, including: in accordance with a determination that the display generation component is a display generation component of a first type of vehicle, the information provided to the display generation component defines a first vehicle instrument cluster interface with a first appearance; and in accordance with a determination that the display generation component is a display generation component of a second type of vehicle different from the first type of vehicle, the information provided to the display generation component defines a second vehicle instrument cluster interface with a second appearance that is different from the first appearance.

In accordance with some embodiments, a computer program product is described. The computer program product comprises one or more programs configured to be executed by one or more processors of a computer system that is in communication with a display generation component. The one or more programs include instructions for: providing information to the display generation component that defines an appearance of a vehicle instrument cluster for display, via the display generation component, as a respective vehicle instrument cluster interface with a respective appearance, including: in accordance with a determination that the display generation component is a display generation component of a first type of vehicle, the information provided to the display generation component defines a first vehicle instrument cluster interface with a first appearance; and in accordance with a determination that the display generation component is a display generation component of a second type of vehicle different from the first type of vehicle, the information provided to the display generation component defines a second vehicle instrument cluster interface with a second appearance that is different from the first appearance.

In accordance with some embodiments, a method performed at a computer system that is in communication with a display generation component is described. The method includes: displaying, via the display generation component, a speedometer indicating a current vehicle speed, wherein: in accordance with a determination that a current speed limit is a first speed and the current vehicle speed is a second speed that is above the first speed, a portion of the speedometer between a location on the speedometer corresponding to the first speed and a location on the speedometer corresponding to the second speed has a first appearance; and in accordance with a determination that the current speed limit is a third speed that is higher than the first speed and the current vehicle speed is the second speed that is not above the third speed, the portion of the speedometer between the location on the speedometer corresponding to the first speed and the location on the speedometer corresponding to the second speed has a second appearance that is different from the first appearance.

In accordance with some embodiments, a non-transitory computer-readable storage medium is described. The non-transitory computer-readable storage medium stores one or more programs configured to be executed by one or more processors of a computer system that is in communication with a display generation component, the one or more programs including instructions for: displaying, via the display generation component, a speedometer indicating a current vehicle speed, wherein: in accordance with a determination that a current speed limit is a first speed and the current vehicle speed is a second speed that is above the first speed, a portion of the speedometer between a location on the speedometer corresponding to the first speed and a location on the speedometer corresponding to the second speed has a first appearance; and in accordance with a determination that the current speed limit is a third speed that is higher than the first speed and the current vehicle speed is the second speed that is not above the third speed, the portion of the speedometer between the location on the speedometer corresponding to the first speed and the location on the speedometer corresponding to the second speed has a second appearance that is different from the first appearance.

In accordance with some embodiments, a transitory computer-readable storage medium is described. The transitory computer-readable storage medium stores one or more programs configured to be executed by one or more processors of a computer system that is in communication with a display generation component, the one or more programs including instructions for: displaying, via the display generation component, a speedometer indicating a current vehicle speed, wherein: in accordance with a determination that a current speed limit is a first speed and the current vehicle speed is a second speed that is above the first speed, a portion of the speedometer between a location on the speedometer corresponding to the first speed and a location on the speedometer corresponding to the second speed has a first appearance; and in accordance with a determination that the current speed limit is a third speed that is higher than the first speed and the current vehicle speed is the second speed that is not above the third speed, the portion of the speedometer between the location on the speedometer corresponding to the first speed and the location on the speedometer corresponding to the second speed has a second appearance that is different from the first appearance.

In accordance with some embodiments, a computer system is described. The computer system comprises: a display generation component; one or more processors; and memory storing one or more programs configured to be executed by the one or more processors, the one or more programs including instructions for: displaying, via the display generation component, a speedometer indicating a current vehicle speed, wherein: in accordance with a determination that a current speed limit is a first speed and the current vehicle speed is a second speed that is above the first speed, a portion of the speedometer between a location on the speedometer corresponding to the first speed and a location on the speedometer corresponding to the second speed has a first appearance; and in accordance with a determination that the current speed limit is a third speed that is higher than the first speed and the current vehicle speed is the second speed that is not above the third speed, the portion of the speedometer between the location on the speedometer corresponding to the first speed and the location on the speedometer corresponding to the second speed has a second appearance that is different from the first appearance.

In accordance with some embodiments, a computer system is described. The computer system comprises: a display generation component; and means for displaying, via the display generation component, a speedometer indicating a current vehicle speed, wherein: in accordance with a determination that a current speed limit is a first speed and the current vehicle speed is a second speed that is above the first speed, a portion of the speedometer between a location on the speedometer corresponding to the first speed and a location on the speedometer corresponding to the second speed has a first appearance; and in accordance with a determination that the current speed limit is a third speed that is higher than the first speed and the current vehicle speed is the second speed that is not above the third speed, the portion of the speedometer between the location on the speedometer corresponding to the first speed and the location on the speedometer corresponding to the second speed has a second appearance that is different from the first appearance.

In accordance with some embodiments, a computer program product is described. The computer program product comprises one or more programs configured to be executed by one or more processors of a computer system that is in communication with a display generation component. The one or more programs include instructions for: displaying, via the display generation component, a speedometer indicating a current vehicle speed, wherein: in accordance with a determination that a current speed limit is a first speed and the current vehicle speed is a second speed that is above the first speed, a portion of the speedometer between a location on the speedometer corresponding to the first speed and a location on the speedometer corresponding to the second speed has a first appearance; and in accordance with a determination that the current speed limit is a third speed that is higher than the first speed and the current vehicle speed is the second speed that is not above the third speed, the portion of the speedometer between the location on the speedometer corresponding to the first speed and the location on the speedometer corresponding to the second speed has a second appearance that is different from the first appearance.

In accordance with some embodiments, a method performed at a computer system that is in communication with a display generation component is described. The method includes: providing information to the display generation component that defines an appearance of a vehicle instrument cluster for display, via the display generation component, as a respective vehicle instrument cluster interface with a respective appearance, including: in accordance with a determination that display of the vehicle instrument cluster interface is subject to a first set of constraints on the visible display region of the display of the vehicle instrument cluster, the vehicle instrument cluster interface is displayed with a first appearance; and in accordance with a determination that display of the vehicle instrument cluster interface is subject to a second set of constraints on the visible display region of the display of the vehicle instrument cluster, wherein the second set of constraints are different from the first set of constraints, the vehicle instrument cluster interface is displayed with a second appearance that is different from the first appearance.

In accordance with some embodiments, a non-transitory computer-readable storage medium is described. The non-transitory computer-readable storage medium stores one or more programs configured to be executed by one or more processors of a computer system that is in communication with a display generation component, the one or more programs including instructions for: providing information to the display generation component that defines an appearance of a vehicle instrument cluster for display, via the display generation component, as a respective vehicle instrument cluster interface with a respective appearance, including: in accordance with a determination that display of the vehicle instrument cluster interface is subject to a first set of constraints on the visible display region of the display of the vehicle instrument cluster, the vehicle instrument cluster interface is displayed with a first appearance; and in accordance with a determination that display of the vehicle instrument cluster interface is subject to a second set of constraints on the visible display region of the display of the vehicle instrument cluster, wherein the second set of constraints are different from the first set of constraints, the vehicle instrument cluster interface is displayed with a second appearance that is different from the first appearance.

In accordance with some embodiments, a transitory computer-readable storage medium is described. The transitory computer-readable storage medium stores one or more programs configured to be executed by one or more processors of a computer system that is in communication with a display generation component, the one or more programs including instructions for: providing information to the display generation component that defines an appearance of a vehicle instrument cluster for display, via the display generation component, as a respective vehicle instrument cluster interface with a respective appearance, including: in accordance with a determination that display of the vehicle instrument cluster interface is subject to a first set of constraints on the visible display region of the display of the vehicle instrument cluster, the vehicle instrument cluster interface is displayed with a first appearance; and in accordance with a determination that display of the vehicle instrument cluster interface is subject to a second set of constraints on the visible display region of the display of the vehicle instrument cluster, wherein the second set of constraints are different from the first set of constraints, the vehicle instrument cluster interface is displayed with a second appearance that is different from the first appearance.

In accordance with some embodiments, a computer system is described. The computer system comprises: a display generation component; one or more processors; and memory storing one or more programs configured to be executed by the one or more processors, the one or more programs including instructions for: providing information to the display generation component that defines an appearance of a vehicle instrument cluster for display, via the display generation component, as a respective vehicle instrument cluster interface with a respective appearance, including: in accordance with a determination that display of the vehicle instrument cluster interface is subject to a first set of constraints on the visible display region of the display of the vehicle instrument cluster, the vehicle instrument cluster interface is displayed with a first appearance; and in accordance with a determination that display of the vehicle instrument cluster interface is subject to a second set of constraints on the visible display region of the display of the vehicle instrument cluster, wherein the second set of constraints are different from the first set of constraints, the vehicle instrument cluster interface is displayed with a second appearance that is different from the first appearance.

In accordance with some embodiments, a computer system is described. The computer system comprises: a display generation component; and means for providing information to the display generation component that defines an appearance of a vehicle instrument cluster for display, via the display generation component, as a respective vehicle instrument cluster interface with a respective appearance, including: in accordance with a determination that display of the vehicle instrument cluster interface is subject to a first set of constraints on the visible display region of the display of the vehicle instrument cluster, the vehicle instrument cluster interface is displayed with a first appearance; and in accordance with a determination that display of the vehicle instrument cluster interface is subject to a second set of constraints on the visible display region of the display of the vehicle instrument cluster, wherein the second set of constraints are different from the first set of constraints, the vehicle instrument cluster interface is displayed with a second appearance that is different from the first appearance.

In accordance with some embodiments, a computer program product is described. The computer program product comprises one or more programs configured to be executed by one or more processors of a computer system that is in communication with a display generation component. The one or more programs include instructions for: providing information to the display generation component that defines an appearance of a vehicle instrument cluster for display, via the display generation component, as a respective vehicle instrument cluster interface with a respective appearance, including: in accordance with a determination that display of the vehicle instrument cluster interface is subject to a first set of constraints on the visible display region of the display of the vehicle instrument cluster, the vehicle instrument cluster interface is displayed with a first appearance; and in accordance with a determination that display of the vehicle instrument cluster interface is subject to a second set of constraints on the visible display region of the display of the vehicle instrument cluster, wherein the second set of constraints are different from the first set of constraints, the vehicle instrument cluster interface is displayed with a second appearance that is different from the first appearance.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient methods and interfaces for managing digital instrument clusters, thereby increasing the effectiveness, efficiency, and user satisfaction with such devices. Such methods and interfaces may complement or replace other methods for managing digital instrument clusters.

### DESCRIPTION OF THE FIGURES

For a better understanding of the various described embodiments, reference should be made to the Description of Embodiments below, in conjunction with the following drawings in which like reference numerals refer to corresponding parts throughout the figures.
FIG. 1A is a block diagram illustrating a portable multifunction device with a touch-sensitive display in accordance with some embodiments.
FIG. 1B is a block diagram illustrating exemplary components for event handling in accordance with some embodiments.
FIG. 2 illustrates a portable multifunction device having a touch screen in accordance with some embodiments.
FIG. 3 is a block diagram of an exemplary multifunction device with a display and a touch-sensitive surface in accordance with some embodiments.
FIG. 4A illustrates an exemplary user interface for a menu of applications on a portable multifunction device in accordance with some embodiments.
FIG. 4B illustrates an exemplary user interface for a multifunction device with a touch-sensitive surface that is separate from the display in accordance with some embodiments.
FIG. 5A illustrates a personal electronic device in accordance with some embodiments.
FIG. 5B is a block diagram illustrating a personal electronic device in accordance with some embodiments.
FIGS. 6A-6I illustrate exemplary devices and user interfaces for customizing user-adjustable instrument clusters, in accordance with some embodiments.
FIG. 7 is a flow diagram illustrating a method for customizing user-adjustable instrument clusters using an computer system, in accordance with some embodiments.
FIGS. 8A-8G illustrate exemplary devices and user interfaces for providing vehicle-specific instrument clusters, in accordance with some embodiments.
FIG. 9 is a flow diagram illustrating a method for providing vehicle-specific instrument clusters using an computer system, in accordance with some embodiments.
FIGS. 10A-10F illustrate exemplary user interfaces for displaying a speed limit indication, in accordance with some embodiments.
FIG. 11 is a flow diagram illustrating a method for displaying a speed limit indication using an computer system, in accordance with some embodiments.
FIGS. 12A-12D illustrate exemplary devices and user interfaces for providing dynamic instrument clusters, in accordance with some embodiments.
FIG. 13 is a flow diagram illustrating a method for providing dynamic instrument clusters using an computer system, in accordance with some embodiments.
FIG. 14 is a flow diagram illustrating a method for displaying content using an computer system, in accordance with some embodiments.
FIG. 15 is a flow diagram illustrating a method for conditionally displaying user interfaces using an computer system, in accordance with some embodiments.

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

There is a need for electronic devices that provide efficient methods and interfaces for managing electronic instrument clusters. For example, updating the appearance of an electronic instrument cluster provides the user with visual feedback about the state of the vehicle while reducing driver distraction. Such techniques can reduce the cognitive burden on a user who use electronic instrument clusters, thereby enhancing productivity. Further, such techniques can reduce processor and battery power otherwise wasted on redundant user inputs.

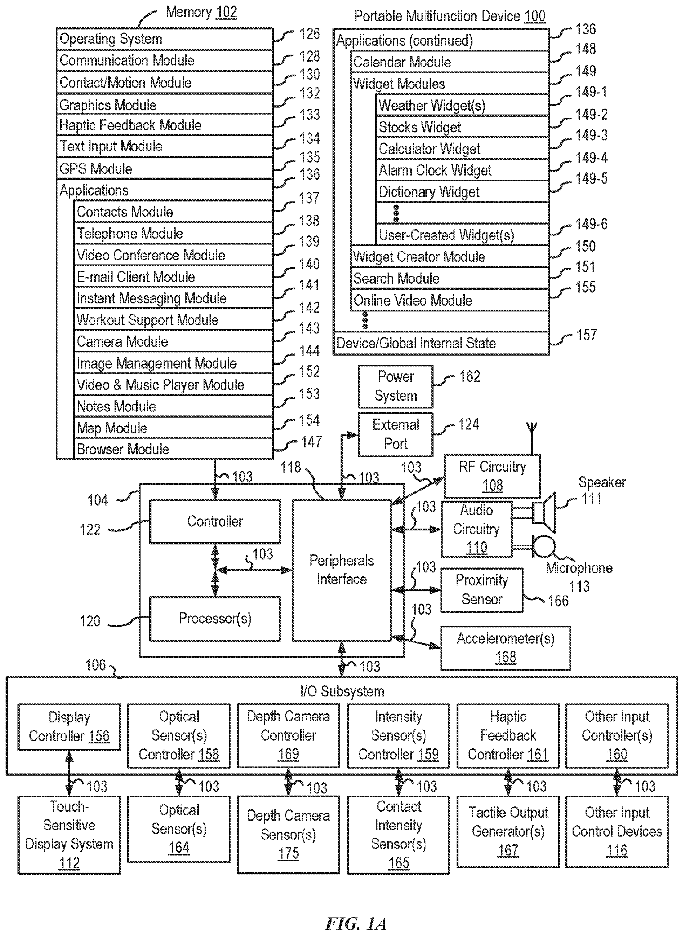

Below, FIGS. 1A-1B, 2, 3, 4A-4B, and 5A-5B provide a description of exemplary devices for performing the techniques for managing electronic instrument clusters.

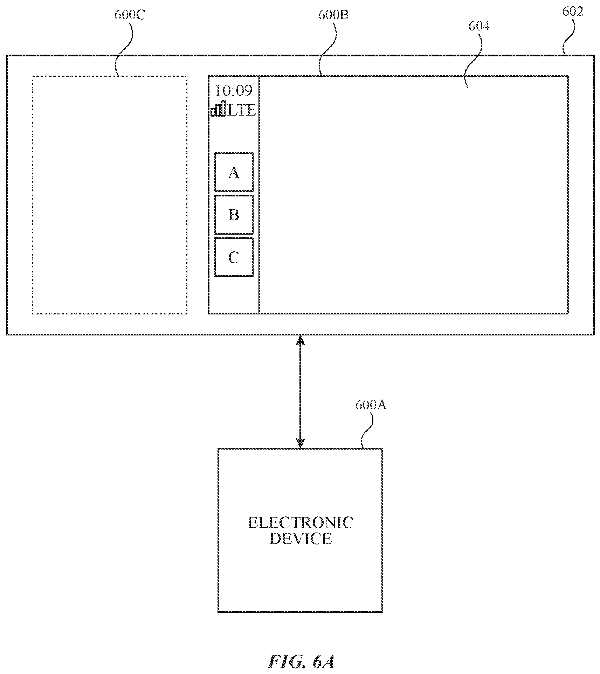

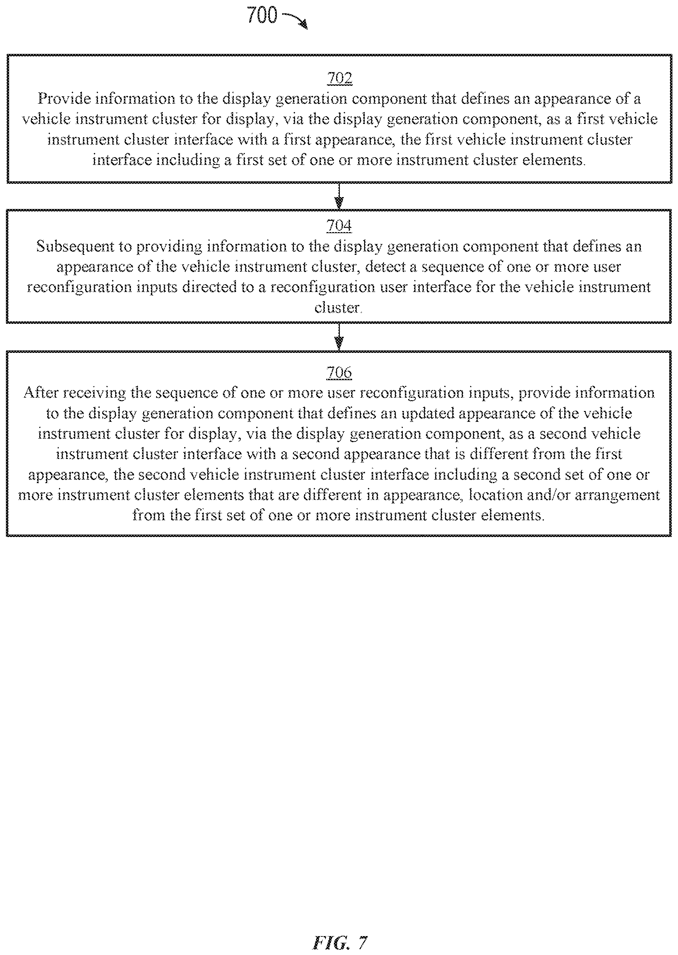

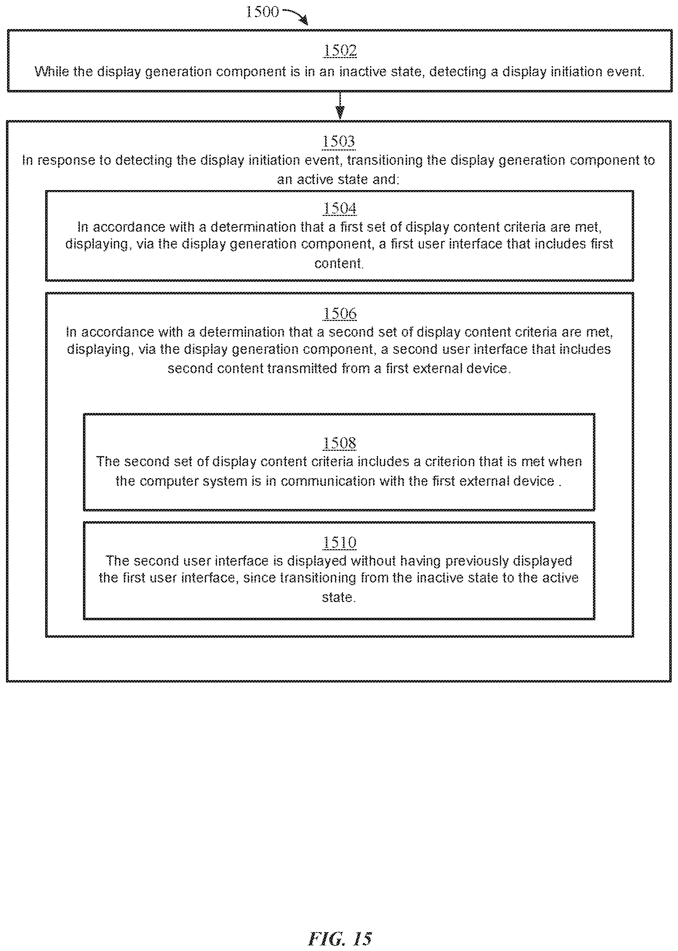

FIGS. 6A-6I illustrate exemplary devices and user interfaces for customizing user-adjustable instrument clusters, in accordance with some embodiments. FIG. 7 is a flow diagram illustrating a method for customizing user-adjustable instrument clusters using an computer system, in accordance with some embodiments. FIG. 15 is a flow diagram illustrating a method for conditionally displaying user interfaces using an computer system, in accordance with some embodiments. The user interfaces in FIGS. 6A-6I are used to illustrate the processes described below, including the processes in FIGS. 7 and 15.

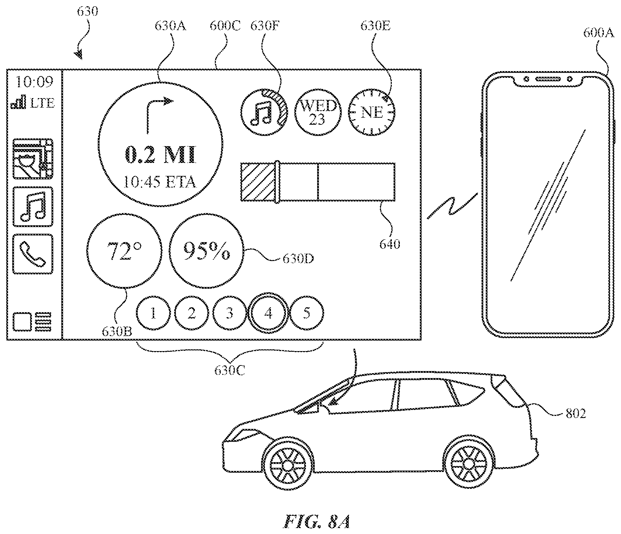

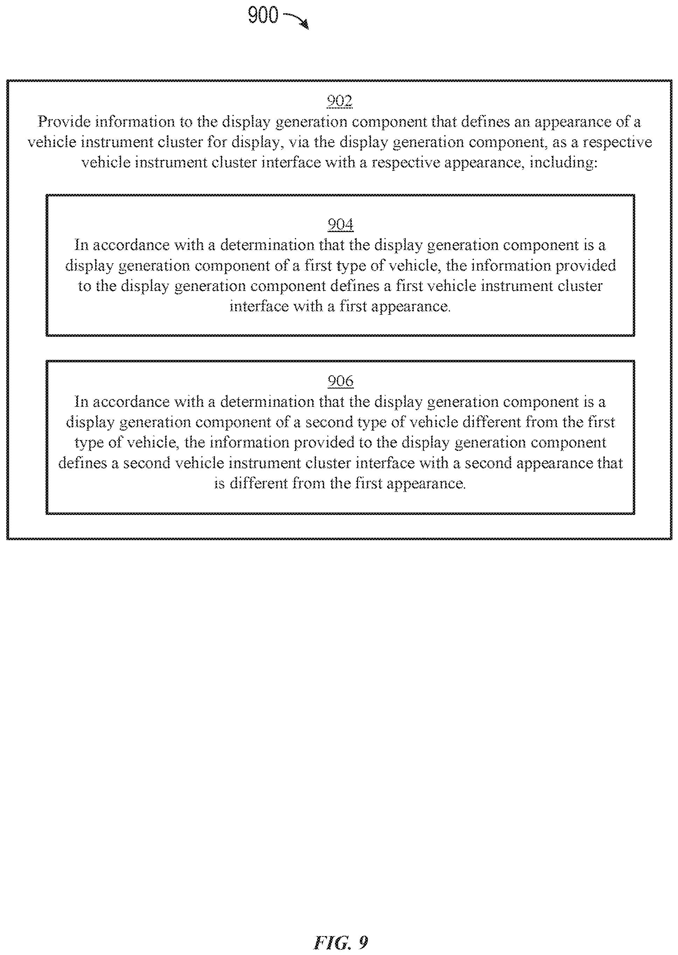

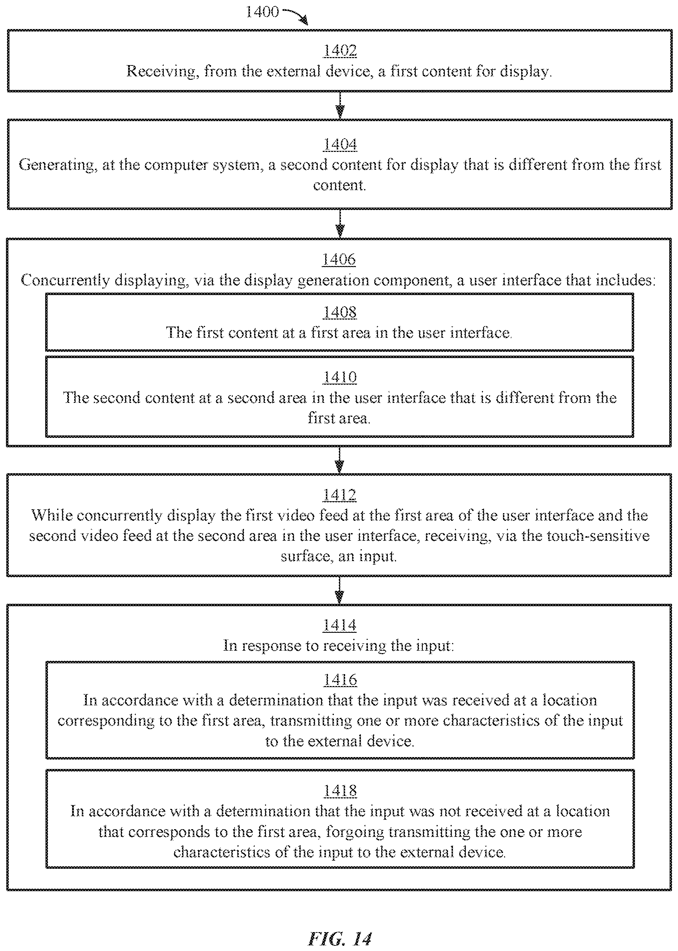

FIGS. 8A-8G illustrate exemplary devices and user interfaces for providing vehicle-specific instrument clusters, in accordance with some embodiments. FIG. 9 is a flow diagram illustrating a method for providing vehicle-specific instrument clusters using an computer system, in accordance with some embodiments. FIG. 14 is a flow diagram illustrating a method for displaying content using an computer system, in accordance with some embodiments. The user interfaces in FIGS. 8A-8G are used to illustrate the processes described below, including the processes in FIGS. 9 and 14.

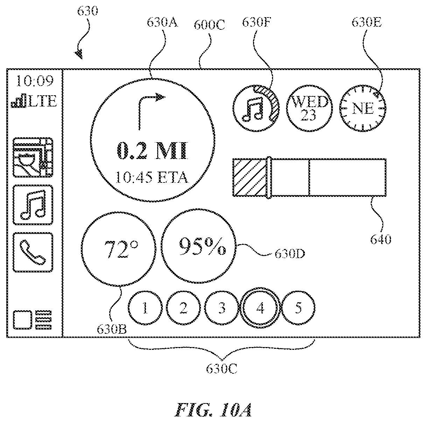

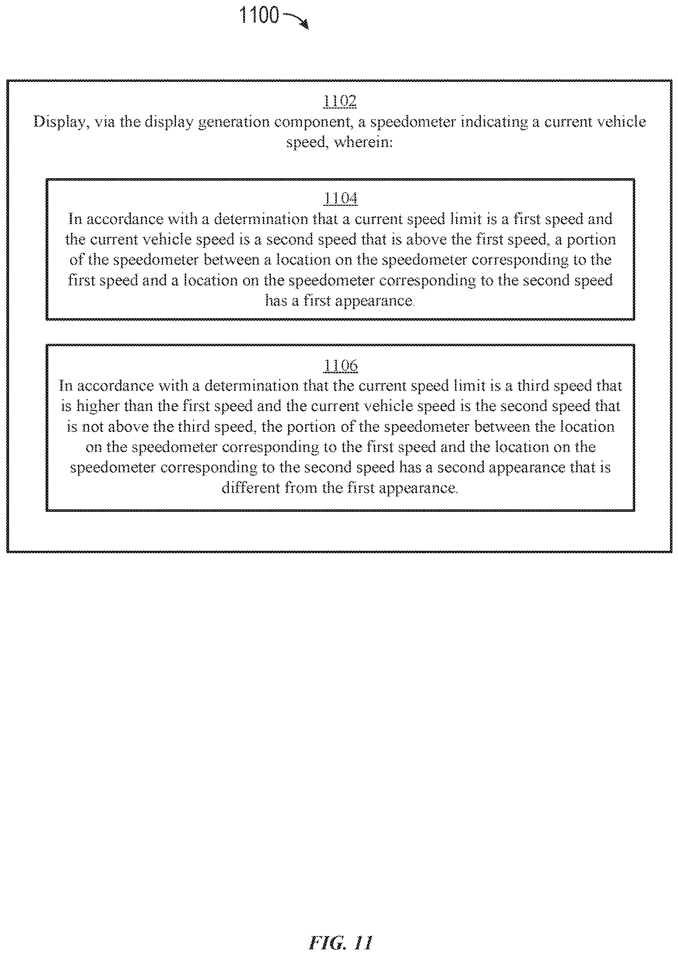

FIGS. 10A-10F illustrate exemplary user interfaces for displaying a speed limit indication, in accordance with some embodiments. FIG. 11 is a flow diagram illustrating a method for displaying a speed limit indication using an computer system, in accordance with some embodiments. The user interfaces in FIGS. 10A-10F are used to illustrate the processes described below, including the processes in FIG. 11.

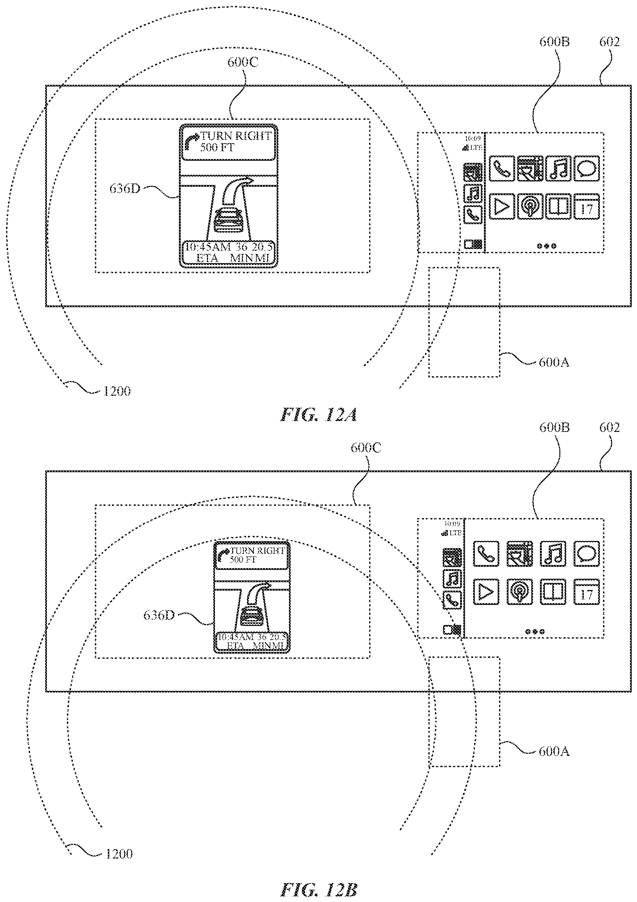

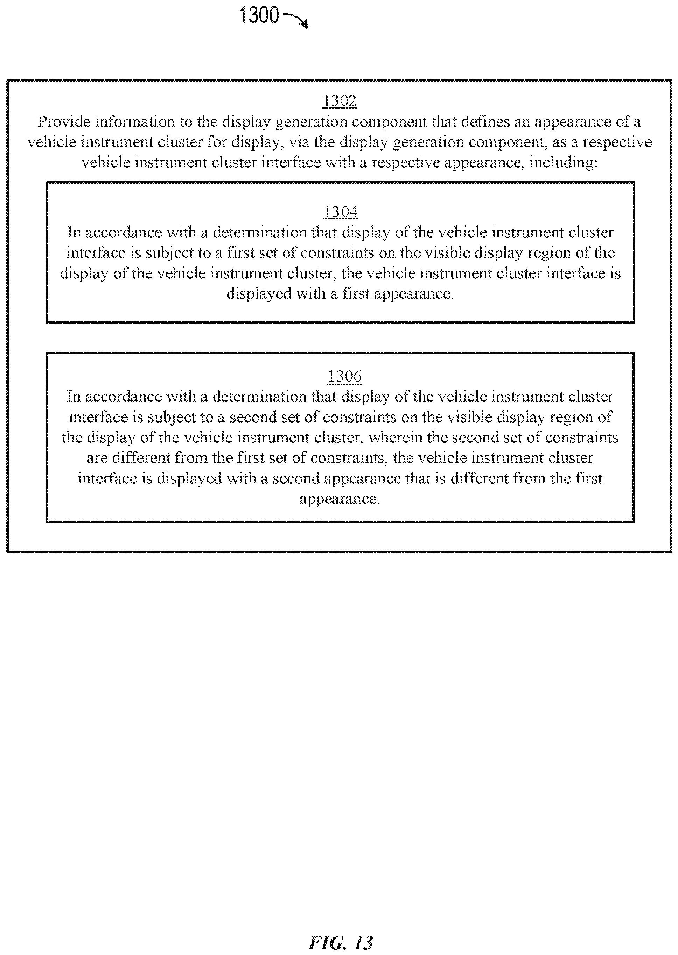

FIGS. 12A-12D illustrate exemplary devices and user interfaces for providing dynamic instrument clusters, in accordance with some embodiments. FIG. 13 is a flow diagram illustrating a method for providing dynamic instrument clusters using an computer system, in accordance with some embodiments. The user interfaces in FIGS. 12A-12D are used to illustrate the processes described below, including the processes in FIG. 13.

The processes described below enhance the operability of the devices and make the user-device interfaces more efficient (e.g., by helping the user to provide proper inputs and reducing user mistakes when operating/interacting with the device) through various techniques, including by providing improved visual feedback to the user, reducing the number of inputs needed to perform an operation, providing additional control options without cluttering the user interface with additional displayed controls, performing an operation when a set of conditions has been met without requiring further user input, and/or additional techniques. These techniques also reduce power usage and improve battery life of the device by enabling the user to use the device more quickly and efficiently.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

Although the following description uses terms "first," "second," etc. to describe various elements, these elements should not be limited by the terms. In some embodiments, these terms are only to distinguish one element from another. For example, a first touch could be termed a second touch, and, similarly, a second touch could be termed a first touch, without departing from the scope of the various described embodiments. In some embodiments, the first touch and the second touch are two separate references to the same touch. In some embodiments, the first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad). In some embodiments, the electronic device is a computer system that is in communication (e.g., via wireless communication, via wired communication) with a display generation component. The display generation component is configured to provide visual output, such as display via a CRT display, display via an LED display, or display via image projection. In some embodiments, the display generation component is integrated with the computer system. In some embodiments, the display generation component is separate from the computer system. As used herein, "displaying" content includes causing to display the content (e.g., video data rendered or decoded by display controller 156) by transmitting, via a wired or wireless connection, data (e.g., image data or video data) to an integrated or external display generation component to visually produce the content.

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

Attention is now directed toward embodiments of portable devices with touch-sensitive displays. FIG. 1A is a block diagram illustrating portable multifunction device 100 with touch-sensitive display system 112 in accordance with some embodiments. Touch-sensitive display 112 is sometimes called a "touch screen" for convenience and is sometimes known as or called a "touch-sensitive display system." Device 100 includes memory 102 (which optionally includes one or more computer-readable storage mediums), memory controller 122, one or more processing units (CPUs) 120, peripherals interface 118, RF circuitry 108, audio circuitry 110, speaker 111, microphone 113, input/output (I/O) subsystem 106, other input control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in FIG. 1A are implemented in hardware, software, or a combination of both hardware and software, including one or more signal processing and/or application-specific integrated circuits.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs (such as computer programs (e.g., including instructions)) and/or sets of instructions stored in memory 102 to perform various functions for device 100 and to process data. In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

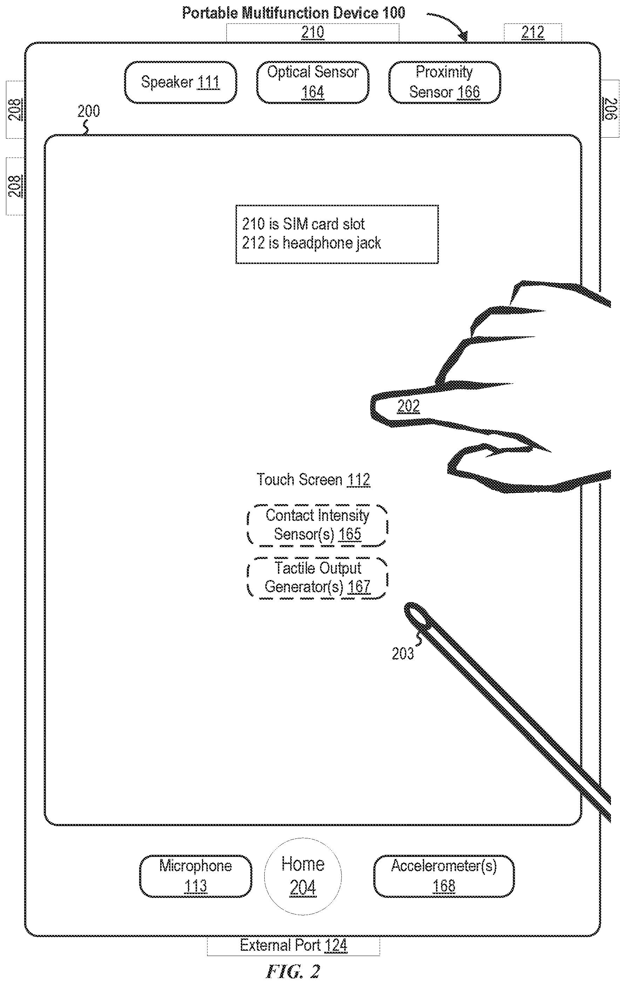

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, FIG. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, depth camera controller 169, intensity sensor controller 159, haptic feedback controller 161, and one or more input controllers 160 for other input or control devices. The one or more input controllers 160 receive/send electrical signals from/to other input control devices 116. The other input control devices 116 optionally include physical buttons (e.g., push buttons, rocker buttons, etc.), dials, slider switches, joysticks, click wheels, and so forth. In some embodiments, input controller(s) 160 are, optionally, coupled to any (or none) of the following: a keyboard, an infrared port, a USB port, and a pointer device such as a mouse. The one or more buttons (e.g., 208, FIG. 2) optionally include an up/down button for volume control of speaker 111 and/or microphone 113. The one or more buttons optionally include a push button (e.g., 206, FIG. 2). In some embodiments, the electronic device is a computer system that is in communication (e.g., via wireless communication, via wired communication) with one or more input devices. In some embodiments, the one or more input devices include a touch-sensitive surface (e.g., a trackpad, as part of a touch-sensitive display). In some embodiments, the one or more input devices include one or more camera sensors (e.g., one or more optical sensors 164 and/or one or more depth camera sensors 175), such as for tracking a user's gestures (e.g., hand gestures and/or air gestures) as input. In some embodiments, the one or more input devices are integrated with the computer system. In some embodiments, the one or more input devices are separate from the computer system. In some embodiments, an air gesture is a gesture that is detected without the user touching an input element that is part of the device (or independently of an input element that is a part of the device) and is based on detected motion of a portion of the user's body through the air including motion of the user's body relative to an absolute reference (e.g., an angle of the user's arm relative to the ground or a distance of the user's hand relative to the ground), relative to another portion of the user's body (e.g., movement of a hand of the user relative to a shoulder of the user, movement of one hand of the user relative to another hand of the user, and/or movement of a finger of the user relative to another finger or portion of a hand of the user), and/or absolute motion of a portion of the user's body (e.g., a tap gesture that includes movement of a hand in a predetermined pose by a predetermined amount and/or speed, or a shake gesture that includes a predetermined speed or amount of rotation of a portion of the user's body).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output optionally corresponds to user-interface objects.

Touch screen 112 has a touch-sensitive surface, sensor, or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages, or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes one or more optical sensors 164. FIG. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more depth camera sensors 175. FIG. 1A shows a depth camera sensor coupled to depth camera controller 169 in I/O subsystem 106. Depth camera sensor 175 receives data from the environment to create a three dimensional model of an object (e.g., a face) within a scene from a viewpoint (e.g., a depth camera sensor). In some embodiments, in conjunction with imaging module 143 (also called a camera module), depth camera sensor 175 is optionally used to determine a depth map of different portions of an image captured by the imaging module 143. In some embodiments, a depth camera sensor is located on the front of device 100 so that the user's image with depth information is, optionally, obtained for video conferencing while the user views the other video conference participants on the touch screen display and to capture selfies with depth map data. In some embodiments, the depth camera sensor 175 is located on the back of device, or on the back and the front of the device 100. In some embodiments, the position of depth camera sensor 175 can be changed by the user (e.g., by rotating the lens and the sensor in the device housing) so that a depth camera sensor 175 is used along with the touch screen display for both video conferencing and still and/or video image acquisition.

Device 100 optionally also includes one or more contact intensity sensors 165. FIG. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112, which is located on the front of device 100.

Device 100 optionally also includes one or more proximity sensors 166. FIG. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals." In some embodiments, the proximity sensor turns off and disables touch screen 112 when the multifunction device is placed near the user's ear (e.g., when the user is making a phone call).

Device 100 optionally also includes one or more tactile output generators 167. FIG. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112, which is located on the front of device 100.

Device 100 optionally also includes one or more accelerometers 168. FIG. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer." In some embodiments, information is displayed on the touch screen display in a portrait view or a landscape view based on an analysis of data received from the one or more accelerometers. Device 100 optionally includes, in addition to accelerometer(s) 168, a magnetometer and a GPS (or GLONASS or other global navigation system) receiver for obtaining information concerning the location and orientation (e.g., portrait or landscape) of device 100.

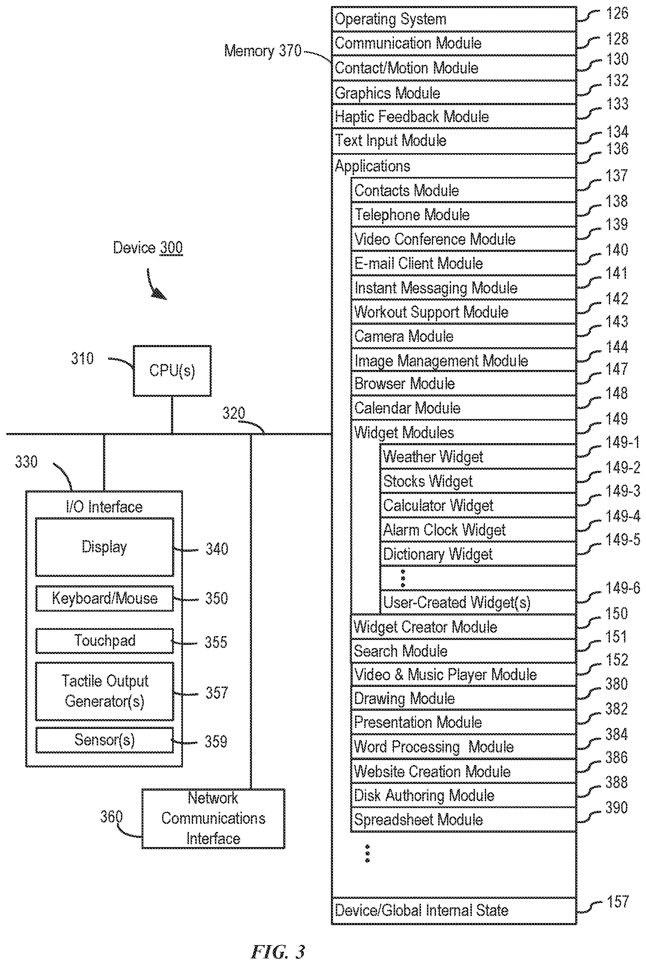

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments, memory 102 (FIG. 1A) or 370 (FIG. 3) stores device/global internal state 157, as shown in FIGS. 1A and 3. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including, without limitation, text, web pages, icons (such as user-interface objects including soft keys), digital images, videos, animations, and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts 137, e-mail 140, IM 141, browser 147, and any other application that needs text input).

GPS module 135 determines the location of the device and provides this information for use in various applications (e.g., to telephone 138 for use in location-based dialing; to camera 143 as picture/video metadata; and to applications that provide location-based services such as weather widgets, local yellow page widgets, and map/navigation widgets).

Applications 136 optionally include the following modules (or sets of instructions), or a subset or superset thereof:
- Contacts module 137 (sometimes called an address book or contact list);
- Telephone module 138;
- Video conference module 139;
- E-mail client module 140;
- Instant messaging (IM) module 141;
- Workout support module 142;
- Camera module 143 for still and/or video images;
- Image management module 144;
- Video player module;
- Music player module;
- Browser module 147;
- Calendar module 148;
- Widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- Widget creator module 150 for making user-created widgets 149-6;
- Search module 151;
- Video and music player module 152, which merges video player module and music player module;
- Notes module 153;
- Map module 154; and/or
- Online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 138, video conference module 139, e-mail 140, or IM 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to-do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to-do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs (such as computer programs (e.g., including instructions)), procedures, or modules, and thus various subsets of these modules are, optionally, combined or otherwise rearranged in various embodiments. For example, video player module is, optionally, combined with music player module into a single module (e.g., video and music player module 152, FIG. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

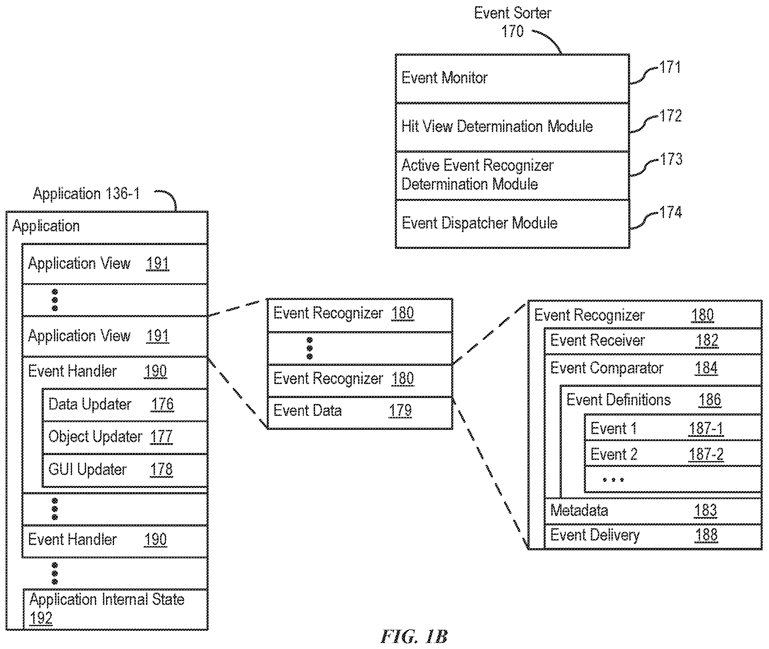

FIG. 1B is a block diagram illustrating exemplary components for event handling in accordance with some embodiments. In some embodiments, memory 102 (FIG. 1A) or 370 (FIG. 3) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (187) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definition 187 includes a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 2 illustrates a portable multifunction device 100 having a touch screen 112 in accordance with some embodiments. The touch screen optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also include one or more physical buttons, such as "home" or menu button 204. As described previously, menu button 204 is, optionally, used to navigate to any application 136 in a set of applications that are, optionally, executed on device 100. Alternatively, in some embodiments, the menu button is implemented as a soft key in a GUI displayed on touch screen 112.

In some embodiments, device 100 includes touch screen 112, menu button 204, push button 206 for powering the device on/off and locking the device, volume adjustment button(s) 208, subscriber identity module (SIM) card slot 210, headset jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

FIG. 3 is a block diagram of an exemplary multifunction device with a display and a touch-sensitive surface in accordance with some embodiments. Device 300 need not be portable. In some embodiments, device 300 is a laptop computer, a desktop computer, a tablet computer, a multimedia player device, a navigation device, an educational device (such as a child's learning toy), a gaming system, or a control device (e.g., a home or industrial controller). Device 300 typically includes one or more processing units (CPUs) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to FIG. 1A), sensors 359 (e.g., optical, acceleration, proximity, touch-sensitive, and/or contact intensity sensors similar to contact intensity sensor(s) 165 described above with reference to FIG. 1A). Memory 370 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable multifunction device 100 (FIG. 1A), or a subset thereof. Furthermore, memory 370 optionally stores additional programs, modules, and data structures not present in memory 102 of portable multifunction device 100. For example, memory 370 of device 300 optionally stores drawing module 380, presentation module 382, word processing module 384, website creation module 386, disk authoring module 388, and/or spreadsheet module 390, while memory 102 of portable multifunction device 100 (FIG. 1A) optionally does not store these modules.

Each of the above-identified elements in FIG. 3 is, optionally, stored in one or more of the previously mentioned memory devices. Each of the above-identified modules corresponds to a set of instructions for performing a function described above. The above-identified modules or computer programs (e.g., sets of instructions or including instructions) need not be implemented as separate software programs (such as computer programs (e.g., including instructions)), procedures, or modules, and thus various subsets of these modules are, optionally, combined or otherwise rearranged in various embodiments. In some embodiments, memory 370 optionally stores a subset of the modules and data structures identified above. Furthermore, memory 370 optionally stores additional modules and data structures not described above.

Attention is now directed towards embodiments of user interfaces that are, optionally, implemented on, for example, portable multifunction device 100.

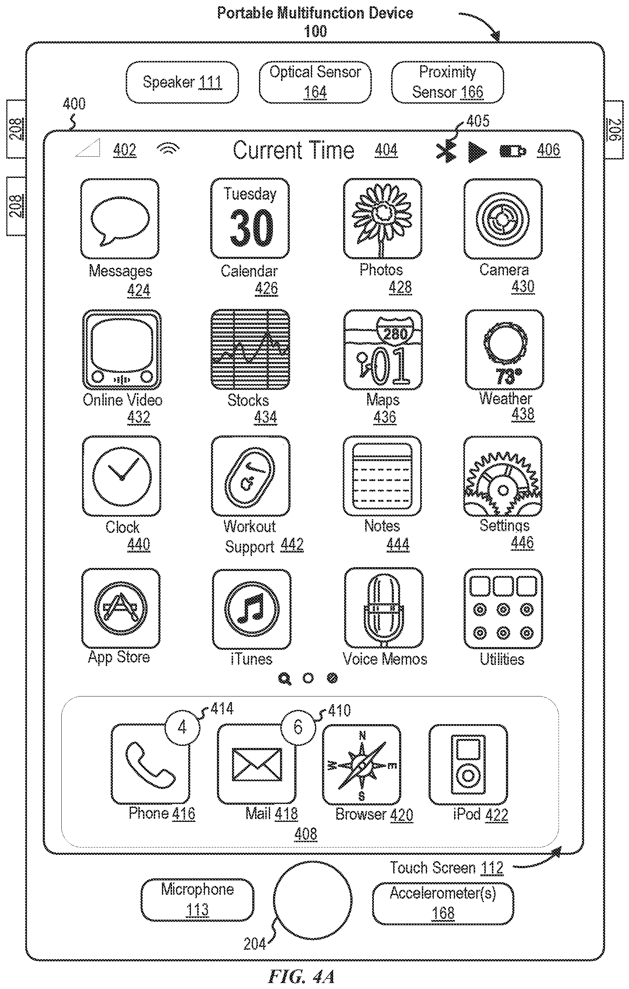

FIG. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   ∘ Icon 416 for telephone module 138, labeled "Phone," which optionally includes an indicator 414 of the number of missed calls or voicemail messages;
   ∘ Icon 418 for e-mail client module 140, labeled "Mail," which optionally includes an indicator 410 of the number of unread e-mails;
   ∘ Icon 420 for browser module 147, labeled "Browser;" and
   o Icon 422 for video and music player module 152, also referred to as iPod (trademark of Apple Inc.) module 152, labeled "iPod;" and
- Icons for other applications, such as:
   ∘ Icon 424 for IM module 141, labeled "Messages;"
   ∘ Icon 426 for calendar module 148, labeled "Calendar;"
   ∘ Icon 428 for image management module 144, labeled "Photos;"
   ∘ Icon 430 for camera module 143, labeled "Camera;"
   ∘ Icon 432 for online video module 155, labeled "Online Video;"
   ∘ Icon 434 for stocks widget 149-2, labeled "Stocks;"
   ∘ Icon 436 for map module 154, labeled "Maps;"
   ∘ Icon 438 for weather widget 149-1, labeled "Weather;"
   ∘ Icon 440 for alarm clock widget 149-4, labeled "Clock;"
   ∘ Icon 442 for workout support module 142, labeled "Workout Support;"
   ∘ Icon 444 for notes module 153, labeled "Notes;" and
   ∘ Icon 446 for a settings application or module, labeled "Settings," which provides access to settings for device 100 and its various applications 136.

It should be noted that the icon labels illustrated in FIG. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

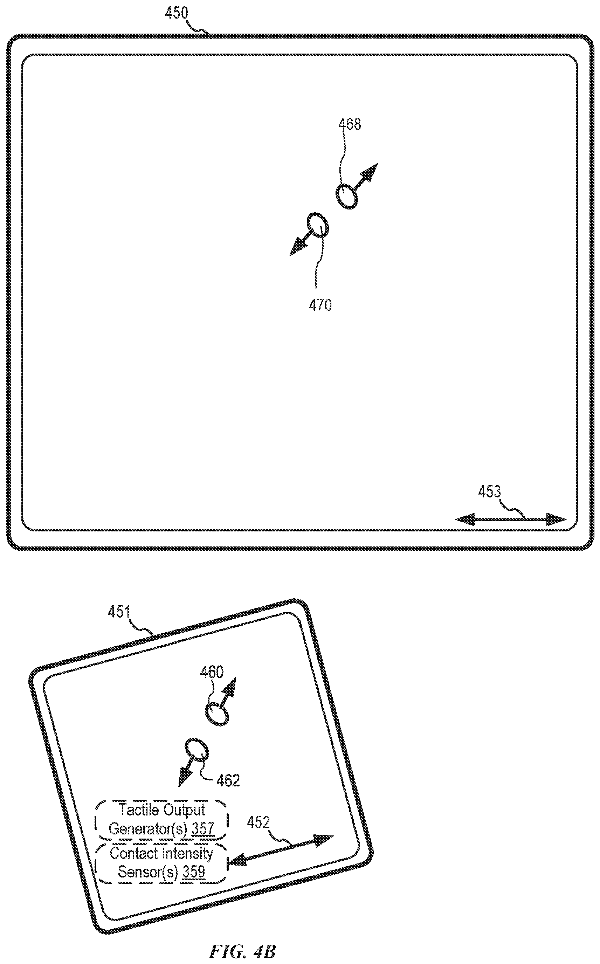

FIG. 4B illustrates an exemplary user interface on a device (e.g., device 300, FIG. 3) with a touch-sensitive surface 451 (e.g., a tablet or touchpad 355, FIG. 3) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in FIG. 4B. In some embodiments, the touch-sensitive surface (e.g., 451 in FIG. 4B) has a primary axis (e.g., 452 in FIG. 4B) that corresponds to a primary axis (e.g., 453 in FIG. 4B) on the display (e.g., 450). In accordance with these embodiments, the device detects contacts (e.g., 460 and 462 in FIG. 4B) with the touch-sensitive surface 451 at locations that correspond to respective locations on the display (e.g., in FIG. 4B, 460 corresponds to 468 and 462 corresponds to 470). In this way, user inputs (e.g., contacts 460 and 462, and movements thereof) detected by the device on the touch-sensitive surface (e.g., 451 in FIG. 4B) are used by the device to manipulate the user interface on the display (e.g., 450 in FIG. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

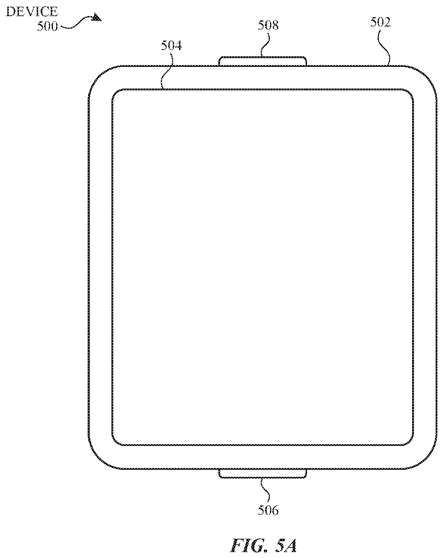

FIG. 5A illustrates exemplary personal electronic device 500. Device 500 includes body 502. In some embodiments, device 500 can include some or all of the features described with respect to devices 100 and 300 (e.g., FIGS. 1A-4B). In some embodiments, device 500 has touch-sensitive display screen 504, hereafter touch screen 504. Alternatively, or in addition to touch screen 504, device 500 has a display and a touch-sensitive surface. As with devices 100 and 300, in some embodiments, touch screen 504 (or the touch-sensitive surface) optionally includes one or more intensity sensors for detecting intensity of contacts (e.g., touches) being applied. The one or more intensity sensors of touch screen 504 (or the touch-sensitive surface) can provide output data that represents the intensity of touches. The user interface of device 500 can respond to touches based on their intensity, meaning that touches of different intensities can invoke different user interface operations on device 500.

Exemplary techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, published as WIPO Publication No. WO/2013/169849, and International Patent Application Serial No. PCT/US2013/069483, titled "Device, Method, and Graphical User Interface for Transitioning Between Touch Input to Display Output Relationships," filed November 11, 2013, published as WIPO Publication No. WO/2014/105276.

In some embodiments, device 500 has one or more input mechanisms 506 and 508. Input mechanisms 506 and 508, if included, can be physical. Examples of physical input mechanisms include push buttons and rotatable mechanisms. In some embodiments, device 500 has one or more attachment mechanisms. Such attachment mechanisms, if included, can permit attachment of device 500 with, for example, hats, eyewear, earrings, necklaces, shirts, jackets, bracelets, watch straps, chains, trousers, belts, shoes, purses, backpacks, and so forth. These attachment mechanisms permit device 500 to be worn by a user.

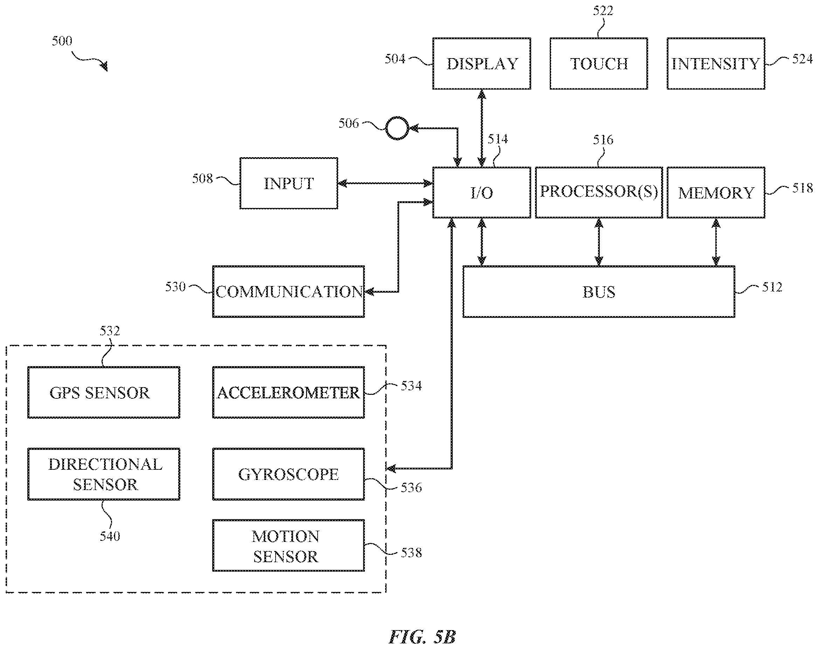

FIG. 5B depicts exemplary personal electronic device 500. In some embodiments, device 500 can include some or all of the components described with respect to FIGS. 1A, 1B, and 3. Device 500 has bus 512 that operatively couples I/O section 514 with one or more computer processors 516 and memory 518. I/O section 514 can be connected to display 504, which can have touch-sensitive component 522 and, optionally, intensity sensor 524 (e.g., contact intensity sensor). In addition, I/O section 514 can be connected with communication unit 530 for receiving application and operating system data, using Wi-Fi, Bluetooth, near field communication (NFC), cellular, and/or other wireless communication techniques. Device 500 can include input mechanisms 506 and/or 508. Input mechanism 506 is, optionally, a rotatable input device or a depressible and rotatable input device, for example. Input mechanism 508 is, optionally, a button, in some examples.

Input mechanism 508 is, optionally, a microphone, in some examples. Personal electronic device 500 optionally includes various sensors, such as GPS sensor 532, accelerometer 534, directional sensor 540 (e.g., compass), gyroscope 536, motion sensor 538, and/or a combination thereof, all of which can be operatively connected to I/O section 514.

Memory 518 of personal electronic device 500 can include one or more non-transitory computer-readable storage mediums, for storing computer-executable instructions, which, when executed by one or more computer processors 516, for example, can cause the computer processors to perform the techniques described below, including processes 700, 900, 1100, 1300 (FIGS. 7, 9, 11, and 13). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like. Personal electronic device 500 is not limited to the components and configuration of FIG. 5B, but can include other or additional components in multiple configurations.

As used here, the term "affordance" refers to a user-interactive graphical user interface object that is, optionally, displayed on the display screen of devices 100, 300, and/or 500 (FIGS. 1A, 3, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in FIG. 3 or touch-sensitive surface 451 in FIG. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in FIG. 1A or touch screen 112 in FIG. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

Attention is now directed towards embodiments of user interfaces ("UI") and associated processes that are implemented on an electronic device, such as portable multifunction device 100, device 300, or device 500.

FIGS. 6A-6I illustrate exemplary devices and user interfaces for customizing user-adjustable instrument clusters, in accordance with some embodiments. The user interfaces in these figures are used to illustrate the processes described below, including the processes in FIG. 7.

FIG. 6A illustrates an example user interface 604, in accordance with various embodiments presented herein. In some examples, user interface 604 is provided by computer system 600A (e.g., that is in operative communication with display screen 600B (e.g., a display screen 600B displaying user interface 600)). In some examples, a user interface for display is provided by computer system 600A that is in operative communication with display screen 600C (e.g., a display screen 600C displaying a user interface). In some embodiments, computer system 600A, display screen 600B, display screen 600C include some or all of the features of device 100, device 300, or device 500, discussed above.

In some embodiments, computer system 600A is a mobile phone that is in a wired (e.g., USB, Lightning) or wireless (e.g., Bluetooth, WiFi) communication with display screen 600B and/or display screen 600C that includes an instrument panel of the automobile/vehicle, or with an external computer system having display screen 600B and/or an external computer system having display screen 600C. In some embodiments, display screen 600B and display screen 600C are provided on a dashboard 602 of an automobile/vehicle. In some embodiments, a mobile phone (e.g., computer system 600A) communicates instruction signals for generating user interfaces at display screens 600B and 600C, in accordance with various embodiments discussed herein. Further, in some embodiments, user interactions detected at display screen 600B and/or 600C are communicated to the mobile phone (e.g., computer system 600A). In some embodiments, user interfaces displayed on display screen 600B, as described herein, are provided at a display screen of computer system 600A. In some embodiments, computer system 600 provides information to the computer systems of display screens 600B and/or 600C to enable the computer systems of display screen 600B and/or 600C to prepare, update, and display the user interfaces on display screen 600B and display screen 600C, respectively.

Display 600C is optionally a display set within a dashboard region 602 of a vehicle and is positioned ahead of/in front of a driver's seat of a vehicle. Accordingly, a driver of the vehicle views information displayed on displayed 600C while continuing to drive the vehicle.

In some embodiments, user interface 604 is provided by computer system 600A and is displayed immediately after activation (e.g., without previously displaying another user interface) of display screen 600B from an inactive state, in response to a computer system (e.g., a computer system of the automobile/vehicle that includes dashboard 602) determining that a set of external device display content criteria are met. In some embodiments, the set of external device display content criteria include a requirement that computer system 600A was connected to the computer system of the automobile/vehicle, when it was last driven. In some embodiments, display screen 600B is activated in response to the computer system detecting an initiation event such as opening and/or unlocking of a door of the automobile/vehicle, detecting proximity of a key fob or a digital key (e.g., provisioned on a smart phone) to the automobile/vehicle, detecting the presence of a user/driver in the automobile/vehicle, and/or detecting start of or a request to start the automobile/vehicle. In some embodiments, in response to detecting the initiation event, another user interface (e.g., an interface generated by the computer system of the automobile/vehicle) is displayed in place of user interface 604 when a different set of display content criteria are met. For example, when the computer system of the automobile/vehicle is not connected to computer system 600A and/or does not detect the presence of computer system 600A, the computer system of the automobile/vehicle provides a natively generated user interface, instead, when display screen 600B is activated. In some embodiments, by conditionally displaying user interface 604 that is provided by computer system 600A or displaying another user interface (e.g., a natively generated one), the computer system of the automobile/vehicle provides the user with an appropriate user interface when display screen 600B is initially activated.

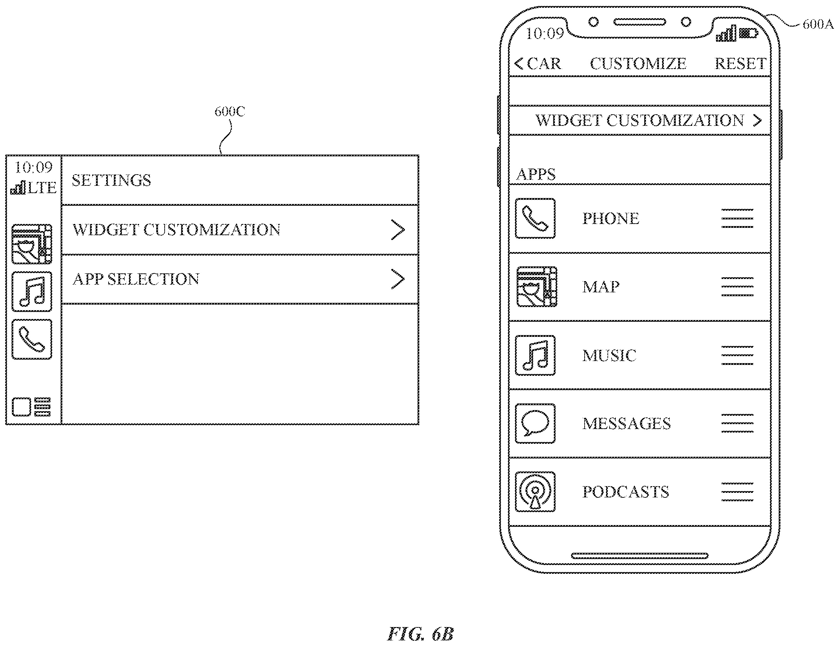

At FIG. 6B, display screen 600C displays a settings user interface for customizing an instrument cluster. Computer system 600A optionally also displays a (e.g., same or different) settings user interface for customizing an instrument cluster. In some embodiments, user selections described with respect to being detected at computer system 600A are, optionally, instead detected at a touch-sensitive surface of display screen 600C.

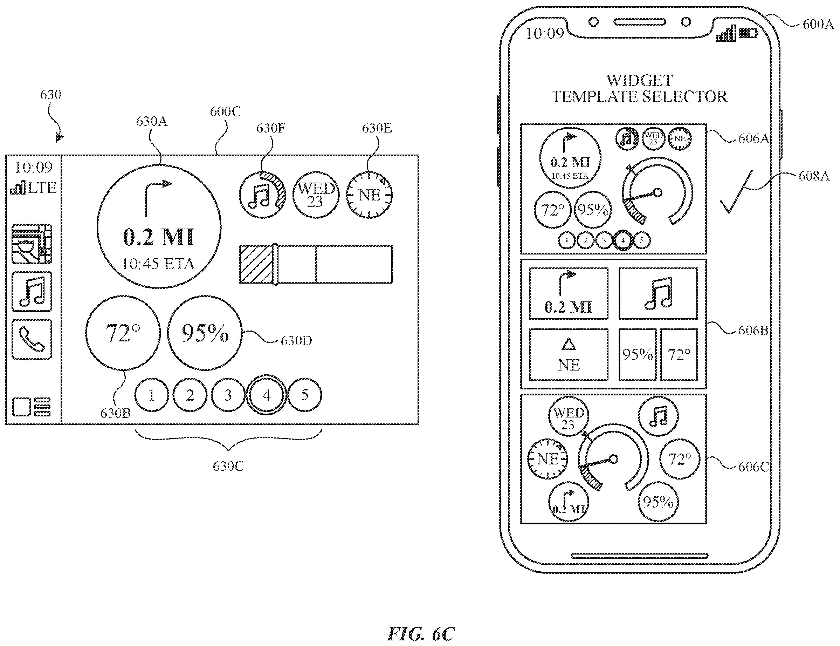

At FIG. 6C, computer system 600A displays various instrument cluster templates, including first instrument cluster template 606A, second instrument cluster template 606B, and third instrument cluster 606C. Computer system 600A receives a user selection of (e.g., a tap on) first instrument cluster template 606A and, in response, transmits information to display screen 600C that defines an appearance of the vehicle instrument cluster. Checkmark 608A indicates that first instrument cluster template 606A has been selected. Display screen 600C displays, based on the received information, the vehicle instrument cluster, as selected by the user. Had the user selected a different instrument cluster template (e.g., 606B, 606C), computer system 600A would have instead transmitted information to display screen 600C that defines the respective appearance of the selected vehicle instrument cluster.

At FIG. 6C, instrument cluster 630 includes a plurality of instrument cluster elements, including 630A-630E and 640. In some examples, instrument cluster elements display information about a status of the vehicle in which the instrument cluster is displayed. Navigational element 630A provides a navigation instruction and an estimated time of arrival. Temperature element 630B indicates a temperature of the vehicle, such as an oil temperature, a battery temperature, and/or an interior cabin temperature. Shifter element 630C indicates a plurality of available vehicle gears and identifies a currently selected gear. Percent element 630D indicates a percentage of a characteristic of the vehicle, such as a percent battery charge, and/or a percent of a fuel tank that is full. Compass 630E indicates the current direction that the vehicle is facing or travelling in. Audio element 630F indicates a current audio characteristic of the vehicle, such as a volume of audio being output by a speaker of the vehicle and/or a volume level (e.g., road noise) detected inside the vehicle. Speedometer 640 is an instrument cluster element that displays a current speed of the vehicle and a current speed limit of the road on which the vehicle is traveling and/or located. Speedometer 640 is described in greater detail with respect to FIGS. 10A-10F.

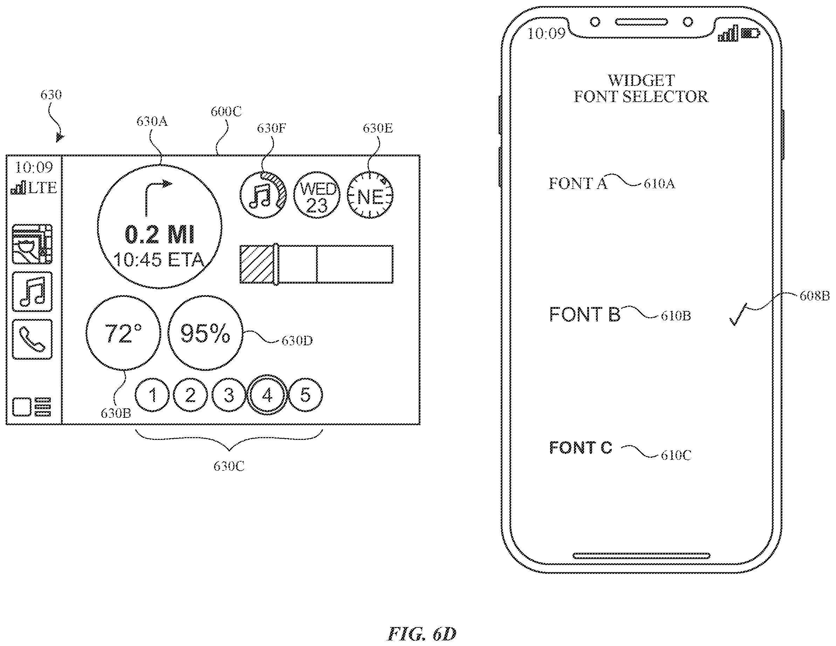

At FIG. 6D, computer system 600A displays various instrument cluster font options, including first font option 610A, second font option 610B, and third font option 610C. Computer system 600A receives a user selection of (e.g., a tap on) second font option 610B and, in response, transmits information to display screen 600C that indicates the change (e.g., defines an updated appearance) of the vehicle instrument cluster. Checkmark 608B indicates that second font option 610B has been selected. Display screen 600C updates, based on the received information (or, optionally, based on receiving a corresponding selection at a touch sensitive surface of display screen 600C), vehicle instrument cluster 630 to use the user-selected font. For example, the font of text of navigational element 630A, temperature element 630B, shifter element 630C, percent element 630D, compass 630E, and/or speedometer 640 is updated to the user-selected font, as illustrated in FIG. 6D. In some examples, a change in font includes a change in a size, weight, and/or typeface of one or more textual content of the vehicle instrument cluster.

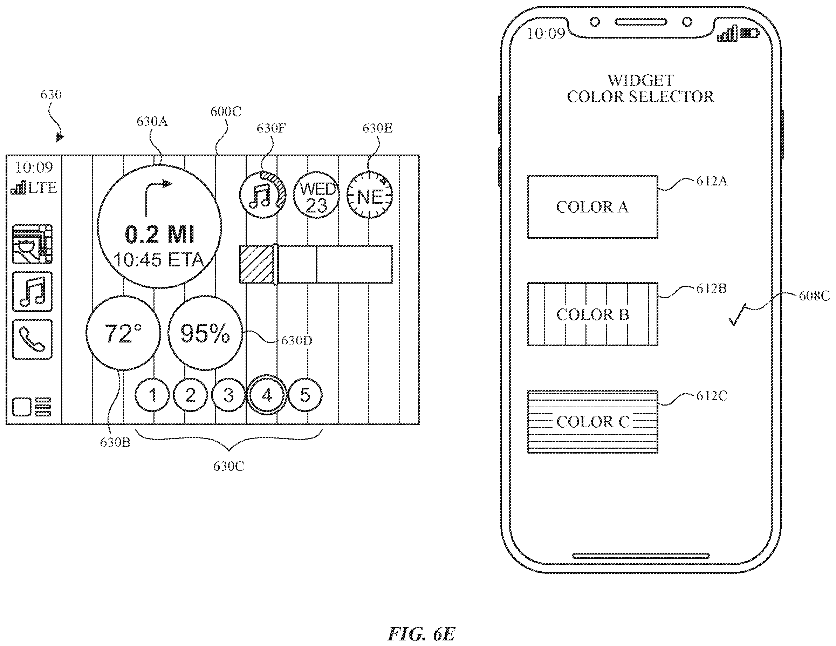

At FIG. 6E, computer system 600A displays various color options, including first color option 612A (e.g., blue), second color option 612B (e.g., green), and third color option 612C (e.g., yellow). Computer system 600A receives a user selection of (e.g., a tap on) second color option 612B and, in response, transmits information to display screen 600C that indicates the change (e.g., defines an updated appearance) of the vehicle instrument cluster. Checkmark 608C indicates that second color option 612B has been selected. Display screen 600C updates, based on the received information (or, optionally, based on receiving a corresponding selection at a touch sensitive surface of display screen 600C), instrument cluster 630 to use the user-selected color. For example, the font of text of navigational element 630A, temperature element 630B, shifter element 630C, percent element 630D, compass 630E, and/or speedometer 640 is updated to the user-selected color. For another example, the background of instrument cluster 630 is updated to the user-selected color, as illustrated in FIG. 6E.

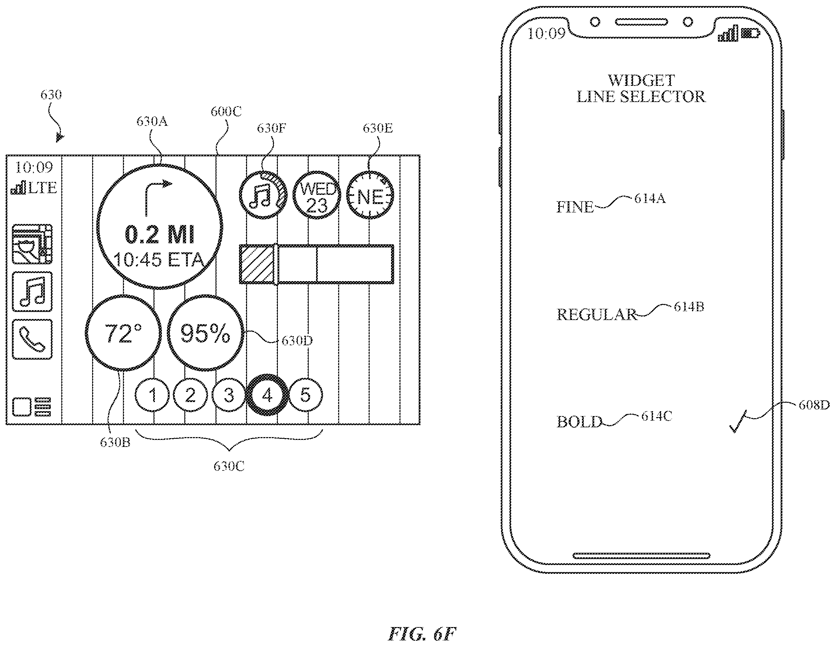

At FIG. 6F, computer system 600A displays various line thickness options, including first line thickness option 614A (e.g., fine), second line thickness option 614B (e.g., regular), and third line thickness option 614C (e.g., bold). Computer system 600A receives a user selection of (e.g., a tap on) third line thickness option 614C and, in response, transmits information to display screen 600C that indicates the change (e.g., defines an updated appearance) of the vehicle instrument cluster. Checkmark 608D indicates that third line thickness option 614C has been selected. Display screen 600C updates, based on the received information (or, optionally, based on receiving a corresponding selection at a touch sensitive surface of display screen 600C), instrument cluster 630 to use the user-selected line thickness. For example, the lines surrounding navigational element 630A, temperature element 630B, shifter element 630C, percent element 630D, compass 630E, and/or speedometer 640 is updated to the user-selected line thickness (e.g., without changing a thickness of textual elements), as illustrated in FIG. 6F.

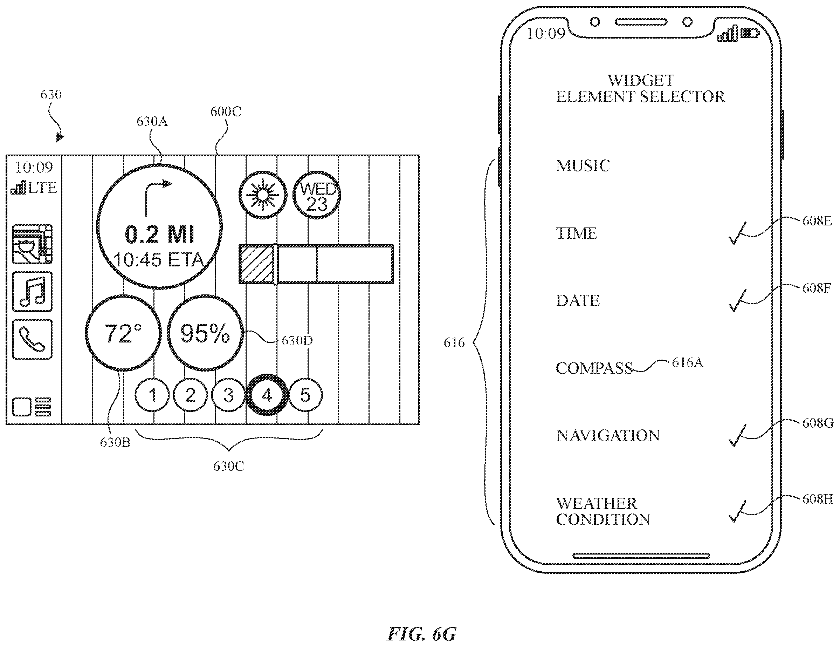

At FIG. 6G, computer system 600A displays various instrument cluster element display options 616 corresponding to respective instrument cluster elements, including compass display option 616A corresponding to compass 630E. Computer system 600A receives a user selection of (e.g., a tap on) compass display option 616A and, in response, transmits information to display screen 600C that indicates the change (e.g., defines an updated appearance) of the vehicle instrument cluster. Checkmarks 608E-608H indicate that instrument cluster elements corresponding to those display options 616 should be displayed as part of instrument cluster 630, whereas the user selection causes a checkmark to not be displayed adjacent to compass display option 616A indicating that compass 630E will not be displayed as part of instrument cluster 630. Display screen 600C updates, based on the received information (or, optionally, based on receiving a corresponding selection at a touch sensitive surface of display screen 600C), instrument cluster 630 to remove (or alternatively, include) respective instrument cluster elements corresponding to the user-selected element display options. For example, instrument cluster 630 is updated to not include compass 630E and to not include audio element 630F (e.g., without removing other instrument cluster elements), as illustrated in FIG. 6G.

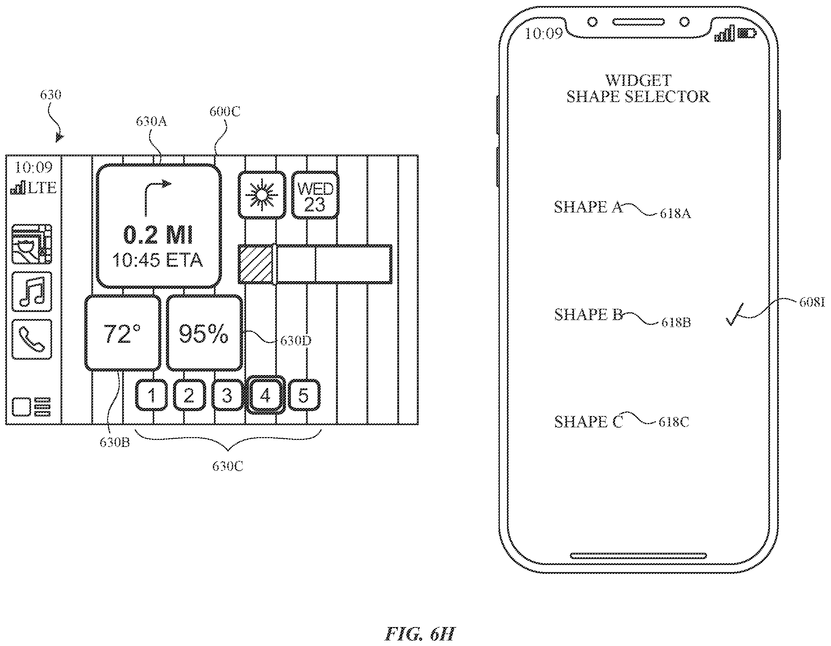

At FIG. 6H, computer system 600A displays various instrument cluster element shape options, including first shape option 618A, second shape option 618B, and third shape option 618C. Computer system 600A receives a user selection of (e.g., a tap on) second shape option 618B and, in response, transmits information to display screen 600C that indicates the change (e.g., defines an updated appearance) of the vehicle instrument cluster. Checkmark 608I indicates that third line thickness option 614C has been selected. Display screen 600C updates, based on the received information (or, optionally, based on receiving a corresponding selection at a touch sensitive surface of display screen 600C), instrument cluster 630 to shape the shape of one or more instrument cluster elements of instrument cluster 630. For example, instrument cluster 630 is updated such that the shapes of navigational element 630A, temperature element 630B, shifter element 630C, and percent element 630D are changed to a rectangular shape, as illustrated in FIG. 6H.

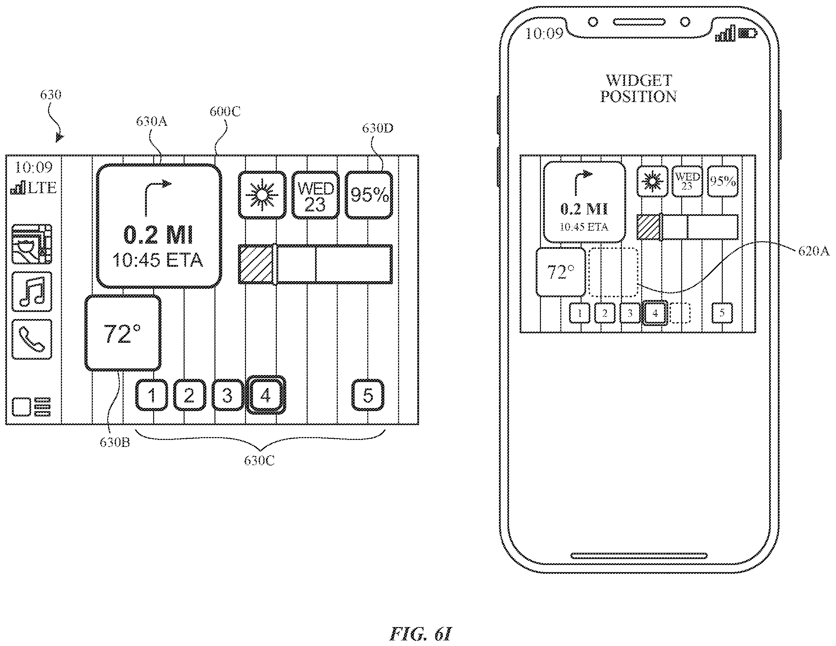

At FIG. 6I, computer system 600A displays a user interface for changing the position of various instrument cluster elements. Computer system 600A receives a user input correspond to (e.g., a drag gesture on) percent element option 620A. The user input starts at a position of percent element option 620A and moves to a different position. In response, computer system 600A transmits information to display screen 600C that indicates the change (e.g., defines an updated appearance) of the vehicle instrument cluster. Display screen 600C updates, based on the received information (or, optionally, based on receiving a corresponding selection at a touch sensitive surface of display screen 600C), instrument cluster 630 to change the position of one or more instrument cluster elements of instrument cluster 630. For example, instrument cluster 630 is updated such that a position of percent element 630D has changed (from adjacent to temperature element 630B to above speedometer 640) on display screen 600C and/or with respect to one or more other instrument cluster elements of instrument cluster 630, as illustrated in FIG. 6I.

Computer system 600A optionally stores the customized vehicle instrument cluster based on the user selections, such as the selections described with respect to FIGS. 6B-6I. Subsequently, computer system 600A provides the information based on the selections to display screen 600C that defines an appearance of the vehicle instrument cluster, as selected by the user. For example, computer system 600A provides information that defines the appearance of the customized vehicle instrument cluster when the vehicle is turned on. In some embodiments, the computer system (e.g., of the vehicle) of display screen 600C stores the customized vehicle instrument cluster based on the information received from computer system 600A and/or based on user selections received at a touch-sensitive surface of display screen 600C. Subsequently, display screen 600C displays the customized vehicle instrument cluster, as selected by the user, without requiring and/or receiving additional information from computer system 600A. For example, display screen 600C displays the vehicle instrument cluster when the vehicle is turned on.

FIG. 7 is a flow diagram illustrating a method for customizing user-adjustable instrument clusters using an computer system, in accordance with some embodiments. Method 700 is performed at a computer system (e.g., 100, 300, 500, 600A, 600B, 600C) that is in communication with a display generation component (e.g., 600B, 600C; display generation component of the vehicle, a display set within a front console of a vehicle and/or a display positioned ahead of/in front of a driver's seat of a vehicle). Some operations in method 700 are, optionally, combined, the orders of some operations are, optionally, changed, and some operations are, optionally, omitted.

As described below, method 700 provides an intuitive way for customizing user-adjustable instrument clusters. The method reduces the cognitive burden on a user for customizing user-adjustable instrument clusters, thereby creating a more efficient human-machine interface. For battery-operated computing devices, enabling a user to customizing user-adjustable instrument clusters faster and more efficiently conserves power and increases the time between battery charges.

The computer system (e.g., 600A) provides (702) information to the display generation component (e.g., 600C) that defines an appearance of a vehicle instrument cluster for display, via the display generation component (e.g., 600C), as a first vehicle instrument cluster interface with a first appearance (e.g., 630 of FIG. 6C), the first vehicle instrument cluster interface including a first set of one or more instrument cluster elements (e.g., a speedometer (e.g., 640), a tachometer, a fuel level indicator (e.g., 630D), a battery charge level indicator, and/or gearshift position indicator (e.g., 630C)). In some embodiments, the first set of one or more instrument cluster elements indicate information about a vehicle in which the display generation component is located.

Subsequent to providing information to the display generation component that defines an appearance of the vehicle instrument cluster, the computer system (e.g., 600A) detects (704) a sequence of one or more user reconfiguration inputs (e.g., at computer system 600A in FIGS. 6C-6I) directed to a reconfiguration user interface (e.g., 606, 610, 612, 614, 616, 618, 620) for the vehicle instrument cluster (e.g., one or more inputs detected at a touch-sensitive surface and/or buttons of the computer system).

After receiving the sequence of one or more user reconfiguration inputs, the computer system (e.g., 600A) provides (706) information to the display generation component that defines an updated appearance (e.g., 630 of FIG. 6D, 630 of FIG. 6E) of the vehicle instrument cluster for display, via the display generation component, as a second vehicle instrument cluster interface with a second appearance that is different from the first appearance, the second vehicle instrument cluster interface including a second set of one or more instrument cluster elements that are different in appearance, location and/or arrangement from the first set of one or more instrument cluster elements (e.g., as in FIGS. 6D-6I, a speedometer, a tachometer, a fuel gauge, a charge gauge, and/or a gearshift position). In some embodiments, the second set of one or more instrument cluster elements indicate information about the vehicle in which the display generation component is located. Providing information that defines various appearances for a vehicle instrument cluster enables the computer system to display a vehicle instrument cluster with different appearances for a user to view information about the vehicle, thereby providing the user with improved feedback.

In some embodiments, the first set and the second set of one or more instrument cluster elements include the same instrument cluster elements (without the same visual appearance, location and/or arrangement). In some embodiments, the first set and the second set of one or more instrument cluster elements include different instrument cluster elements. In some embodiments, the first set and the second set of one or more instrument cluster elements include some of the same instrument cluster elements (with or without the same visual appearance, location and/or arrangement) and some different instrument cluster elements.

In some embodiments, the sequence of one or more user reconfiguration inputs are detected at one or more input devices of the computer system. In some embodiments, the computer system is a smartphone that is in wireless and/or wired communication with the display generation component and the sequence of one or more user reconfiguration inputs are detected at the smartphone (e.g., at a touch-sensitive display and/or button inputs of the smartphone). In some embodiments, the reconfiguration user interface for the vehicle instrument cluster is displayed on a display of the smartphone. Enabling a user to provide reconfiguration inputs to enables the computer system to display an appearance for a vehicle instrument cluster based on the user-provided reconfiguration inputs, thereby providing the user with improved feedback.

In some embodiments, the sequence of one or more user reconfiguration inputs are detected while the computer system (e.g., 600A) is not connected (by wire or wirelessly) to the display generation component (e.g., 600C). In some embodiments, a user provides the one or more user reconfiguration inputs at the computer system and the computer system subsequently (e.g., once the computer system is connected to the display generation device) provides the information, to the display generation device, that defines the updated appearance. Providing information that defines an appearance for a vehicle instrument cluster based on reconfiguration inputs detected while the computer system is not connected to the display generation component enables the computer system to receive the reconfiguration inputs and, once connected to the display generation component, provide the information that defines the appearance, thereby providing the user with improved feedback.

In some embodiments, the updated appearance (the second vehicle instrument cluster interface with the second appearance) includes a change in font (e.g., size, weight, and/or typeface) (e.g., of one or more instrument cluster elements) relative to the first appearance (e.g., 630 of FIG. 6D). In some embodiments, the font of content (e.g., of one or more instrument cluster elements) is changed between the first appearance and the updated appearance without changing other visual aspects between the first appearance and updated appearance. In some embodiments, the only visual difference between the first appearance and the updated appearance is a change of one or more fonts. In some embodiments, providing information to the display generation component that defines the updated appearance of the vehicle instrument cluster includes providing font information that is different from font information provided that defines the first appearance. Changing a font of a vehicle instrument cluster provides the user with feedback about the state of the computer system and, in particular, which appearance of the vehicle instrument cluster the computer system is providing for display, thereby providing the user with improved feedback.

In some embodiments, the updated appearance (the second vehicle instrument cluster interface with the second appearance) includes a change in color (e.g., of one or more instrument cluster elements and/or of a background of the instrument cluster interface) relative to the first appearance (e.g., 630 of FIG. 6E). In some embodiments, the color of content (e.g., of one or more instrument cluster elements) is changed between the first appearance and the updated appearance without changing other visual aspects between the first appearance and updated appearance. In some embodiments, the only visual difference between the first appearance and the updated appearance is a change of one or more colors. In some embodiments, providing information to the display generation component that defines the updated appearance of the vehicle instrument cluster includes providing color information that is different from color information provided that defines the first appearance. Changing a color of a vehicle instrument cluster provides the user with feedback about the state of the computer system and, in particular, which appearance of the vehicle instrument cluster the computer system is providing for display, thereby providing the user with improved feedback.

In some embodiments, the updated appearance (the second vehicle instrument cluster interface with the second appearance) includes a change in line widths (e.g., of one or more instrument cluster elements) relative to the first appearance (e.g., 630 of FIG. 6F). In some embodiments, the line width of content (e.g., of one or more instrument cluster elements) is changed between the first appearance and the updated appearance without changing other visual aspects between the first appearance and updated appearance. In some embodiments, the only visual difference between the first appearance and the updated appearance is a change of one or more line widths. In some embodiments, providing information to the display generation component that defines the updated appearance of the vehicle instrument cluster includes providing line width information that is different from line width information provided that defines the first appearance. Changing a line width of a vehicle instrument cluster provides the user with feedback about the state of the computer system and, in particular, which appearance of the vehicle instrument cluster the computer system is providing for display, thereby providing the user with improved feedback.

In some embodiments, the updated appearance (the second vehicle instrument cluster interface with the second appearance) includes the addition and/or removal of one or more instrument cluster elements (e.g., 630E, 630F) relative to the first appearance (e.g., 630 of FIG. 6G) (the first vehicle instrument cluster interface with the first appearance). In some embodiments, one or more instrument cluster elements are changed (added and/or removed) between the first appearance and the updated appearance without changing other visual aspects between the first appearance and updated appearance. In some embodiments, the second set of one or more instrument cluster elements of the second appearance includes different instrument cluster elements as compared to the first set of one or more instrument cluster elements displayed of the first appearance. In some embodiments, providing information to the display generation component that defines the updated appearance of the vehicle instrument cluster includes providing instrument cluster element information that is different from instrument cluster element information provided that defines the first appearance. Adding and/or removing cluster elements enables the user to access different information about the vehicle and provides the user with feedback about the state of the computer system and, in particular, which appearance of the vehicle instrument cluster the computer system is providing for display, thereby providing the user with improved feedback.

In some embodiments, the updated appearance (the second vehicle instrument cluster interface with the second appearance) includes a change in shape (e.g., rectangular as in 630 of FIG. 6H) of one or more instrument cluster elements relative to the first appearance (e.g., 630 of FIG. 6H) (the first vehicle instrument cluster interface with the first appearance). In some embodiments, the shape(s) of one or more instrument cluster elements are changed between the first appearance and the updated appearance without changing other visual aspects between the first appearance and updated appearance. In some embodiments, the only visual difference between the first appearance and the updated appearance is a change of one or more shapes of the one or more instrument cluster elements. In some embodiments, providing information to the display generation component that defines the updated appearance of the vehicle instrument cluster includes providing shape information that is different from shape information provided that defines the first appearance. Changing a shape of an instrument cluster element provides the user with feedback about the state of the computer system and, in particular, which appearance of the vehicle instrument cluster the computer system is providing for display, thereby providing the user with improved feedback.

In some embodiments, the updated appearance (the second vehicle instrument cluster interface with the second appearance) includes a change in a quantity of instrument cluster elements relative to the first appearance (e.g., 630 of FIG. 6G) (the first vehicle instrument cluster interface with the first appearance). In some embodiments, the quantity of instrument cluster elements are changed between the first appearance and the updated appearance without changing other visual aspects (e.g., background image/color and/or text size) between the first appearance and updated appearance. In some embodiments, the only visual difference between the first appearance and the updated appearance is a change in the quantity of instrument cluster elements. In some embodiments, providing information to the display generation component that defines the updated appearance of the vehicle instrument cluster includes providing instrument cluster quantity information that is different from instrument cluster quantity information provided that defines the first appearance. Changing a quantity of cluster elements enables the user to access different information about the vehicle and provides the user with feedback about the state of the computer system and, in particular, which appearance of the vehicle instrument cluster the computer system is providing for display, thereby providing the user with improved feedback.

In some embodiments, the updated appearance (the second vehicle instrument cluster interface with the second appearance) includes a change in location of one or more instrument cluster elements (e.g., 630D) relative to the first appearance (e.g., 630 of FIG. 6I) (the first vehicle instrument cluster interface with the first appearance). In some embodiments, the location(s) of one or more instrument cluster elements is changed between the first appearance and the updated appearance without changing other visual aspects between the first appearance and updated appearance. In some embodiments, the only visual difference between the first appearance and the updated appearance is a change in location(s) of one or more instrument cluster elements. In some embodiments, providing information to the display generation component that defines the updated appearance of the vehicle instrument cluster includes providing instrument cluster location information that is different from instrument cluster location information provided that defines the first appearance. Changing a location of an instrument cluster element provides the user with feedback about the state of the computer system and, in particular, which appearance of the vehicle instrument cluster the computer system is providing for display, thereby providing the user with improved feedback.

In some embodiments, prior to providing information to the display generation component that defines the updated appearance of the vehicle instrument cluster, the first vehicle instrument cluster interface with the first appearance is an initial instrument cluster displayed, via the display generation component, upon start of a vehicle in which the display generation component is located (e.g., installed). Subsequent to providing information to the display generation component that defines an updated appearance of the vehicle instrument cluster, the second vehicle instrument cluster interface with the second appearance is an initial instrument cluster displayed, via the display generation component, upon start of the vehicle in which the display generation component is located (e.g., installed). Displaying the vehicle instrument cluster as an initial instrument cluster with the second appearance after providing information that defines the updated appearance provides the user with feedback about the appearance that was provided and reduces the need for a user to provide inputs to re-select the second appearance at start of the vehicle, thereby providing the user with improved feedback and reducing the number of inputs needed to perform an operation.

In some embodiments, the first appearance of the first vehicle instrument cluster interface is determined by the computer system (e.g., 600A, a companion device that is separate from the vehicle, and/or a smartphone) and the second appearance of the second vehicle instrument cluster interface is determined by the computer system (e.g., 600A). In some embodiments, the computer system determines the appearances of the first and second instrument cluster interfaces based on one or more of: contextual information (e.g., location (such as GPS location) of the computer system, weather, and/or recent driving habits) and selections via user inputs. The computer system determining the first and second appearances enables different appearances of instrument clusters to be provided for display without requiring the user to provide input to determine the appearances, thereby reducing the number of inputs needed to perform an operation.

In some embodiments, the sequence of one or more user reconfiguration inputs directed to the reconfiguration user interface includes selection of a first template instrument cluster interface (e.g., 606A) from among a plurality of template instrument cluster interfaces (e.g., 606A-606C), and wherein the updated appearance is based on the selection of the first template instrument cluster interface. Providing an updated appearance of the vehicle instrument cluster based on user selection of a template instrument cluster interface provides the user with feedback about the state of the computer system and, in particular, that the computer system has received the user selection, thereby providing improved user feedback.

In accordance with some embodiments, the computer system (e.g., 600C) displays (e.g., on a display integrated with the computer system) a plurality of objects corresponding to a plurality of template instrument cluster interfaces. The computer system (e.g., 600C) receives selection (e.g., via a touch sensitive surface) of the template instrument cluster interface and, optionally, additional user inputs to customize a template instrument cluster interface. Subsequently, the computer system provides information to the display generation component that defines the updated appearance of the vehicle instrument cluster, wherein the updated information is based on the selected and, optionally customized, template instrument cluster interface.

Note that details of the processes described above with respect to method 700 (e.g., FIG. 7) are also applicable in an analogous manner to the methods described below. For example, methods 900, 1100, and 1300 optionally include one or more of the characteristics of the various methods described above with reference to method 700. For example, the instrument cluster (e.g., 630) is the same instrument cluster (e.g., 630) of the other methods. For another example, the speedometer (e.g., 640) is the same speedometer of the other methods. For brevity, these details are not repeated below.

FIGS. 8A-8G illustrate exemplary devices and user interfaces for providing vehicle-specific instrument clusters, in accordance with some embodiments. The user interfaces in these figures are used to illustrate the processes described below, including the processes in FIG. 9.

At FIG. 8A, as (or while) computer system 600A enters, approaches and/or accesses vehicle 802, computer system 600A optionally connects (e.g., when computer system 600A determines that it is inside vehicle 802 and/or when computer system 600A receives a communication request) to display screen 600C of vehicle 802, which is a van. After computer system 600A connects to display screen 600C, computer system 600A transmits first information to display screen 600C that defines an appearance of the vehicle instrument cluster for vehicle 802, as shown in FIG. 8A. Computer system 600A selects first information to transmit based on being connected to display screen 600C of vehicle 802, such as based on a type (e.g., model number, serial number, size, and/or shape) of display screen 600C and/or a type (e.g., a make, a model, a trim level/style, and/or a model year) of vehicle 802. The appearance of instrument cluster 630 is based on the first information provided by computer system 600A. In some embodiments, instrument cluster 630 can be user-customized, as described with respect to FIGS. 6A-6I. As illustrated in FIG. 8A, instrument cluster 630 includes navigational element 630A, temperature element 630B, shifter element 630C, percent element 630D, compass 630E, audio element 630F, and speedometer 640.

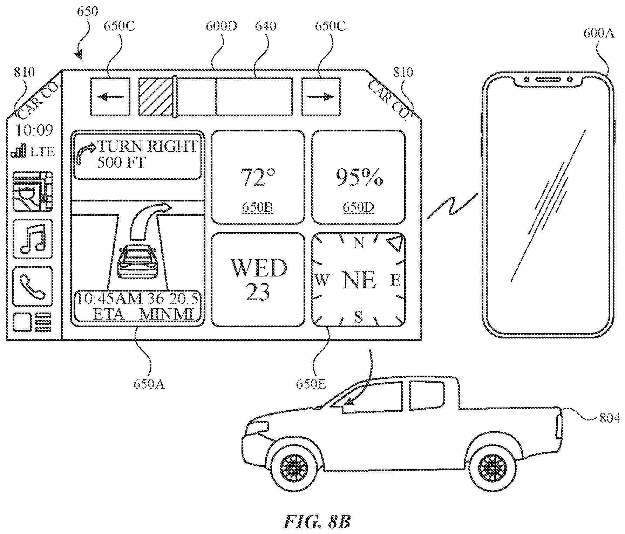

At FIG. 8B, computer system 600A enters, approaches and/or accesses vehicle 804, computer system 600A optionally connects (e.g., when computer system 600A determines that it is inside vehicle 804 and/or when computer system 600A receives a communication request) to display screen 600D of vehicle 804, which is a pickup truck. In some embodiments, display screen 600D includes some or all of the features of device 100, device 300, or device 500, discussed above. In some embodiments, display screen 600D includes some or all the features of display screen 600C, but has a different shape, is of a different type, and/or is installed in a different vehicle.

After computer system 600A connects to display screen 600D, computer system 600A transmits second information to display screen 600D that defines an appearance of the vehicle instrument cluster for vehicle 804, as shown in FIG. 8B. Computer system 600A selects second information (as compared to the first information) to transmit based on being connected to display screen 600D of vehicle 804, such as based on a type (e.g., model number, serial number, size, and/or shape) of display screen 600D and/or a type (e.g., a make, a model, a trim level/style, and/or a model year) of vehicle 804. The appearance of instrument cluster 650 is based on the second information provided by computer system 600A. In some embodiments, instrument cluster 650 can be user-customized, as described with respect to FIGS. 6A-6I. As illustrated in FIG. 8B, instrument cluster 650 includes navigational element 650A, temperature element 650B, turn indicators 650C, percent element 650D, compass 650E, audio element 650F, and speedometer 640. In this example, instrument cluster 650 does not include a shifter element. Visual element 810 displayed as part of instrument cluster 650 indicates a manufacturer of vehicle 804 and is, optionally, specific to display screens of vehicles made by that manufacturer.

Thus, computer system 600A transmits different information defining different appearances of vehicle instrument clusters based on which type of vehicle the respective display screen (e.g., 600C, 600D) is located (e.g., installed).

Instrument cluster 630 and instrument cluster 650, as illustrated in FIGS. 8A and 8B, include some of the same instrument cluster elements (e.g., navigation elements 630A and 650A, temperature elements 630B and 650B, percent elements 630C and 650D, and compasses 630E and 650E) with different appearances, some of the same instrument cluster elements (e.g., speedometers 640) with the same appearance, and some different instrument cluster elements (e.g., instrument cluster 630 includes audio element 630F while instrument cluster 650 does not include an audio element, instrument cluster 630 does not include turn indictors while instrument cluster 650 includes turn indicators 650C). At least some of the differences between the appearances of instrument cluster 630 and instrument cluster 650 is based on the different information received from computer system 600A that defines the appearances of the instrument clusters.

The appearance of two instrument cluster elements is not different merely based on the respective values of the information being displayed (e.g., two speedometers do not have different appearances merely because one shows the vehicle is travelling at a first speed and another shows the vehicle is traveling at a different second speed), but rather, for example, the visual style in which the information is being displayed (e.g., the font, size, position, and/or other visual characteristics of how the information, such as the speed, is displayed). Similarly, the appearance of two instrument clusters is not different merely based on the value of the information being displayed by respective instrument cluster elements (e.g., two instrument clusters do not have different appearances merely because one shows the vehicle is travelling at a first speed and another shows the vehicle is traveling at a different second speed), but rather, for example, the visual style in which the information is being displayed (e.g., the font, size, position, and/or other visual characteristics of how the information, such as the speed, is displayed) and/or the type of instrument cluster elements the respective instrument clusters include.

In some embodiments, with reference to FIG. 8A, an external computer system (e.g., 600A) renders first content, such as navigation element 630A (which optionally includes animations for driving directions), for display on instrument cluster 630 while the computer system of instrument cluster 630 renders second content, such as elements 630B-630F, for display on instrument cluster 630. As illustrated in FIG. 8A, the first content and the second content are concurrently displayed on instrument cluster 630.

In some embodiments, with reference to FIG. 8A, While the first content and the second content are concurrently displayed, user input is detected at instrument cluster 630. For example, a user may tap on a user-selectable option displayed as part of navigation element 630A (render by the external computer system, such as 600A) or the user may swipe on temperature element 630B (rendered by the computer system of instrument cluster 630) to change a setting of the heating system of vehicle 802. When the input is directed to areas of the display rendered by the computer system of instrument cluster 630, instrument cluster 630 processes the input and performs a corresponding operation, such as changing the setting of the hearing system. When the input is directed to areas of the display rendered by the external computer system, the computer system of instrument cluster 630 transmits details of the input to the external computer system so that the external computer system can determine whether an operation should be performed. As a result, two different computer systems can interoperate to provide the user with visual feedback of their operations and receive user input, using the display and touch-sensitive surface of instrument cluster 630.

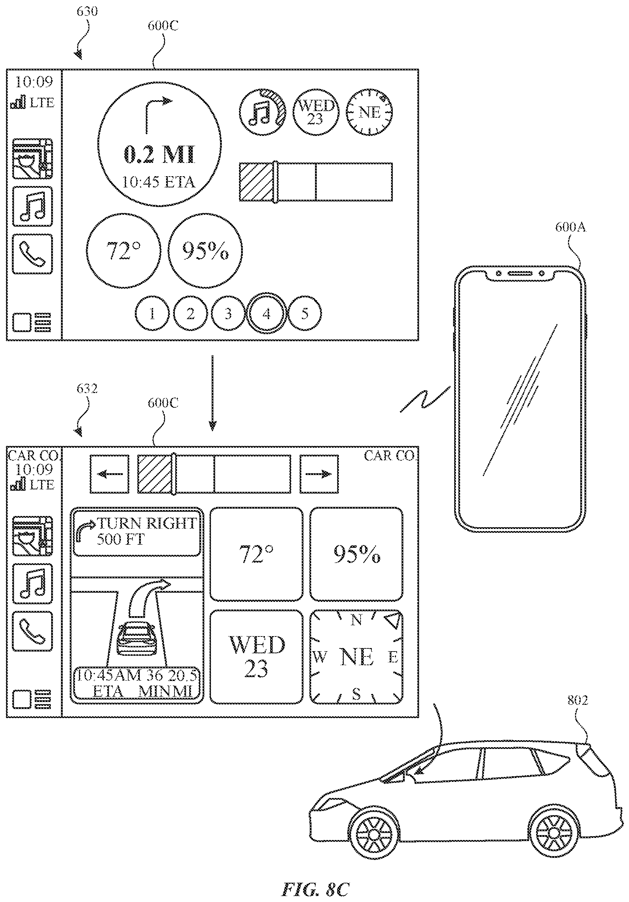

At FIG. 8C, computer system 600A receives a series of one or more inputs to change the visual appearance of the instrument cluster of vehicle 802. Computer system 600 transmits (based on the one or more inputs) updated information to display screen 600C that indicates the change (e.g., defines an updated appearance) of the vehicle instrument cluster, such that the updated information (transmitted to display screen 600C) defines the same appearance as the second information previously transmitted to display screen 600D. As a result, display screen 600C changes the appearance of the instrument cluster from the appearance of instrument cluster 630 to have many of the same elements as the appearance of instrument cluster 632. In this example, vehicle 802 is made by the same manufacturer of vehicle 804 and visual element 810 that indicates the manufacturer is displayed as part of vehicle instrument cluster 632. In some examples, if vehicle 802 is made by a different manufacturer of vehicle 804, computer system 600A does not permit configuring display of visual element 810 on display screen 600C (e.g., the information that is transmitted to display screen 600C would not define an instrument cluster that includes visual element 810).

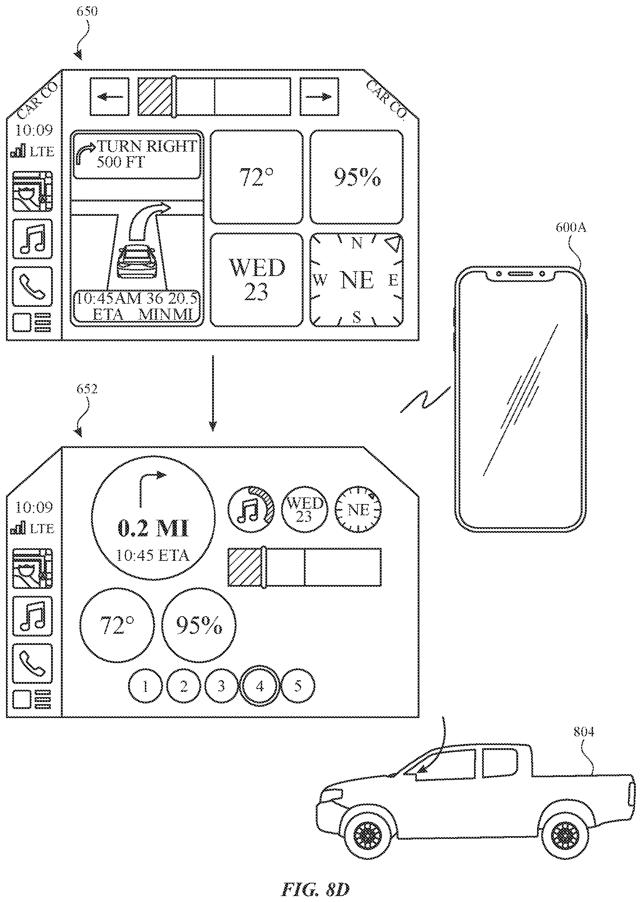

At FIG. 8D, computer system 600A receives a series of one or more inputs to change the visual appearance of the instrument cluster of vehicle 804. Computer system 600 transmits (based on the one or more inputs) updated information to display screen 600D that indicates the change (e.g., defines an updated appearance) of the vehicle instrument cluster, such that the updated information (transmitted to display screen 600D) defines the same appearance as the first information previously transmitted to display screen 600C. As a result, display screen 600D changes the appearance of the instrument cluster from the appearance of instrument cluster 650 to the appearance of instrument cluster 652.

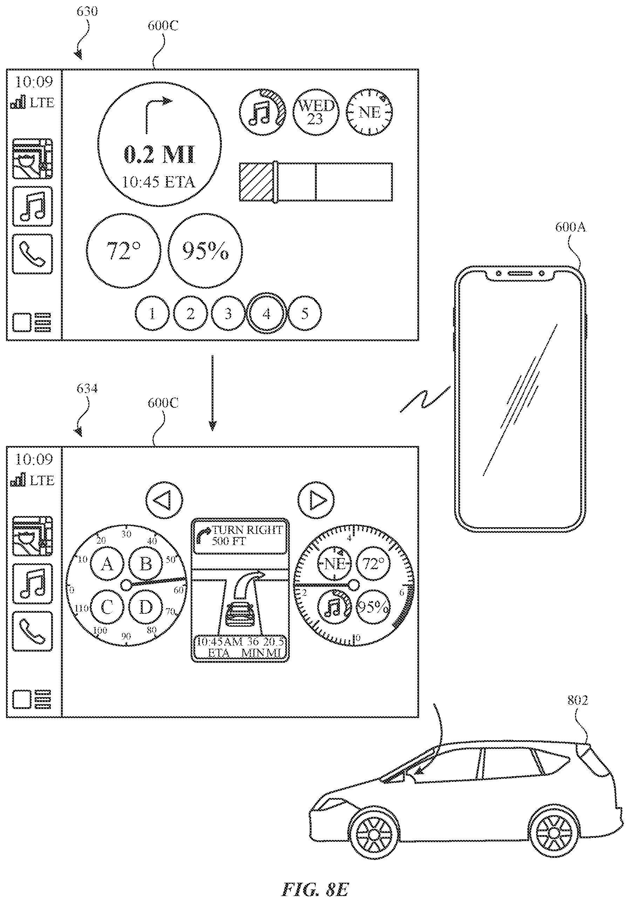

At FIG. 8E, computer system 600A receives (e.g., while display screen 600C is displaying instrument cluster 630) a series of one or more inputs to change the visual appearance of the instrument cluster of vehicle 802. Computer system 600 transmits (based on the one or more inputs) third information to display screen 600C that indicates the change (e.g., defines an updated appearance) of the vehicle instrument cluster, such that the third information (transmitted to display screen 600C) defines a new appearance, as shown in FIG. 8E. As a result, display screen 600C changes the appearance of the instrument cluster from the appearance of instrument cluster 630 to the appearance of instrument cluster 634.

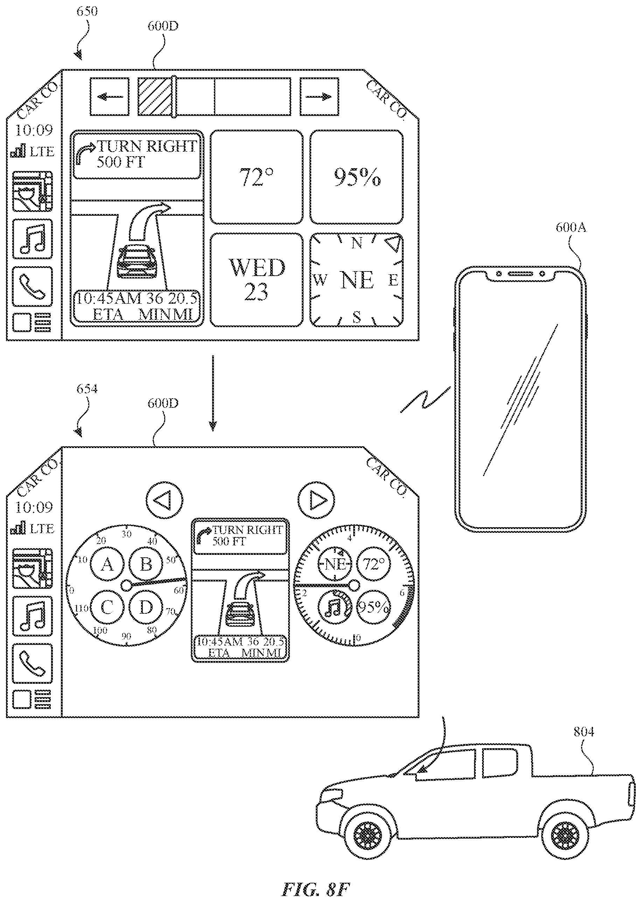

At FIG. 8F, computer system 600A receives (e.g., while display screen 600D is displaying instrument cluster 650) a series of one or more inputs to change the visual appearance of the instrument cluster of vehicle 804. Computer system 600 transmits (based on the one or more inputs) the same third information to display screen 600D (as was transmitted to display screen 600C) that indicates the change (e.g., defines an updated appearance) of the vehicle instrument cluster, such that the third information (transmitted to display screen 600D) defines a new appearance, as shown in FIG. 8F. As a result, display screen 600D changes the appearance of the instrument cluster from the appearance of instrument cluster 650 to the appearance of instrument cluster 654. In some embodiments, the appearance of instrument cluster 634 and instrument cluster 654 is the same (e.g., identical in size of elements, positions of elements, quantity of elements, and/or color of elements) based on electronic device 600A having transmitted the same third information to both display screen 600C and 600D.

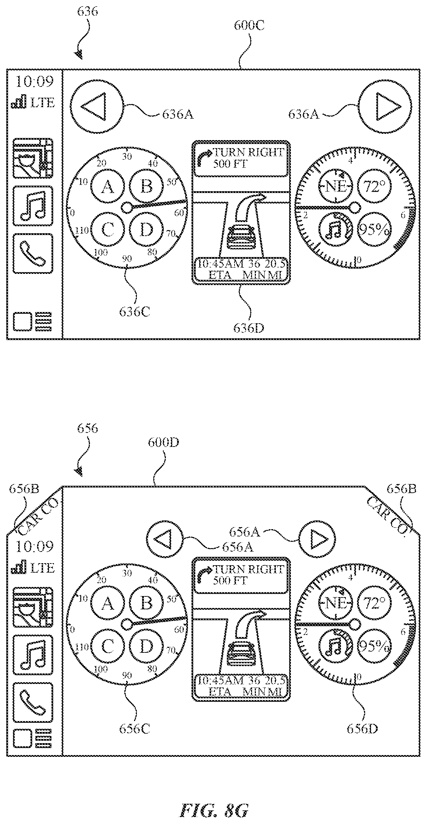

FIG. 8G illustrates instrument cluster 636 of vehicle 802 and instrument cluster 656 of vehicle 804. Both instrument cluster 636 and instrument cluster 656 are displayed based on receiving information (e.g., the same information) defining instrument clusters with all the same appearance options (e.g., layout template, font, line width, color, control shape, etc.). Instrument cluster 636 looks different when displayed on display screen 600C as compared to instrument cluster 656 displayed on display screen 600D. For example, the size and positions of turn indicators 636A and 636B are different. For another example, instrument cluster 656 displayed on display screen 600D includes visual element 656B, while instrument cluster 636 when displayed on display screen 600C does not include the same visual element. Some aspects of instrument cluster 636 look the same when displayed on display screen 600C as compared to instrument cluster 656 when displayed on display screen 600D. For example, speedometer 636C and 656C have the same size, position, color, and other visual characteristics. For another example, navigational elements 636D and 656D have the same size, position, color, and other visual characteristics.

FIG. 9 is a flow diagram illustrating a method for providing vehicle-specific instrument clusters using an computer system, in accordance with some embodiments. Method 900 is performed at a computer system (e.g., 100, 300, 500, 600A, 600B, 600C, a computer system of a vehicle, a companion device that is separate from a vehicle, and/or a smartphone) that is in communication with a display generation component (e.g., 600B, 600C, a display generation component of the vehicle, a display set within a front console of a vehicle and/or a display positioned ahead of/in front of a driver's seat of a vehicle). Some operations in method 900 are, optionally, combined, the orders of some operations are, optionally, changed, and some operations are, optionally, omitted.

As described below, method 900 provides an intuitive way for providing vehicle-specific instrument clusters. The method reduces the cognitive burden on a user for customizing user-adjustable instrument clusters, thereby creating a more efficient human-machine interface. For battery-operated computing devices, enabling a user to access vehicle-specific instrument clusters faster and more efficiently conserves power and increases the time between battery charges.

The computer system (e.g., 600A) provides (902) information to the display generation component (e.g., 600C, 600D) that defines an appearance of a vehicle instrument cluster for display, via the display generation component (e.g., 600C, 600D), as a respective vehicle instrument cluster interface with a respective appearance.

The respective appearance includes, in accordance with a determination that the display generation component (e.g., 600C) is a display generation component of a first type (e.g., 802, a first make, a first model, and/or a first model year) of vehicle, the information provided to the display generation component (e.g., 600C) defines (904) a first vehicle instrument cluster interface with a first appearance (e.g., 630 at FIG. 8A).

The respective appearance includes, in accordance with a determination that the display generation component (e.g., 600D) is a display generation component of a second type of vehicle (e.g., 804, a second make, a second model, and/or a second model year) different from the first type of vehicle, the information provided to the display generation component defines (906) a second vehicle instrument cluster interface with a second appearance (e.g., 650 of FIG. 8B) that is different from the first appearance. Providing information that defines a first or second appearances for vehicle instrument cluster interfaces based on a determination that the display generation component is of a first or second type provides the user with feedback about the state of the computer system and, in particular, that the computer system has determined that it is in communication with the first or second type of display generation component, thereby providing improved user feedback.

In some embodiments, the first vehicle instrument cluster interface (e.g., 630) includes a first set of one or more instrument cluster elements (e.g., a speedometer, a tachometer, a fuel level indicator, a battery charge level indicator, and/or gearshift position indicator). In some embodiments, the first set of one or more instrument cluster elements indicate information about a vehicle (e.g., 802) in which the display generation component is located. In some embodiments, the second vehicle instrument cluster interface (e.g., 650) includes a second set of one or more instrument cluster elements (e.g., a speedometer, a tachometer, a fuel level indicator, a battery charge level indicator, and/or gearshift position indicator). In some embodiments, the second set of one or more instrument cluster elements indicate information about a vehicle (e.g., 804) in which the display generation component is located.

In some embodiments, the first type is a vehicle manufacturer and wherein the first vehicle instrument cluster interface with the first appearance includes one or more visual aspects (e.g., instrument cluster elements, and/or branding information specific to the vehicle make, vehicle model, and/or vehicle manufacturer) that are specific to the first type of vehicle.

In some embodiments, the first vehicle instrument cluster interface with the first appearance includes a visual identifier of the manufacturer of the vehicle. Providing information that defines a first or second appearances for vehicle instrument cluster interfaces based on a vehicle manufacturer enables the computer system to provide/display instrument clusters with visual aspects that are specific to that type of vehicle and provides the user with feedback about the vehicle manufacturer as determined by the computer system, thereby providing improved user feedback.

In some embodiments, the second vehicle instrument cluster interface (e.g., 650) with the second appearance includes one or more visual aspects (e.g., 810, instrument cluster elements) that are specific to the second type of vehicle (e.g., 804) and does not include the one or more visual aspects that are specific to the first type of vehicle. In some embodiments, the second vehicle instrument cluster interface with the second appearance includes a visual identifier (e.g., 810) of the manufacturer of the vehicle.

In some embodiments, the first vehicle instrument cluster interface with the first appearance (e.g., 630 of FIG. 8A) includes a first plurality of instrument cluster elements, including a first instrument cluster element (e.g., 630B, 630E, 640). In some embodiments, the second vehicle instrument cluster interface with the second appearance (e.g., 650 of FIG. 8B) includes a second plurality of instrument cluster elements, including the first instrument cluster element (e.g., 650B, 650E, 640). In some embodiments, the first appearance and the second appearance include at least some (e.g., one, two, all, or not all) of the same instrument cluster elements. Providing information that defines a first or second appearances for vehicle instrument cluster interfaces that both include the first instrument cluster element enables the computer system to provide the user with feedback about the information that the first instrument cluster element provides, regardless of whether the first or second appearance is provided, thereby providing improved user feedback.

In some embodiments, the first instrument cluster element, of the first plurality of instrument cluster elements, has the same appearance as the first instrument cluster element of the second plurality of instrument cluster elements. In some embodiments, the first instrument cluster element, of the first plurality of instrument cluster elements, has a different appearance as compared to the first instrument cluster element of the second plurality of instrument cluster elements. In some embodiments, the first plurality of instrument cluster elements is the same as the second plurality of instrument cluster elements (e.g., both sets include a speedometer, a fuel gauge, and a tachometer). In some embodiments, the first plurality of instrument cluster elements is different from the second plurality of instrument cluster elements (e.g., speedometer and fuel gauge vs. speedometer and battery charge gauge).

In some embodiments, subsequent to providing information to the display generation component that defines the appearance of the vehicle instrument cluster for display, via the display generation component, as the respective vehicle instrument cluster interface with the respective appearance, the computer system (e.g., 600A) detects a first sequence of one or more user reconfiguration inputs (e.g., one or more inputs detected at a touch-sensitive surface and/or buttons of the computer system) directed to a reconfiguration user interface (e.g., at 600A of FIG. 8C) for the first vehicle instrument cluster interface. After receiving the first sequence of one or more user reconfiguration inputs, the computer system (e.g., 600A) provides information to the display generation component (e.g., 600C) that defines an appearance of a vehicle instrument cluster for display, via the display generation component, as the respective vehicle instrument cluster interface with the respective appearance, including: in accordance with a determination that the display generation component is a display generation component of the first type (e.g., 802, a first make, a first model, a first trim level/style, and/or a first model year) of vehicle, the information provided to the display generation component (e.g., 600C) defines the first vehicle instrument cluster interface with the second appearance (e.g., 632 of FIG. 8C), and in accordance with a determination that the display generation component is a display generation component of the second type of vehicle (e.g., 804, a second make, a second model, a second trim level/style, and/or a second model year), the information provided to the display generation component defines a second vehicle instrument cluster interface with the second appearance (e.g., 650 of FIG. 8B). Enabling the computer system to receive user inputs to customize the appearance of the vehicle instrument cluster to be the second appearance enables the user to configure the vehicle instrument cluster to display the information that is most helpful/relevant to the user, thereby providing improved user feedback.

In some embodiments, the computer system receives user inputs to customize the appearance of the first instrument cluster interface such that the first instrument cluster interface has the same appearance as the second instrument cluster interface (e.g., the same instrument cluster elements, the same background, the same size instrument cluster elements, and the same spacing between instrument cluster elements).

In some embodiments, subsequent to providing information to the display generation component that defines the appearance of the vehicle instrument cluster for display, via the display generation component, as the respective vehicle instrument cluster interface with the respective appearance, detecting a second sequence of one or more user reconfiguration inputs (e.g., one or more inputs detected at a touch-sensitive surface and/or buttons of the computer system) directed to a reconfiguration user interface for the second vehicle instrument cluster interface (e.g., as in FIG. 8D). After receiving the first sequence of one or more user reconfiguration inputs, the computer system (e.g., 600A) provides information to the display generation component that defines an appearance of a vehicle instrument cluster for display, via the display generation component, as the respective vehicle instrument cluster interface with the respective appearance, including: in accordance with a determination that the display generation component is a display generation component of the first type (e.g., 802, a first make, a first model, and/or a first model year) of vehicle, the information provided to the display generation component defines the first vehicle instrument cluster interface with the first appearance (e.g., 630 of FIG. 8A), and in accordance with a determination that the display generation component is a display generation component of the second type of vehicle (e.g., 804, a second make, a second model, and/or a second model year), the information provided to the display generation component defines a second vehicle instrument cluster interface with the first appearance (e.g., 652 of FIG. 8D). Enabling the computer system to receive user inputs to customize the appearance of the vehicle instrument cluster to be the first appearance enables the user to configure the vehicle instrument cluster to display the information that is most helpful/relevant to the user, thereby providing improved user feedback.

In some embodiments, the computer system receives user inputs to customize the appearance of the second instrument cluster interface such that the second instrument cluster interface has the same appearance as the first instrument cluster interface (e.g., the same instrument cluster elements, the same background, the same size instrument cluster elements, and the same spacing between instrument cluster elements).

In some embodiments, subsequent to providing information to the display generation component that defines the appearance of the vehicle instrument cluster for display, via the display generation component, as the respective vehicle instrument cluster interface with the respective appearance, displaying a reconfiguration user interface for the first vehicle instrument cluster interface, wherein the reconfiguration user interface for the first vehicle instrument cluster interface does not enable (and/or prevents) customization (e.g., via user inputs) of the first vehicle instrument cluster interface (e.g., 630 of FIG. 8A) to have the second appearance (e.g., 650). Not enabling a user to customize the appearance of the vehicle instrument cluster to be the second appearance enables the computer system to differentiate (for display to the user) the second appearance from the first appearance, thereby providing improved user feedback.

In some embodiments, the first vehicle instrument cluster interface cannot be customized to have the appearance of the second vehicle instrument cluster interface. In some embodiments, the second vehicle instrument cluster interface includes particular element(s) (e.g., an indication of (textual and/or graphical) the second type of vehicle and/or an instrument cluster element with a particular appearance) and the computer system does not enable (and/or prevents) customization of the first vehicle instrument cluster interface to include the particular element(s).

In some embodiments, subsequent to providing information to the display generation component that defines the appearance of the vehicle instrument cluster for display, via the display generation component, as the respective vehicle instrument cluster interface with the respective appearance, displaying a reconfiguration user interface for the second vehicle instrument cluster interface, wherein the reconfiguration user interface for the second vehicle instrument cluster interface does not enable (and/or prevents) customization (e.g., via user inputs) of the second vehicle instrument cluster interface (e.g., 650 of FIG. 8B) to have the first appearance (e.g., 630). Not enabling a user to customize the appearance of the vehicle instrument cluster to be the first appearance enables the computer system to differentiate (for display to the user) the first appearance from the second appearance, thereby providing improved user feedback.

In some embodiments, the second vehicle instrument cluster interface cannot be customized to have the appearance of the first vehicle instrument cluster interface. In some embodiments, the first vehicle instrument cluster interface includes particular element(s) (e.g., an indication of (textual and/or graphical) the first type of vehicle and/or a instrument cluster element with a particular appearance) and the computer system does not enable (and/or prevents) customization of the second vehicle instrument cluster interface to include the particular element(s).

In some embodiments, subsequent to providing information to the display generation component that defines the appearance of the vehicle instrument cluster for display, via the display generation component, as the respective vehicle instrument cluster interface with the respective appearance: the computer system (e.g., 600A) detects a third sequence of one or more user reconfiguration inputs (e.g., one or more inputs detected at a touch-sensitive surface and/or buttons of the computer system) directed to a reconfiguration user interface for the first vehicle instrument cluster interface. In response to detecting the third sequence of one or more user reconfiguration inputs directed to the reconfiguration user interface for the first vehicle instrument cluster interface, the computer system customizes the first vehicle instrument cluster interface (e.g., 630 of FIG. 8E) to have a third appearance (e.g., 634 of FIG. 8E, different from the first appearance and/or the second appearance). The computer system (e.g., 600A) detects a fourth sequence of one or more user reconfiguration inputs (e.g., one or more inputs detected at a touch-sensitive surface and/or buttons of the computer system) directed to a reconfiguration user interface for the second vehicle instrument cluster interface. In response to detecting the fourth sequence of one or more user reconfiguration inputs directed to the reconfiguration user interface for the second vehicle instrument cluster interface, the computer system (e.g., 600A) customizes the second vehicle instrument cluster interface (e.g., 650 of FIG. 8F) to have the third appearance (e.g., 654 of FIG. 8F, different from the first appearance and/or the second appearance).

In some embodiments, after receiving the third sequence of one or more user reconfiguration inputs and the fourth sequence of one or more user reconfiguration inputs, the computer system (e.g., 600A) provides information to the display generation component that defines an appearance of a vehicle instrument cluster for display, via the display generation component, as the respective vehicle instrument cluster interface with the respective appearance, including: in accordance with a determination that the display generation component is a display generation component of the first type (e.g., 802, a first make, a first model, and/or a first model year) of vehicle, the information provided to the display generation component defines the first vehicle instrument cluster interface with the third appearance (e.g., 634), and in accordance with a determination that the display generation component is a display generation component of the second type of vehicle (e.g., 804, a second make, a second model, and/or a second model year), the information provided to the display generation component defines a second vehicle instrument cluster interface with the third appearance (e.g., 654). Enabling the computer system to receive user inputs to customize the appearances of two vehicle instrument cluster to be the third appearance enables the user to configure the vehicle instrument cluster to display the information that is most helpful/relevant to the user, thereby providing improved user feedback.

In some embodiments, the first and second vehicle instrument cluster interfaces can be customized by a user of the computer system to have the same appearance.

In some embodiments, the information provided, in accordance with the determination that the display generation component is the display generation component of the first type (e.g., 802, a first make, a first model, and/or a first model year) of vehicle, is based on the same user selections of instrument cluster appearance as the information provided, in accordance with the determination that the display generation component is the display generation component of the second type (e.g., 804, a second make, a second model, a second trim level/style, and/or a second model year) of vehicle. Providing different appearances for vehicle instrument clusters based on the type of vehicle provides the user with feedback about the type of vehicle to which the information was provided, thereby providing improved user feedback.

In some embodiments, the same user selections (e.g., same template instrument cluster interface (same layout), same font, same line width, same color, same instrument cluster element shape) that define a instrument cluster causes display of the instrument cluster to be visually different when displayed via the display generation component of the first type of vehicle as compared to when displayed via the display generation component of the second type of vehicle.

In some embodiments, the information provided to the display generation component of the different types of vehicles is the same information. In some embodiments, the information provided to the display generation component is different information (e.g., based on the vehicle type).

In some embodiments, display of a vehicle instrument cluster is based on characteristics of the display generation component facilitating display of the vehicle instrument cluster.

Note that details of the processes described above with respect to method 900 (e.g., FIG. 9) are also applicable in an analogous manner to the methods described below/above. For example, methods 700, 1100, and 1300 optionally include one or more of the characteristics of the various methods described above with reference to method 900. For example, the instrument cluster (e.g., 630) is the same instrument cluster (e.g., 630) of the other methods. For another example, the speedometer (e.g., 640) is the same speedometer of the other methods. For brevity, these details are not repeated below.

FIGS. 10A-10F illustrate exemplary user interfaces for displaying a speed limit indication, in accordance with some embodiments. The user interfaces in these figures are used to illustrate the processes described below, including the processes in FIG. 11.

FIG. 10A illustrates instrument cluster 630, which includes a plurality of instrument cluster elements, including 630A-630E and 640. In some examples, instrument cluster elements display information about a status of the vehicle in which the instrument cluster is displayed. Navigational element 630A provides a navigation instruction and an estimated time of arrival. Temperature element 630B indicates a temperature of the vehicle, such as an oil temperature, a battery temperature, and/or an interior cabin temperature. Shifter element 630C indicates a plurality of available vehicle gears and identifies a currently selected gear. Percent element 630D indicates a percentage of a characteristic of the vehicle, such as a percent battery charge, and/or a percent of a fuel tank that is full. Compass 630E indicates the current direction that the vehicle is facing or travelling in. Audio element 630F indicates a current audio characteristic of the vehicle, such as a volume of audio being output by a speaker of the vehicle and/or a volume level (e.g., road noise) detected inside the vehicle. Speedometer 640 is an instrument cluster element that displays a current speed of the vehicle and a current speed limit of the road on which the vehicle is traveling and/or located.

Speedometer 640 includes a first visual indication of the current speed, such as by changing the appearance of speedometer 640, and, optionally, a second visual indication of current speed, such as by speed indicator 650A. Speedometer 640 optionally includes a visual indication of the current speed limit, such as by changing the appearance of speedometer 640 (as described in further detail below) and, optionally, a second visual indication of current speed limit, such as by limit indicator 650B. Different locations on speedometer 640 correspond to different speeds. Thus, filling in a portion of the speedometer to a particular location that corresponds to a particular speed provides the user with feedback about the current speed of the vehicle. Similarly, changing a color of the filled in portion of the speedometer beyond a particular location that corresponds to a particular speed limit provides the user with feedback about the speed limit. Additionally, displaying speed indicator 650A at a particular location that corresponds to a particular speed provides the user with feedback about the current speed of the vehicle and displaying limit indicator 650B at a particular location that corresponds to a particular speed limit provides the user with feedback about the speed limit.

As the vehicle speeds up/slows down and as different speed limits are detected, the indicators and visual components of speedometer 640 changes to provide the user with visual feedback about the current speed, about the current speed limit, and whether the current speed of the vehicle is above or below the current speed limit.

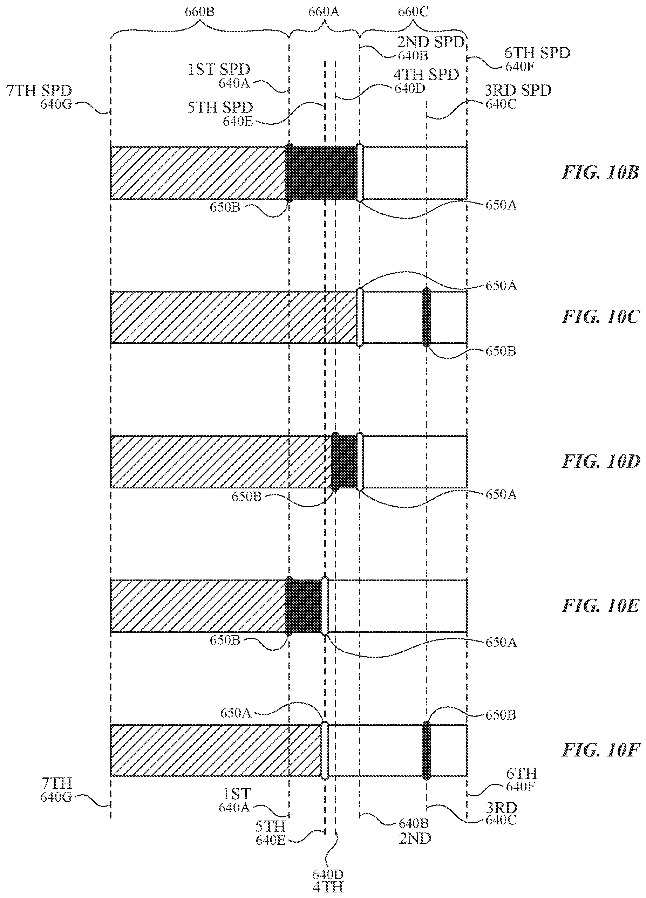

At FIG. 10B, the speed limit is first speed 640A and vehicle speed is second speed 640B, which is above first speed 640A. In response to detecting the speed limit and the vehicle speed and in accordance with determining that the vehicle speed is above the speed limit, the system (e.g., computer system 600A and/or the computer system of display screen 630) displays, speedometer 640 as shown in FIG. 10B. The system concurrently displays, on or adjacent to speedometer 640, limit indicator 650B at a location corresponding to the first speed 640A and speed indicator 650A at a location corresponding to the second speed 640B. Portion 660A of speedometer 640 has a first appearance (e.g., a first color (such as red, yellow, orange, grey, black), a first level of emphasis, a first brightness, having markings of a first size, and/or markings of a first length) because that is the portion of the speedometer above the speed limit (first speed 640A) and below the vehicle speed (second speed 640B). The first appearance provides feedback to the user that the speed of the vehicle has exceed the speed limit and by how much. Portion 660B of speedometer 640 has a second appearance (e.g., a second color (such as green, blue, white, purple), a second level of emphasis, a second brightness, having markings of a second size, and/or markings of a second length) (different from the first appearance) because that is the portion of the speedometer below the speed limit and below the vehicle speed (e.g., between zero mph (seventh speed 640G) and the speed limit (first speed 640A)). Portion 660C (between second speed 640B and sixth speed 640F) of speedometer 640 has a fifth appearance (e.g., a third color (such as white or beige) a third level of emphasis, third brightness, having markings of a third size, and/or markings of a third length) because that is the portion of the speedometer above the vehicle speed.

At FIG. 10C, the speed limit changes to third speed 640C while the vehicle continues to travel with a vehicle speed of second speed 640B. In response to detecting the change in speed limit and in accordance with a determination that the vehicle speed is not above the speed limit, the system (e.g., computer system 600A and/or the computer system of display screen 630) displays, speedometer 640 as shown in FIG. 10C. The system concurrently displays, on or adjacent to speedometer 640, limit indicator 650B at third speed 640C and speed indicator 650A at second speed 640B. Portion 660A of speedometer 640 has the second appearance because that portion of the speedometer is below the speed limit (third speed 640C) and below the vehicle speed (second speed 640B). Portion 660B of speedometer 640 has the second appearance because that portion of the speedometer is below the speed limit and below the vehicle speed (e.g., between zero mph (seventh speed 640G) and the speed limit (first speed 640A)). Portion 660C of speedometer 640 has the fifth appearance because that portion of the speedometer is above the vehicle speed.

At FIG. 10D, the speed limit changes to fourth speed 640D while the vehicle continues to travel with a vehicle speed of second speed 640B. Fourth speed 640D is between first speed 640A and second speed 640B. In response to detecting the change in speed limit and in accordance with a determination that the vehicle speed is above the speed limit, the system (e.g., computer system 600A and/or the computer system of display screen 630) displays, speedometer 640 as shown in FIG. 10D. Portion 660A of speedometer 640 has a third appearance (a portion has the first appearance and a portion has the second appearance) because that portion of the speedometer is below the vehicle speed (second speed 640B) and partially below the speed limit (third speed 640D). Portion 660B of speedometer 640 has the second appearance because that portion of the speedometer is below the speed limit and below the vehicle speed (e.g., between zero mph (seventh speed 640G) and first speed 640A). Portion 660C of speedometer 640 has the fifth appearance because that portion of the speedometer is above the vehicle speed.

At FIG. 10E, the speed limit changes to first speed 640A and the vehicle speed changes to a fifth speed 640E. Fifth speed 640E is between first speed 640A and second speed 640B. In response to detecting the change in speed limit and vehicle speed, and in accordance with a determination that the vehicle speed is above the speed limit, the system (e.g., computer system 600A and/or the computer system of display screen 630) displays, speedometer 640 as shown in FIG. 10E. Portion 660A of speedometer 640 has a fourth appearance (a part has the first appearance and a part has the third appearance) because that the vehicle speed (fifth speed 640E) above the speed limit (640A) is within that portion of the speedometer and part of that portion of the speedometer is above the vehicle speed (fifth speed 640E). Portion 660B of speedometer 640 has the second appearance because that portion of the speedometer is below the speed limit and below the vehicle speed. Portion 660C of speedometer 640 has the fifth appearance because that portion of the speedometer is above the vehicle speed.

At FIG. 10F, the speed limit changes to third speed 640C while the vehicle speed remains at fifth speed 640E. In response to detecting the change in speed limit, and in accordance with a determination that the vehicle speed is not above the speed limit, the system (e.g., computer system 600A and/or the computer system of display screen 630) displays, speedometer 640 as shown in FIG. 10F. Portion 660A of speedometer 640 has a seventh appearance (a part has the second appearance and a part has the third appearance) because that the vehicle speed (fifth speed 640E) is above the speed limit (640A) and is within that portion of the speedometer and part of that portion of the speedometer is above the vehicle speed (fifth speed 640E). Portion 660B of speedometer 640 has the second appearance because that portion of the speedometer is below the speed limit and below the vehicle speed. Portion 660C of speedometer 640 has the fifth appearance because that portion of the speedometer is above the vehicle speed.

Although the speedometer illustrated in FIGS. 10A-10F is arranged in a straight line, the same technique of showing vehicle speed and speed limit can be implemented in using speedometers that are not a straight line. In some embodiments, the shape of the speedometer is round, the speed indicator is a needle that rotates around an axis and points to locations on the speedometer, and the speed limit is indicated by changing a color (or size, or other appearance) of the numerical speed and/or tick mark corresponding to the respective speed that is position along the circle. In some embodiments, the shape of the speedometer is an arc, the speed indicator is a needle that rotates around an axis or slides along a path, and the speed indicator points to locations on the speedometer, with the speed limit indicated by changing a color (or size, or other appearance) of the numerical speed and/or tick mark corresponding to the respective speed that is position along the circle.

FIG. 11 is a flow diagram illustrating a method for displaying a speed limit indication using an computer system, in accordance with some embodiments. Method 1100 is performed at a computer system (e.g., 100, 300, 500, 600A, 600B, 600C, a computer system of a vehicle) that is in communication with a display generation component (e.g., 600B, 600C, display generation component of the vehicle, a display set within a front console of the vehicle, and/or a display positioned ahead of/in front of a driver's seat of the vehicle). Some operations in method 1100 are, optionally, combined, the orders of some operations are, optionally, changed, and some operations are, optionally, omitted.

As described below, method 1100 provides an intuitive way for displaying a speed limit indication. The method reduces the cognitive burden on a user for monitoring speed limits, thereby creating a more efficient human-machine interface. For battery-operated computing devices, enabling a user to monitor speed limits faster and more efficiently conserves power and increases the time between battery charges.

The computer system (e.g., 600C) displays (e.g., 1102), via the display generation component, a speedometer (e.g., 640) indicating (e.g., by changing a color (and/or other appearance) of a path, such as a border of the speedometer; and/or using a needle that moves and/or rotates to point to different portions of the speedometer to indicate current vehicle speed) a current vehicle speed (e.g., speed of the vehicle in which the display generation component is located), wherein: in accordance with a determination that a current speed limit is a first speed (e.g., 640A, 40mph, 50mph) and the current vehicle speed is a second speed (e.g., 640B, 55mph, 60mph) that is above the first speed (e.g., 640A, 40mph, 50mph), a portion (e.g., 660A) of the speedometer (e.g., 640) between a location on the speedometer corresponding to the first speed (e.g., 40mph, 50mph) and a location on the speedometer corresponding to the second speed (e.g., 55mph, 60mph) has (1104) a first appearance (e.g., as in FIG. 10B) (e.g., a first color (such as red, yellow, orange, grey, black), a first level of emphasis, a first brightness, having markings of a first size, and/or markings of a first length), and in accordance with a determination that the current speed limit is a third speed (e.g., 640C, 65mph, 70mph) that is higher than the first speed (e.g., 640A) and the current vehicle speed is the second speed (e.g., 640B 55mph, 60mph) that is not above (e.g., is at or below) the third speed (e.g., 640C, 65mph, 70mph), the portion (e.g., 660A) of the speedometer (e.g., 640) between the location on the speedometer corresponding to the first speed (e.g., 40mph, 50mph) and the location on the speedometer corresponding to the second speed (e.g., 55mph, 60mph) has (1106) a second appearance (e.g., as in FIG. 10C) (e.g., a second color (such as green, blue, white, purple), a second level of emphasis, a second brightness, having markings of a second size, and/or markings of a second length) that is different from the first appearance. In some embodiments, the difference between the first appearance and the second appearance is based on a parameter other than size and/or shape of the region of the speedometer between the first speed and the second speed or markings on the speedometer between the first speed and the second speed. The portion of the speedometer having a different appearance based on whether the current vehicle speed is above or below the current speed limit provides the user with feedback about whether the current speed of the vehicle is above or below the speed limit, thereby providing improved user feedback.

In some embodiments, the technique is performed at a second computer system (e.g., a smartphone and/or a companion device that is separate from the vehicle) that is in communication with a display generation component (e.g., 600C, a display generation component of the vehicle, a display set within a front console of a vehicle and/or a display positioned ahead of/in front of a driver's seat of a vehicle).

The second computer system (e.g., 600A) provides information to the display generation component (e.g., 600C) that defines an appearance of the speedometer (e.g., 640) to indicate a current speed (e.g., of the vehicle and/or of the second computer system), via the display generation component, as a respective speedometer, including: in accordance with a determination that a current speed limit is a first speed (e.g., 40mph, 50mph) and the current vehicle speed is a second speed (e.g., 55mph, 60mph) that is above the first speed (e.g., 40mph, 50mph), a portion of the speedometer between a location on the speedometer corresponding to the first speed (e.g., 40mph, 50mph) and a location on the speedometer corresponding to the second speed (e.g., 55mph, 60mph) has a first appearance (e.g., a first color (such as red, yellow, orange, grey, black), a first level of emphasis, a first brightness, having markings of a first size, and/or markings of a first length); and in accordance with a determination that the current speed limit is a third speed (e.g., 65mph, 70mph) that is higher than the first speed and the current vehicle speed is the second speed (e.g., 55mph, 60mph) that is not above (e.g., is at or below) the third speed (e.g., 65mph, 70mph), the portion of the speedometer between the location on the speedometer corresponding to the first speed (e.g., 40mph, 50mph) and the location on the speedometer corresponding to the second speed (e.g., 55mph, 60mph) has a second appearance (e.g., a second color (such as green, blue, white, purple), a second level of emphasis, a second brightness, having markings of a second size, and/or markings of a second length) that is different from the first appearance. In some embodiments, the difference between the first appearance and the second appearance is based on a parameter other than size and/or shape of the region of the speedometer between the first speed and the second speed or markings on the speedometer between the first speed and the second speed.

In some embodiments, in accordance with the determination that the current speed limit is the first speed (e.g., 640A, 40mph, 50mph) and the current vehicle speed is the second speed (e.g., 640B, 55mph, 60mph) that is above the first speed (e.g., 40mph, 50mph), a portion (e.g., 660B of FIG. 10B) of the speedometer between a location on the speedometer corresponding to the first speed (e.g., 40mph, 50mph) and a location on the speedometer corresponding to a seventh speed (e.g., 0mph, 5mph) that is below the first speed has the second appearance (e.g., the second color (such as green), the second level of emphasis, and/or the second brightness) that is different from the first appearance.

In some embodiments, in accordance with the determination that the current speed limit is the first speed (e.g., 640A, 40mph, 50mph) and the current vehicle speed is the second speed (e.g., 640B, 55mph, 60mph) that is above the first speed (e.g., 40mph, 50mph), a portion (e.g., part of 660C in FIG. 10B) of the speedometer between a location on the speedometer corresponding to the second speed (e.g., 55mph, 60mph) and a location on the speedometer corresponding to the third speed (e.g., 65mph, 70mph) has a fifth appearance (e.g., a third color (e.g., white), a third level of emphasis, and/or a third brightness) that is different from the first appearance and, optionally, from the second appearance. In some embodiments, in accordance with the determination that the current speed limit is the first speed (e.g., 640A, 40mph, 50mph) and the current vehicle speed is the second speed (e.g., 650B, 55mph, 60mph) that is above the first speed (e.g., 40mph, 50mph), a portion (e.g., part of 660C of FIG. 10C) of the speedometer between a location on the speedometer corresponding to the third speed (e.g., 65mph, 70mph) and a location on the speedometer corresponding to a sixth speed (e.g., a maximum indicated speed, 100mph, 105mph) has the fifth appearance (e.g., the third color (e.g., white), the third level of emphasis, and/or the third brightness) that is different from the first appearance and, optionally, from the second appearance.

In some embodiments, in accordance with the determination that the current speed limit is the third speed (e.g., 640C, 65mph, 70mph) that is higher than the first speed (e.g., 640A) and the current vehicle speed is the second speed (e.g., 640B, 55mph, 60mph) that is not above (e.g., is at or below) the third speed (e.g., 640C, 65mph, 70mph), the portion (e.g., 660B of FIG. 10C) of the speedometer between the location on the speedometer corresponding to the first speed (e.g., 40mph, 50mph) and the location on the speedometer corresponding to the seventh speed (e.g., 0mph, 5mph) has the second appearance (e.g., the second color (such as green), the second level of emphasis, and/or the second brightness) that is different from the first appearance.

In some embodiments, in accordance with the determination that the current speed limit is the third speed (e.g., 640C, 65mph, 70mph) that is higher than the first speed (e.g., 640A) and the current vehicle speed is the second speed (e.g., 640B, 55mph, 60mph) that is not above (e.g., is at or below) the third speed (e.g., 640C, 65mph, 70mph), a portion (e.g., part of 660C in FIG. 10C) of the speedometer between a location on the speedometer corresponding to the second speed (e.g., 55mph, 60mph) and a location on the speedometer corresponding to the third speed (e.g., 65mph, 70mph) has a sixth appearance (e.g., a fourth color (e.g., yellow or light green), a fourth level of emphasis, and/or a fourth brightness) that is different from the first appearance and, optionally, from the second and third appearance. In some embodiments, the sixth appearance is the same as the fifth appearance (e.g., a third color, such as white).

In some embodiments, in accordance with the determination that the current speed limit is the third speed (e.g., 640C, 65mph, 70mph) that is higher than the first speed and the current vehicle speed is the second speed (e.g., 640B, 55mph, 60mph) that is not above (e.g., is at or below) the third speed (e.g., 65mph, 70mph), a portion (e.g., part of 660C in FIG. 10C) of the speedometer between a location on the speedometer corresponding to the third speed (e.g., 65mph, 70mph) and a location on the speedometer corresponding to the sixth speed (e.g., a maximum indicated speed, 100mph, and/or 105mph) has the fifth appearance (e.g., the third color (e.g., white), the third level of emphasis, and/or the third brightness) that is different from the first appearance and, optionally, from the second appearance.

In some embodiments, while displaying, via the display generation component (e.g., 600C), the speedometer (e.g., 640) indicating the current vehicle speed (e.g., 640B), the computer system (e.g., 600C) detects a change in speed limit to a fourth speed (e.g., 640D) that is between the first speed (e.g., 640A) and the second speed (e.g., 640B). In response to detecting the change in speed limit to the fourth speed, the computer system (e.g., 600C) changes display, via the display generation component, of the appearance of the portion (e.g., 660A of FIG. 10D) of the speedometer between the location on the speedometer corresponding to the first speed (e.g., 40mph, 50mph) and the location on the speedometer corresponding to the second speed (e.g., 55mph, 60mph) to a third appearance (e.g., a first portion having the first color (such as red) and a second portion having the second color (such as green), a first portion having a first level of emphasis and a second portion having a second level of emphasis, a first portion having a first brightness and a second portion having a second brightness, a first portion having a first width and a second portion having a second width) that is different from the first appearance and the second appearance. Changing the appearance of the portion of the speedometer based on detecting a change in the speed limit provides the user with feedback about what speed limit has been detected and whether the current speed of the vehicle is above or below the speed limit, thereby providing improved user feedback.

In some embodiments, while displaying, via the display generation component (e.g., 600C), the speedometer indicating the second speed (e.g., 640B) as the current vehicle speed (and while the speed limit is the first speed or the third speed), the computer system (e.g., 600C) detects a change in the current vehicle speed to a fifth speed (e.g., 640E) that is below the second speed (and, optionally, above the first speed). In response to detecting the change in the current vehicle speed to the fifth speed (e.g., 640E), the computer system (e.g., 600C) changes display, via the display generation component, of the appearance of the portion (e.g., 660A of FIG. 10E) of the speedometer between the location on the speedometer corresponding to the first speed (e.g., 40mph, 50mph) and the location on the speedometer corresponding to the second speed (e.g., 55mph, 60mph) to a fourth appearance (e.g., a first portion having the first color (such as red) and a second portion having the third color (such as white), a first portion having a first level of emphasis and a second portion having a third level of emphasis, a first portion having a first brightness and a second portion having a third brightness, a first portion having a first width and a second portion having a third width) that is different from the first appearance and the second appearance (and, optionally, the third appearance). Changing the appearance of the portion of the speedometer based on detecting a change in the current vehicle speed provides the user with feedback about what the vehicle speed has been detected and whether the current speed of the vehicle is above or below the speed limit, thereby providing improved user feedback.

In some embodiments, the computer system (e.g., 600C) displays, via the display generation component, the speedometer (e.g., 640) indicating (e.g., by changing a color (and/or other appearance) of a path, such as a border of the speedometer; and/or using a needle that moves and/or rotates to point to different portions of the speedometer to indicate current vehicle speed) the current vehicle speed (e.g., speed of the vehicle in which the display generation component is located), includes: in accordance with the determination that the current speed limit is the first speed (e.g., 640A, 40mph, 50mph) and the current vehicle speed is the second speed (e.g., 640B, 55mph, 60mph) that is above the first speed (e.g., 40mph, 50mph), a portion (e.g., 660C of FIG. 10B) of the speedometer between a location on the speedometer corresponding to the second speed (e.g., 55mph, 60mph) and a location on the speedometer corresponding to a sixth speed (e.g., 640F, a maximum indicated speed, 100mph, 105mph) has a fifth appearance (e.g., a third color (such as white), a third level of emphasis, and/or a third brightness), and in accordance with a determination that the current speed limit is the third speed (e.g., 640C, 65mph, 70mph) that is higher than the first speed and the current vehicle speed is the second speed (e.g., 640B, 55mph, 60mph) that is not above (e.g., is at or below) the third speed (e.g., 640C, 65mph, 70mph), the portion (e.g., 660C of FIG. 10C) of the speedometer between the location on the speedometer corresponding to the second speed (e.g., 55mph, 60mph) and a location on the speedometer corresponding to the sixth speed (e.g., a maximum indicated speed, 100mph, 105mph) has the fifth appearance (e.g., the third color (such as white), the third level of emphasis, and/or the third brightness). Displaying portions of the speedometer above the current vehicle speed with a different appearance as compared to portions of the speedometer that are not above the current vehicle speed provides the user with feedback about what current vehicle speed is detected, thereby providing improved user feedback.

In some embodiments, the first appearance has a first color (e.g., without having the second color) and the second appearance has a second color (e.g., without having the first color) that is different from the first color. In some embodiments, the first appearance and the second appearance are different (and distinguishable) based on color. Displaying using different colors for the first and second appearances enables the computer system to allow the user to differentiate between the two appearances, thereby providing improved user feedback.

In some embodiments, the speedometer (e.g., 640) includes a plurality of numerical indicators of a plurality of speeds and wherein a respective numerical indicator (e.g., indicating 50mph, indicating 60mph), of the plurality of numerical indicators, corresponding to the current speed limit has an appearance (e.g., a color, a level of emphasis, a size, and/or a brightness) that is different from the appearance (e.g., a color, a level of emphasis, a size, and/or a brightness) of other numerical indicators of the plurality of numerical indicators (e.g., indicating 10mph, indicating 15mph). In some embodiments, the plurality of numerical indicators (other than the respective numerical indicator corresponding to the current speed limit) have the same appearance (e.g., the same color, the same level of emphasis, the same size, and/or the same brightness). Using different appearances for the numerical indicator of the speedometer for the current speed limit as compared to other numerical indicators of the speedometer provides the user with feedback about what current speed limit has been detected, thereby providing improved user feedback.

In some embodiments, in accordance with a determination that a numerical indicator corresponds to the current speed limit, displaying the numerical indicator with an emphasized appearance (e.g., color, brightness, and/or size) and in accordance with a determination that the numerical indicator does not correspond to the current speed limit, displaying the numerical indicator without an emphasized appearance.

In some embodiments, a numerical indicator of the first speed is displayed adjacent to the location on the speedometer corresponding to the first speed. In some embodiments, a numerical indicator of the second speed is displayed adjacent to the location on the speedometer corresponding to the second speed. In some embodiments, the plurality of numerical indicators of respective speeds are displayed adjacent to respective locations on the speedometer corresponding to the respective speeds.

In some embodiments, while displaying, via the display generation component (e.g., 600C), the speedometer (e.g., 640) indicating the current vehicle speed, detecting a change in speed limit from the first speed (e.g., 640A) to the third speed (e.g., 640C). In response to detecting the change in speed limit from the first speed to the third speed, changing, via the display generation component, the appearance (e.g., by de-emphasizing) of a numerical indicator corresponding to the first speed. In some embodiments, in response to detecting the change in speed limit from the first speed to the third speed, changing, via the display generation component, the appearance (e.g., by emphasizing) of a numerical indicator corresponding to the third speed. Changing the appearance of the numerical indicators of the speedometer based on the speed limit changing provides the user with feedback that a change in the speed limit has been detected, thereby providing improved user feedback.

In some embodiments, the computer system (e.g., 600C) concurrently displays (e.g., as part of a vehicle instrument cluster interface), via the display generation component, with the speedometer indicating the current vehicle speed, a plurality of instrument cluster elements (e.g., as shown in FIG. 10A, a tachometer, a fuel level indicator 630D, a battery charge level indicator, and/or gearshift position indicator 630C). In some embodiments, the speedometer and/or the plurality of instrument cluster elements indicate information about a vehicle in which the display generation component is located. Concurrently displaying the speedometer with a plurality of cluster elements enables the computer system to concurrently provide the user with various information about the vehicle, thereby providing improved user feedback.

In some embodiments, the speedometer (e.g., an appearance of the speedometer) is based at least in part on information provided to the display generation component (e.g., 600C) from a companion device (e.g., 600A) that is separate from the computer system, wherein the information provided to the display generation component defines an appearance of the speedometer (e.g., 640) for display. In some embodiments, the information defines an appearance of the vehicle instrument cluster for display and the speedometer (and, optionally, a plurality of instrument cluster elements) is part of the vehicle instrument cluster. In some embodiments, the information provided to the display generation component defines an appearance of a vehicle instrument cluster (that includes the speedometer) for display, via the display generation component, as a respective vehicle instrument cluster interface with a respective appearance, as described in greater detail above. Basing the speedometer at least in part on information provided by a companion device enables the computer system to change the speedometer appearance based on the companion device (and thereby the user) that is currently within range of the computer system, thereby providing improved user feedback.

In some embodiments, the first appearance has first visual qualities while a first speedometer appearance is selected and the first appearance has second visual qualities, different from the first visual qualities, while a second speedometer appearance is selected, and the second appearance has third visual qualities while the first speedometer appearance is selected and the second appearance has fourth visual qualities, different from the third visual qualities, while the second speedometer appearance is selected. Having different visual qualities while the portion of the speedometer has a different appearance based on whether the current vehicle speed is above or below the current speed limit provides the user with feedback about whether the current speed of the vehicle is above or below the speed limit, thereby providing improved user feedback.

In some embodiments, the portion of the speedometer with the first/second appearance is a straight line while the first speedometer appearance is selected and the portion of the speedometer with the first/second appearance is an arc of a circle (or an arc of an ellipse) while the second speedometer appearance is selected. In some embodiments, the portion of the speedometer with the first/second appearance is an arc of a circle while the first speedometer appearance is selected and the portion of the speedometer with the first/second appearance is an arc of an ellipse while the second speedometer appearance is selected.

In some embodiments, the locations on the speedometer corresponding to different speeds are arranged in a line. In some embodiments, the locations on the speedometer corresponding to different speeds are arranged in a circle. In some embodiments, the locations on the speedometer corresponding to different speeds are arranged in an arc. In some embodiments, the locations on the speedometer corresponding to different speeds are arranged in a semi-circle.

In some embodiments, the first appearance and the second appearance of the portion of the speedometer between the first speed and the second speed is based on whether the speed limit is above or below the current speed and a selected speedometer appearance (e.g., a theme) of the speedometer. In some embodiments, the computer system receives user input changing the appearance of the speedometer, which also optionally visually changes the first appearance and the second appearance (while keeping the first appearance and the second appearance different).

In some embodiments, the computer system (e.g., 600C) displays, via the display generation component and concurrently with the speedometer (e.g., 640), a speed indicator (e.g., 640A, as part of and/or in addition to the speedometer) that indicates the current vehicle speed (e.g., speed of the vehicle in which the display generation component is located). In some embodiments, the speed indicator (e.g., 640A) is a displayed instrument needle that points to and/or overlaps with (e.g., by rotating about a fixed axis, by moving along a predetermined path) a location on the speedometer corresponding to the current vehicle speed. In some embodiments, the speed indicator indicates the current vehicle speed by displaying a numeric representation of the current vehicle speed. Displaying a speed indicator that indicates the current vehicle speed concurrently with the speedometer provides the user with feedback about the current vehicle speed (e.g., at two location or in two different formats), thereby providing improved user feedback.

Note that details of the processes described above with respect to method 1100 (e.g., FIG. 11) are also applicable in an analogous manner to the methods described below/above. For example, method 700, 900, and 1300 optionally include one or more of the characteristics of the various methods described above with reference to method 1100. For example, the instrument cluster (e.g., 630) is the same instrument cluster (e.g., 630) of the other methods. For another example, the speedometer (e.g., 640) is the same speedometer of the other methods. For brevity, these details are not repeated below.

FIGS. 12A-12D illustrate exemplary devices and user interfaces for providing dynamic instrument clusters, in accordance with some embodiments. The user interfaces in these figures are used to illustrate the processes described below, including the processes in FIG. 13.

FIGS. 12A-12B illustrate display screen 600C and display screen 600B as part of dashboard 602. Computer system 600A, which is a smartphone with a display in this example, is shown positioned next to dashboard 602. Dashboard 602 is part of vehicle 802. Vehicle 802 includes steering wheel 1200, which is positioned at least partially between dashboard 602 and a driver's seat of vehicle 802. The position of steering wheel 1200 is adjustable, such as automatically by a computer system and/or manually through user provided adjustments/inputs.

At FIG. 12A, computer system 600A transmits information to display screen 600C that defines an appearance of the vehicle instrument cluster, such as described with respect to FIGS. 6A-6I and 8A-8G above, and/or information to display screen 600B that defines an appearance of a secondary user interface. As a results, display screen 600C displays a vehicle instrument cluster and display screen 600B displays a user interface, such as application icons and/or user interfaces of applications. Computer system 600A also displays a user interface, such as application icons and/or user interfaces of applications.

At FIG. 12A, an instrument cluster, including navigational element, is displayed on display screen 600C. A position (e.g., with respect to dashboard 602 and/or display screens 600C and/or 600B) of steering wheel 1200 is determined (by a computer system of display screen 600C and/or computer system 600A). Based on the position of steering wheel 1200, the instrument cluster displayed on display screen 600C is optionally modified. In some embodiments, the modification to the instrument cluster displayed on display screen 600C is to reduce, minimize, and/or avoid the instrument cluster being occluded by steering wheel 1200 from a driver's perspective. Based on the position of steering wheel 1200, user interface 604 displayed on display screen 600B is optionally modified. In some embodiments, the modification to user interface 604 is to reduce, minimize, and/or avoid user interface 604 being occluded by steering wheel 1200 from the driver's perspective. Based on the position of steering wheel 1200, a user interface displayed on a display of computer system 600A is optionally modified. In some embodiments, the modification to the user interface is to reduce, minimize, and/or avoid the user interface being occluded by steering wheel 1200 from the driver's perspective.

In some embodiments, the modification to the user interface is based on: a position of steering wheel 1200, a position of a driver's seat, physiological parameters (e.g., height) of user, and/or a shape of the display on which the user interface (e.g., instrument cluster include directional element 636D, user interface 604, and/or user interface displayed on computer system 600A) is displayed. In some embodiments, the modification is one or more of: a shift (e.g., left, right, up, down) in display position of the user interface (or some of the elements of the user interface), a change in the distance between user interface elements (e.g., pushing elements closer together), and/or a change in size of the user interface (or some of the elements of the user interface).

At FIG. 12A, the system (e.g., computer system 600A and/or a computer system of display screen 600C) determines that, based on the current height of steering wheel 1200 (and/or position of a driver's seat, physiological parameters (e.g., height) of user, and/or a shape of the display), no portion (or less than a threshold amount) of display screen 600C is occluded and, in response, directional element 636D is displayed at a large size at a first position. The system optionally determines that, based on the current height of steering wheel 1200 (and/or position of a driver's seat, physiological parameters (e.g., height) of user, and/or a shape of the display), a portion of display screen 600B is occluded by steering wheel 1200 and, in response, reduces the horizontal size of user interface 604 of display screen 600B and shifts user interface 604 of display screen 600B to the right, as shown in FIG. 12A. As a result, a degree of occlusion of user interface 604 (of display screen 600B) by steering wheel 1200 is reduced (e.g., user interface 604 is not occluded by steering wheel 1200) from the driver's perspective. The system optionally determines that, based on the current height of steering wheel 1200 (and/or position of a driver's seat, physiological parameters (e.g., height) of user, and/or a position/shape of the display), a portion of the display of computer system 600A is occluded and, in response, shifts a portion of the user interface of computer system 600A to the right. As a result, a degree of occlusion of the user interface of computer system 600A by steering wheel 1200 is reduced (e.g., the user interface is less occluded by steering wheel 1200) from the driver's perspective.

In FIG. 12B, steering wheel 1200 (e.g., adjusted down) and/or the driver's seat position has been adjusted. The system (e.g., computer system 600A and/or a computer system of display screen 600C) determines that, based on the current position of steering wheel 1200 (and/or position of a driver's seat, physiological parameters (e.g., height) of user, and/or a position/shape of the display), portions of display screen 600C, display screen 600B, and the display of computer system 600A are occluded by steering wheel 1200 from the driver's perspective. In response, the instrument cluster displayed on display screen 600C, user interface 604 of display screen 600B, and the user interface of computer system 600A are optionally modified. In some embodiments, the modifications are to reduce, minimize, and/or avoid the respective user interfaces from being occluded by steering wheel 1200 from a driver's perspective. In FIG. 12B, positional element 636D has been reduced in size and shifted down on display screen 600C such that a degree of occlusion of positional element 636D is reduced (e.g., the user interface is not occluded by steering wheel 1200). Similarly, user interface 604 of display screen 600B is expanded and shifted to the left to take advantage of the reduced amount of occlusion caused by steering wheel 1200 after the steering wheel and/or driver's seat position was adjusted.

If steering wheel 1200 and/or the driver's seat is re-adjusted to return to the positions as in FIG. 12A, directional element 636D is optionally again displayed as shown in FIG. 12A to take advantage of the reduction (e.g., elimination) of the occlusion previously caused by steering wheel 1200.

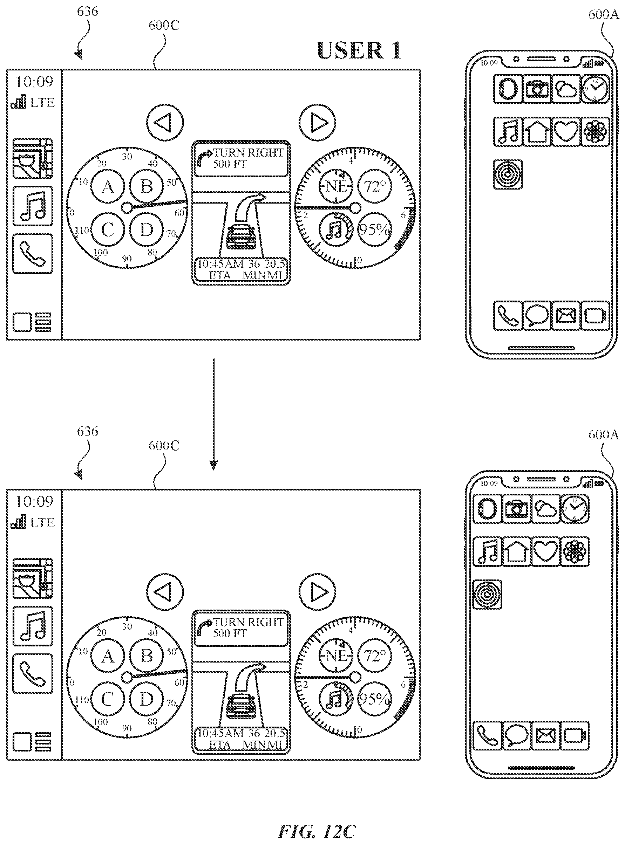

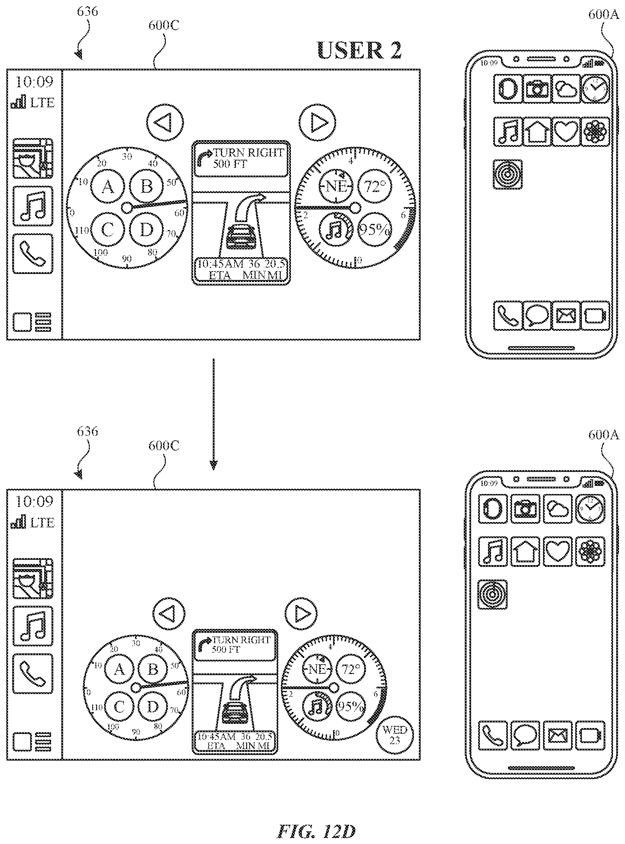

FIGS. 12C and 12D illustrate optionally making different adjustments of user interfaces (e.g., display on display screen 600B, 600C, and/or the display of computer system 600A) for different users. For example, as shown in FIG. 12C, an adjustment of a steering wheel while a first user (or first user account) is detected (e.g., as being logged into one of the devices, as being in the driver's seat) causes user interface 636 to be shifted down by a first amount without changing the size or quantity of the instrument cluster elements. In contrast, as shown in FIG. 12D, the same adjustment of the steering wheel while a second user (or second user account) is detected (e.g., as being logged into one of the devices, as being in the driver's seat) causes user interface 636 to be shifted down by a second amount (different from the first amount) and for elements of the user interface to be reduced in size. Further, in the example of FIG. 12D, the adjustment of the steering wheel also causes additional visual element 636E to be displayed (e.g., because that portion of the display is not occluded (or is less occluded) for the second user and therefore can be used to convey information to the second user) while continue to reduce distractions as the second user drives the vehicle.

As shown in FIGS. 12C and 12D, the same adjustments to the steering wheel and/or driver's seat position causes different changes to the user interface of computer system 600A while a first user (or first user account) is detected (e.g., as being logged into one of the devices, as being in the driver's seat) as compared to when a second user (or second user account) is detected (e.g., as being logged into one of the devices, as being in the driver's seat). Similarly, the same adjustments to the steering wheel and/or driver's seat position causes different changes to the user interface of display screen 600B while a first user (or first user account) is detected (e.g., as being logged into one of the devices, as being in the driver's seat) as compared to when a second user (or second user account) is detected (e.g., as being logged into one of the devices, as being in the driver's seat).

FIG. 13 is a flow diagram illustrating a method for providing dynamic instrument clusters using a computer system, in accordance with some embodiments. Method 1300 is performed at a computer system (e.g., 100, 300, 500, 600A, 600B, 600C, and/or of a vehicle) that is in communication with a display generation component (e.g., 600B, 600C, display generation component of the vehicle, a display set within a front console of the vehicle, and/or a display positioned ahead of/in front of a driver's seat of the vehicle). Some operations in method 1300 are, optionally, combined, the orders of some operations are, optionally, changed, and some operations are, optionally, omitted.

As described below, method 1100 provides an intuitive way for providing dynamic instrument clusters. The method reduces the cognitive burden on a user for viewing instrument clusters, thereby creating a more efficient human-machine interface. For battery-operated computing devices, enabling a view instrument clusters faster and more efficiently conserves power and increases the time between battery charges.

The computer system (e.g., 600A) provides (e.g., 1302) information to the display generation component that defines an appearance of a vehicle instrument cluster for display, via the display generation component (e.g., 600C), as a respective vehicle instrument cluster interface with a respective appearance.

The respective appearance includes, in accordance with a determination that display of the vehicle instrument cluster interface is subject to a first set of constraints (e.g., position of steering wheel 1200 in FIG. 12A) on the visible display region of the display of the vehicle instrument cluster, the vehicle instrument cluster interface is displayed (1304) with a first appearance (e.g., 636D of FIG. 12A).

The respective appearance includes, in accordance with a determination that display of the vehicle instrument cluster interface is subject to a second set of constraints (e.g., position of steering wheel 1200 in FIG. 12B) on the visible display region of the display of the vehicle instrument cluster, wherein the second set of constraints are different from the first set of constraints, the vehicle instrument cluster interface is displayed (1306) with a second appearance (e.g., 636D of FIG. 12B) that is different from the first appearance.

In some embodiments, the vehicle instrument cluster interface includes a first set of one or more instrument cluster elements (e.g., a speedometer, a tachometer, a fuel level indicator, a battery charge level indicator, and/or gearshift position indicator). In some embodiments, the first set of one or more instrument cluster elements indicate information about a vehicle in which the display generation component is located. Displaying an instrument cluster with different visual appearances based on the display being subject to a first or second set of constraints enables the computer system to provide the same information for the vehicle instrument cluster and to have the displayed vehicle instrument cluster accommodate the constraints of the display which reduces the need for the computer system to store multiple versions of the vehicle instrument cluster and allows the user to properly view the vehicle instrument clusters, thereby providing the user with enhanced visual feedback.

In some embodiments, at least one (e.g., first, second, and/or both sets of constraints) of the first set of constraints and the second set of constraints includes a constraint based on a shape of the display (e.g., 600C, 660B) of the vehicle instrument cluster (e.g., a shape of the display (in the vehicle) on which the vehicle instrument cluster interface will be displayed). Displaying an instrument cluster with different visual appearances based on a shape of the display enables the display to properly display the vehicle instrument clusters (e.g., with reduced obstructions), thereby providing the user with enhanced visual feedback.

In some embodiments, at least one (e.g., first, second, and/or both sets of constraints) of the first set of constraints and the second set of constraints includes a constraint based on a position (e.g., tilt, height, depth, and/or distance from driver's seat) of a steering wheel (e.g., 1200 in FIGS. 12A-12B) relative to the displayed vehicle instrument cluster (e.g., a display of the vehicle in which the vehicle instrument cluster is displayed). Displaying an instrument cluster with different visual appearances based on a position of a steering wheel enables the display to display the vehicle instrument clusters while reducing obstruction (e.g., from the user's perspective) of relevant parts of the vehicle instrument cluster, thereby providing the user with enhanced visual feedback.

In some embodiments, at least one (e.g., first, second, and/or both sets of constraints) of the first set of constraints and the second set of constraints includes a constraint based on a position (e.g., tilt, height, depth, and/or distances from steering wheel) of a seat (e.g., relative to the display vehicle instrument cluster) (e.g., driver's seat, and/or of the vehicle in which the vehicle instrument cluster is displayed). Displaying an instrument cluster with different visual appearances based on a position of a seat enables the display to display the vehicle instrument clusters while reducing obstruction (e.g., from the user's perspective) of relevant parts of the vehicle instrument cluster, thereby providing the user with enhanced visual feedback.

In some embodiments, at least one (e.g., first, second, and/or both sets of constraints) of the first set of constraints and the second set of constraints includes a constraint based on a physiological parameter (e.g., height and/or eye position) of a user (e.g., a driver of the vehicle in which the vehicle instrument cluster is displayed and/or a person in the driver's seat of the vehicle). Displaying an instrument cluster with different visual appearances based on a physiological parameter of the user enables the display to display the vehicle instrument clusters while reducing obstruction (e.g., from the user's perspective) of relevant parts of the vehicle instrument cluster, thereby providing the user with enhanced visual feedback.

In some embodiments, at least one (e.g., first, second, and/or both sets of constraints) of the first set of constraints and the second set of constraints includes a constraint based on one or more prior adjustments (e.g., customizations, such as of instrument cluster element size and/or instrument cluster element location) of the vehicle instrument cluster interface. Displaying an instrument cluster with different visual appearances based on a prior adjustment of the vehicle instrument cluster enables the display to display the vehicle instrument clusters by reusing the prior adjustment, reducing obstruction (e.g., from the user's perspective) of relevant parts of the vehicle instrument cluster and reducing the need for the user to provide inputs to perform the same adjustments again, thereby providing the user with enhanced visual feedback and reducing the number of inputs needed to perform an operation.

In some embodiments, the computer system (e.g., 600A) is in communication with a second display generation component (e.g., 600B, different from the display generation component 600C, same as the display generation component, of the vehicle in which the vehicle instrument cluster is displayed). The computer system (e.g., 600A) provides information to the second display generation component (e.g., 600B) that defines an appearance of a secondary interface for display, via the second display generation component, as a respective secondary interface with a respective appearance, including: in accordance with a determination that display of the secondary interface is subject to a third set of constraints (e.g., some or all of the first set of constraints, constraint based on a shape of the display of the secondary interface, constraint based on a position of a steering wheel, constraint based on a position of a seat, constraint based on a physiological parameter of a user, and/or constraint based on one or more prior adjustments of the secondary interface) on the visible display region of the display of the secondary interface, the secondary interface is displayed with a third appearance (e.g., 604 of FIG. 12A), and in accordance with a determination that display of the secondary interface is subject to a fourth set of constraints (e.g., some or all of the first set of constraints, constraint based on a shape of the display of the secondary interface, constraint based on a position of a steering wheel, constraint based on a position of a seat, constraint based on a physiological parameter of a user, and/or constraint based on one or more prior adjustments of the secondary interface) on the visible display region of the display of the secondary interface, wherein the fourth set of constraints are different from the third set of constraints, the secondary interface is displayed with a fourth appearance (e.g., 604 of FIG. 12B) that is different from the third appearance. Displaying a secondary interface with different visual appearances based on second display being subject to different set of constraints enables the computer system to provide the same information for the secondary interface and to have the displayed secondary interface accommodate the constraints of the second display, which reduces the need for the computer system to store multiple versions of the secondary interface and allows the user to properly view the secondary interface, thereby providing the user with enhanced visual feedback.

In some embodiments, when a change is detected (e.g., between FIG. 12A and 12B) in one or more parameters (e.g., position of 1200) of a vehicle in which the vehicle instrument cluster is displayed, the respective appearance of the respective vehicle instrument cluster interface changes (e.g., in response to detecting the change) based on the change in the parameter. Changing the respective appearance of the vehicle instrument cluster when a change is detected in a parameter of the vehicle (and based on the change in the parameter) provides the user with feedback that a change in a parameter of the vehicle has been detected, thereby providing improved visual feedback.

In some embodiments, a first parameter, of the one or more parameters of the vehicle, is a position (e.g., tilt, height, depth, and/or distance from driver's seat) of a steering wheel (e.g., 1200) of the vehicle. Changing the respective appearance of the vehicle instrument cluster when a change is detected in a position of a steering wheel of the vehicle (and based on the change in the parameter) provides the user with feedback that a change in the position of the steering wheel of the vehicle has been detected and, for example, to adjust the vehicle instrument cluster interface so that relevant portions are not obstructed for the user, thereby providing improved visual feedback.

In some embodiments, a second parameter, of the one or more parameters of the vehicle, is a position (e.g., tilt, height, depth, and/or distances from steering wheel) of a seat (e.g., driver's seat) of the vehicle. Changing the respective appearance of the vehicle instrument cluster when a change is detected in a position of a seat of the vehicle (and based on the change in the parameter) provides the user with feedback that a change in the position of the seat of the vehicle has been detected and, for example, to adjust the vehicle instrument cluster interface so that relevant portions are not obstructed for the user, thereby providing improved visual feedback.

In some embodiments, the first set of constraints and the second set of constraints are determined based on a first user being a driver of the vehicle (e.g., as shown in FIG. 12C). The computer system (e.g., 600A) provides information to the display generation component (e.g., 600C) that defines an appearance of a vehicle instrument cluster for display, via the display generation component, as a respective vehicle instrument cluster interface with a respective appearance, includes: in accordance with a determination that display of the vehicle instrument cluster interface is subject to a third set of constraints on the visible display region of the display of the vehicle instrument cluster that is different from the first set of constraints and the second set of constraints, the vehicle instrument cluster interface is displayed with a third appearance that is different from the first appearance and the second appearance, and in accordance with a determination that display of the vehicle instrument cluster interface is subject to a fourth set of constraints on the visible display region of the display of the vehicle instrument cluster, wherein the fourth set of constraints are different from the first set of constraints, the second set of constraints, and the third set of constraints, the vehicle instrument cluster interface is displayed with a fourth appearance that is different from the first appearance, the second appearance, and the third appearance. Wherein the third set of constraints and the fourth set of constraints are determined based on a second user being a driver of the vehicle (e.g., as shown in FIG. 12D). Providing information to define the respective appearance of the vehicle instrument cluster that enables adjustments for different users being a driver of the vehicle provides the user with feedback about which driver has been detected and, for example, to adjust the vehicle instrument cluster interface so that relevant portions are not obstructed for the detected driver, thereby providing improved visual feedback.

In some embodiments, the first set of constraints and the second set of constraints are determined based on a first instrument cluster template being used for the instrument cluster. The computer system (e.g., 600A) provides information to the display generation component (e.g., 600C) that defines an appearance of a vehicle instrument cluster (e.g., 636) for display, via the display generation component, as a respective vehicle instrument cluster interface with a respective appearance, includes: in accordance with a determination that display of the vehicle instrument cluster interface is subject to a third set of constraints on the visible display region of the display of the vehicle instrument cluster that is different from the first set of constraints and the second set of constraints, the vehicle instrument cluster interface is displayed with a third appearance that is different from the first appearance and the second appearance; and in accordance with a determination that display of the vehicle instrument cluster interface is subject to a fourth set of constraints on the visible display region of the display of the vehicle instrument cluster, wherein the fourth set of constraints are different from the first set of constraints, the second set of constraints, and the third set of constraints, the vehicle instrument cluster interface is displayed with a fourth appearance that is different from the first appearance, the second appearance, and the third appearance. Wherein the third set of constraints and the fourth set of constraints are determined based on a second instrument cluster template being used for the instrument cluster. Providing information to define the respective appearance of the vehicle instrument cluster that enables adjustments for different instrument cluster templates enables the computer system to provide the user feedback about which instrument cluster template has been selected, thereby providing improved visual feedback.

In some embodiments, the vehicle instrument cluster interface with the first appearance has the same quantity of instrument cluster elements as the vehicle instrument cluster interface with the second appearance (e.g., as shown in FIG. 12C). In some embodiments, the only difference between the first appearance and the second appearance is the quantity of instrument cluster elements and other visual aspects (e.g., background image/color and/or text size) between the first appearance and second appearance are not changed. Providing information to define the respective appearance of the vehicle instrument cluster such that the first appearance and the second appearance have the same number of instrument cluster elements enables the computer system to provide the user feedback on information about the vehicle using the same number of instrument cluster elements, thereby providing improved visual feedback.

In some embodiments, the vehicle instrument cluster interface with the first appearance has the same set of one or more instrument cluster elements as the vehicle instrument cluster interface with the second appearance, wherein the vehicle instrument cluster interface with the first appearance does not have any instrument cluster elements that are not part of the vehicle instrument cluster interface with the second appearance, and wherein the vehicle instrument cluster interface with the second appearance does not have any instrument cluster elements that are not part of the vehicle instrument cluster interface with the first appearance (e.g., as shown in FIG. 12C). Providing information to define the respective appearance of the vehicle instrument cluster such that the first appearance and the second appearance have the same set of instrument cluster elements enables the computer system to provide the user feedback on information about the vehicle using the same instrument cluster elements, thereby providing improved visual feedback.

In some embodiments, the respective instrument cluster elements of the first appearance are visually the same as the respective instrument cluster elements of the second appearance.

In some embodiments, the vehicle instrument cluster interface with the first appearance includes a first instrument cluster element (e.g., 636D in FIG. 12A) with a first size and the vehicle instrument cluster interface with the second appearance includes the first instrument cluster element (e.g., 636D in FIG. 12B) with a second size that is different from the first size. In some embodiments, the vehicle instrument cluster interface with the second appearance does not include the first instrument cluster element with the first size. Providing information to define the respective appearance of the vehicle instrument cluster such that the first appearance and the second appearance have the same instrument cluster element with different sizes enables the computer system to provide the user feedback about the state of the vehicle and/or computer system, and in particular the selected appearance for the vehicle instrument cluster interface, thereby providing improved visual feedback.

In some embodiments, the vehicle instrument cluster interface with the first appearance includes a plurality instrument cluster elements with various sizes and the vehicle instrument cluster interface with the second appearance includes the same plurality of instrument cluster element with various sizes, wherein corresponding instrument cluster elements of the vehicle instrument cluster interfaces having the first and second appearances have different sizes. For example, an instrument cluster element (e.g., tachometer) of the vehicle instrument cluster interface with the first appearance is a different size from the same instrument cluster element (e.g., tachometer) of the vehicle instrument cluster interface with the second appearance. For another example, another instrument cluster element (e.g., speedometer) of the vehicle instrument cluster interface with the first appearance is a different size from the same instrument cluster element (e.g., speedometer) of the vehicle instrument cluster interface with the second appearance.

In some embodiments, the sizes of one or more instrument cluster elements changes (increases and/or decreases) based on the vehicle instrument cluster interface being subject to the first or second set of constraints. For example, when the vehicle instrument cluster interface is subject to the first set of constraints, the instrument cluster elements of the vehicle instrument cluster are displayed at a particular size and when the vehicle instrument cluster interface instead becomes subject to the second set of constraints, the instrument cluster elements of the vehicle instrument cluster change in size (e.g., to become larger, to become smaller). In some embodiments, the only difference between the first appearance and the second appearance is the change in size of one or more instrument cluster elements.

In some embodiments, the vehicle instrument cluster interface with the first appearance includes a first instrument cluster element at a first position (e.g., 636D in FIG. 12A) in the vehicle instrument cluster interface and the vehicle instrument cluster interface with the second appearance includes the first instrument cluster element at a second position (e.g., 636D in FIG. 12B) in the vehicle instrument cluster interface that is different from the first position. In some embodiments, the vehicle instrument cluster interface with the second appearance does not include the first instrument cluster element at the first position. Providing information to define the respective appearance of the vehicle instrument cluster such that the first appearance and the second appearance have the same instrument cluster element at different positions enables the computer system to provide the user feedback about the state of the vehicle and/or computer system, and in particular the selected appearance for the vehicle instrument cluster interface, thereby providing improved visual feedback.

In some embodiments, the vehicle instrument cluster interface with the first appearance includes a plurality instrument cluster elements with various positions in the vehicle instrument cluster interface and the vehicle instrument cluster interface with the second appearance includes the same plurality of instrument cluster element with various positions in the vehicle instrument cluster interface, wherein corresponding instrument cluster elements of the vehicle instrument cluster interfaces having the first and second appearances have different positions in the respective vehicle instrument cluster interfaces. For example, an instrument cluster element (e.g., tachometer) of the vehicle instrument cluster interface with the first appearance is at a different position in the vehicle instrument cluster interface from the same instrument cluster element (e.g., tachometer) of the vehicle instrument cluster interface with the second appearance. For another example, another instrument cluster element (e.g., speedometer) of the vehicle instrument cluster interface with the first appearance is at a different position in the vehicle instrument cluster interface from the same instrument cluster element (e.g., speedometer) of the vehicle instrument cluster interface with the second appearance.

In some embodiments, the positions of one or more instrument cluster elements changes based on the vehicle instrument cluster interface being subject to the first or second set of constraints. For example, when the vehicle instrument cluster interface is subject to the first set of constraints, the instrument cluster elements of the vehicle instrument cluster are displayed at a particular positions and when the vehicle instrument cluster interface instead becomes subject to the second set of constraints, the instrument cluster elements of the vehicle instrument cluster move to different positions (e.g., some or all move to different positions). In some embodiments, the only difference between the first appearance and the second appearance is the change in position of one or more instrument cluster elements.

In some embodiments, the vehicle instrument cluster interface with the first appearance includes a first instrument cluster element with a first aspect ratio (e.g., a rectangle with a first ratio of width to height) and the vehicle instrument cluster interface with the second appearance includes the first instrument cluster element with a second aspect ratio (e.g., a rectangle with a second ratio of width to height that is different from the first ratio) that is different from the first aspect ratio. In some embodiments, the vehicle instrument cluster interface with the second appearance does not include the first instrument cluster element with the first aspect ratio. Providing information to define the respective appearance of the vehicle instrument cluster such that the first appearance and the second appearance have the same instrument cluster element with different aspect ratios enables the computer system to provide the user feedback about the state of the vehicle and/or computer system, and in particular the selected appearance for the vehicle instrument cluster interface, thereby providing improved visual feedback.

In some embodiments, the vehicle instrument cluster interface with the first appearance includes a plurality instrument cluster elements with various aspect ratios and the vehicle instrument cluster interface with the second appearance includes the same plurality of instrument cluster element with various aspect ratios, wherein corresponding instrument cluster elements of the vehicle instrument cluster interfaces having the first and second appearances have different aspect ratios. For example, an instrument cluster element (e.g., tachometer) of the vehicle instrument cluster interface with the first appearance has a different aspect ratio from the same instrument cluster element (e.g., tachometer) of the vehicle instrument cluster interface with the second appearance. For another example, another instrument cluster element (e.g., speedometer) of the vehicle instrument cluster interface with the first appearance has a different aspect ratio from the same instrument cluster element (e.g., speedometer) of the vehicle instrument cluster interface with the second appearance.

In some embodiments, the aspect ratio of one or more instrument cluster elements changes based on the vehicle instrument cluster interface being subject to the first or second set of constraints. For example, when the vehicle instrument cluster interface is subject to the first set of constraints, one or more of the instrument cluster elements of the vehicle instrument cluster are displayed at a particular aspect ratio and when the vehicle instrument cluster interface instead becomes subject to the second set of constraints, the one or more instrument cluster elements of the vehicle instrument cluster change to a different aspect ratio. In some embodiments, the only difference between the first appearance and the second appearance is the change in aspect ratio of one or more instrument cluster elements.

Note that details of the processes described above with respect to method 1300 (e.g., FIG. 13) are also applicable in an analogous manner to the methods described above. For example, method 700, 900, and 1100 optionally include one or more of the characteristics of the various methods described above with reference to method 1300. For example, the instrument cluster (e.g., 630) is the same instrument cluster (e.g., 630) of the other methods. For another example, the speedometer (e.g., 640) is the same speedometer of the other methods.

FIG. 14 is a flow diagram illustrating a method for displaying content using a computer system in accordance with some embodiments. Method 700 is performed at a computer system (e.g., 100, 300, 500, 630, and/or 650) (e.g., a computer system of a vehicle (e.g., infotainment system; an instrument panel system), a companion device that is separate from a vehicle, and/or a smartphone) that is in communication with a display generation component (e.g., display of 630 or 650) (e.g., the display portion of a touch-screen, an integrated display; an external display; a display monitor; a display adapter) (e.g., a display generation component of the vehicle, a display set within a front console of a vehicle and/or a display positioned ahead of/in front of a driver's seat of a vehicle), a touch-sensitive surface (e.g., touch-sensitive display of 630 or 650) (e.g., the touch-sensitive portion of a touch-screen), and an external device (e.g., 600A) e.g., a phone and/or table that is connected wirelessly and/or by wire to the computer system). Some operations in method 1400 are, optionally, combined, the orders of some operations are, optionally, changed, and some operations are, optionally, omitted.

The computer system receives, from the external device (e.g., 600A), a first content for display (e.g., 630A in FIG. 8A or 650A in FIG. 8B) (e.g., a rendered video feed, and/or a video feed that was rendered at the external device for display via a display generation component of the computer system).

The computer system generates, at the computer system, a second content for display (e.g., 630B-630F, and/or the displayed portions of 630, other than 630A; or 650B-650F and/or the displayed portions of 650 other than 650A) (e.g., a second rendered video feed) that is different from the first content.

The computer system concurrently displays (e.g., as part of a vehicle instrument cluster), via the display generation component, a user interface that includes: the first content at a first area (e.g., first area of a display or first area of a touch-sensitive display) in the user interface; and the second content at a second area (e.g., second area of a display or second area of a touch-sensitive display) in the user interface that is different from the first area.

While concurrently display the first content at the first area of the user interface and the second content at the second area in the user interface, the computer system receives, via the touch-sensitive surface, an input (e.g., a tap input, a swipe input, and/or a press-and-hold input).

In response to receiving the input, in accordance with a determination that the input was received at a location corresponding to the first area (e.g., was received at a touch-screen on the first area), the computer system transmits one or more characteristics of the input (e.g., the type of input, the location of the input, the path of the input, and/or the duration of the input) to the external device (e.g., 600A).

In response to receiving the input, in accordance with a determination that the input was not received at a location that corresponds to the first area (e.g., was received at the second area), the computer system forgoes transmitting the one or more characteristics (e.g., any characteristics) of the input to the external device.

In accordance with some embodiments, the one or more characteristics of the input includes an indication of a location (e.g., a start location (e.g., touch-down location), an end location (e.g., a lift-off location), and/or a path of travel) of the input relative to the first area.

In accordance with some embodiments, the one or more characteristics of the input includes an indication of a duration (e.g., length of time in seconds and/or length of time in milliseconds) of the input relative to the first area.

In accordance with some embodiments, the one or more characteristics of the input are transmitted to the external device while continuing to receive the input (e.g., before the input has ended and/or before lift-off of the input).

In accordance with some embodiments, the first content (e.g., updates to the visual content being received from the external device) continues to be displayed while continuing to receive the input (e.g., before the input has ended and/or before lift-off of the input).

In accordance with some embodiments, in response to receiving the input, in accordance with the determination that the input was not received at a location that corresponds to the first area (e.g., was received at the second area), the computer system performs (e.g., at the computer system) an operation (e.g., updating the display, changing user interfaces, and/or changing a setting of the vehicle in which the computer system is installed) based on the location (and/or type and/or duration) of the input.

As described below, method 1400 provides an intuitive way for displaying content. The method reduces the cognitive burden on a user for viewing content, thereby creating a more efficient human-machine interface. For battery-operated computing devices, enabling a user to view content faster and more efficiently conserves power and increases the time between battery charges.

FIG. 15 is a flow diagram illustrating a method for conditionally displaying user interfaces using a computer system, in accordance with some embodiments. Method 1500 is performed at a computer system (e.g., 100, 300, 500, 600A, 600B, 600C, and/or of a vehicle) that is in communication with a display generation component (e.g., 600B, 600C, display generation component of the vehicle, a display set within a front console of the vehicle, and/or a display positioned ahead of/in front of a driver's seat of the vehicle). Some operations in method 1500 are, optionally, combined, the orders of some operations are, optionally, changed, and some operations are, optionally, omitted.

As described below, method 1500 provides an intuitive way for conditionally displaying user interfaces using a computer system. The method reduces the cognitive burden on a user for displaying a conditional user interfaces using a computer system. For battery-operated computing devices, enabling display of a conditional user interface faster and more efficiently conserves power and increases the time between battery charges.

The computer system (e.g., a computer system integrated into the automobile/vehicle having dashboard 602), while the display generation component (e.g., 600B) is in an inactive state (e.g., powered down and/or not currently displaying content), detects (1502) a display initiation event (e.g., an engine/motor ignition and/or ignition input; proximity of an electronic device of a first type (e.g., a key fob; a device provisioned with a digital key for accessing one or more restricted functions of the computer system); opening and/or unlocking of a door associated with the computer system(e.g., a car door); detecting the presence of a user (e.g., a user sitting in a driver seat of the car)).

In response to detecting the display initiation event, the computer system transitions (1503) the display generation component to an active state.

In response to detecting the display initiation event (1503) and in accordance with a determination that a first set of display content criteria are met (In some embodiments, the first set of display content criteria includes a criterion that is met when the second set of display content criteria are not met), the computer system displays (1504), via the display generation component, a first user interface (e.g., the other user interface discussed with reference to FIG. 6A) that includes first content.

In response to detecting the display initiation event (1503) and in accordance with a determination that a second set of display content criteria are met, displaying (1506), via the display generation component, a second user interface (e.g., 604) that includes second content transmitted from a first external device (e.g., 600A) (e.g., a mobile computer (e.g., a smart phone, a tablet computer, a smart watch, a laptop)), wherein the second set of display content criteria includes (1508) a criterion that is met when the computer system is in communication with the first external device (In some embodiments, the second set of display content criteria includes a criterion that is met when the first set of display content criteria are not met), and the second user interface is displayed (1510) without having previously displayed the first user interface (In some embodiments, without previously displaying the first content), since transitioning from the inactive state to the active state. Conditionally displaying first content or second content based on whether a first set or second of display content criteria are met allows the computer system to display specific content under appropriate conditions, which performs an operation when a set of conditions has been met without requiring further user input.

In some embodiments, the computer system is integrated into a vehicle ( e.g., the automobile/vehicle having dashboard 602) (e.g., an automobile; a truck; a motorcycle; a boat).

In some embodiments, the first content is generated (e.g., rendered and/or sourced) by the computer system (e.g., the first user interface and the first are native content generated by the computer system).

In some embodiments, the second set of display content criteria includes a criterion that is met when the first external device (e.g., 600A) was previously (e.g., in an immediately preceding operating session of the computer system (e.g., a previous driving session)) connected to the computer system and previously (e.g., in an immediately preceeding operating session of the computer system (e.g., a previous driving session)) transmitted third content that was displayed via the display generation component. Displaying the second content based, at least in part, on whether the first external device was previously connected to the computer system and previously transmitted content enables the system to display additional content from the first external device when it was previously used to do so, which performs an operation when a set of conditions has been met without requiring further user input.

In some embodiments, the computer system is in communication with one or more input devices (e.g., touch-sensitive surface of display 600B) (e.g., a touch-sensitive surface, a keyboard, a hardware button, and/or a hardware knob). While the display generation component is in the active state, receiving, via the one or more input devices, an input (e.g., a touch on display 600B). In response to receiving the input and in accordance with a determination that the input corresponds to the first content (e.g., content associated with the other user interface discussed with reference to FIG. 6B), performing a first function (e.g., modify one or more settings (e.g., climate control settings, lighting settings) of the computer system; adjusting a media playback or navigation operation being performed by the computer system) at the computer system. ). In response to receiving the input and in accordance with a determination that the input corresponds to the second content (e.g., content of user interface 604), causing (e.g., by transmitting an instruction to the first external device) the first external device (e.g., 600A) to perform a second function (e.g., modifying a media playback or navigation operation being performed by the first external device), different than the first function (In some embodiments, without performing the first function). Performing a first function at the computer system or causing performance of a second function at the external device in response to an input enables the computer to route the input to the appropriate system/device, without the user having to identify a target device, via additional inputs, which performs an operation when a set of conditions has been met without requiring further user input.

Note that details of the processes described above with respect to method 1500 (e.g., FIG. 15) are also applicable in an analogous manner to the methods described above. For example, methods 700, 900, and 1100 optionally are performed using a conditionally displayed user interface described above with reference to method 1500. For example, the instrument cluster (e.g., 630) is displayed in a conditionally displayed user interface (e.g., 604) of method 1500.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve the presentation of electronic instrument clusters. The present disclosure contemplates that in some instances, this gathered data may include personal information data that uniquely identifies or can be used to contact or locate a specific person. Such personal information data can include demographic data, location-based data, telephone numbers, email addresses, twitter IDs, home addresses, or any other identifying or personal information.

The present disclosure recognizes that the use of such personal information data, in the present technology, can be used to the benefit of users. For example, the personal information data can be used to present the user with a customized instrument cluster that is of greater use to the user. Accordingly, use of such personal information data enables users to have calculated control of the presented content. Further, other uses for personal information data that benefit the user are also contemplated by the present disclosure.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of displaying electronic instrument clusters, the present technology can be configured to allow users to select to "opt in" or "opt out" of participation in the collection of personal information data during registration for services or anytime thereafter. In another example, users can select not to be provided with user-specific electronic instrument clusters. In yet another example, users can select to not have electronic instrument clusters adjust to parameters of the user and/or vehicle. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, instrument clusters can be presented to users by inferring preferences based on non-personal information data or a bare minimum amount of personal information, other non-personal information available to the system, or publicly available information.

Exemplary embodiments of the present disclosure are set out in the following items:
1. A method, comprising:
   at a computer system that is in communication with a display generation component:
   providing information to the display generation component that defines an appearance of a vehicle instrument cluster for display, via the display generation component, as a first vehicle instrument cluster interface with a first appearance, the first vehicle instrument cluster interface including a first set of one or more instrument cluster elements;
   subsequent to providing information to the display generation component that defines an appearance of the vehicle instrument cluster, detecting a sequence of one or more user reconfiguration inputs directed to a reconfiguration user interface for the vehicle instrument cluster; and
   after receiving the sequence of one or more user reconfiguration inputs, providing information to the display generation component that defines an updated appearance of the vehicle instrument cluster for display, via the display generation component, as a second vehicle instrument cluster interface with a second appearance that is different from the first appearance, the second vehicle instrument cluster interface including a second set of one or more instrument cluster elements that are different in appearance, location and/or arrangement from the first set of one or more instrument cluster elements.
2. The method of item 1, wherein the sequence of one or more user reconfiguration inputs are detected at one or more input devices of the computer system.
3. The method of any of items 1-2, wherein the sequence of one or more user reconfiguration inputs are detected while the computer system is not connected to the display generation component.
4. The method of any of items 1-3, wherein the updated appearance includes a change in font relative to the first appearance.
5. The method of any of items 1-4, wherein the updated appearance includes a change in color relative to the first appearance.
6. The method of any of items 1-5, wherein the updated appearance includes a change in line widths relative to the first appearance.
7. The method of any of items 1-6, wherein the updated appearance includes the addition and/or removal of one or more instrument cluster elements relative to the first appearance.
8. The method of any of items 1-7, wherein the updated appearance includes a change in shape of one or more instrument cluster elements relative to the first appearance.
9. The method of any of items 1-8, wherein the updated appearance includes a change in a quantity of instrument cluster elements relative to the first appearance.
10. The method of any of items 1-9, wherein the updated appearance includes a change in location of one or more instrument cluster elements relative to the first appearance.
11. The method of any of items 1-10, wherein:
   prior to providing information to the display generation component that defines the updated appearance of the vehicle instrument cluster, the first vehicle instrument cluster interface with the first appearance is an initial instrument cluster displayed, via the display generation component, upon start of a vehicle in which the display generation component is located; and
   subsequent to providing information to the display generation component that defines an updated appearance of the vehicle instrument cluster, the second vehicle instrument cluster interface with the second appearance is an initial instrument cluster displayed, via the display generation component, upon start of the vehicle in which the display generation component is located.
12. The method of any of items 1-11, wherein the first appearance of the first vehicle instrument cluster interface is determined by the computer system and the second appearance of the second vehicle instrument cluster interface is determined by the computer system.
13. The method of any of items 1-12, wherein the sequence of one or more user reconfiguration inputs directed to the reconfiguration user interface includes selection of a first template instrument cluster interface from among a plurality of template instrument cluster interfaces, and wherein the updated appearance is based on the selection of the first template instrument cluster interface.
14. A non-transitory computer-readable storage medium storing one or more programs configured to be executed by one or more processors of a computer system that is in communication with a display generation component, the one or more programs including instructions for performing the method of any of items 1-13.
15. A computer system, comprising:
   a display generation component;
   one or more processors; and
   memory storing one or more programs configured to be executed by the one or more processors, the one or more programs including instructions for performing the method of any of items 1-13.
16. A computer system, comprising:
   a display generation component; and
   means for performing the method of any of items 1-13.
17. A non-transitory computer-readable storage medium storing one or more programs configured to be executed by one or more processors of a computer system that is in communication with a display generation component, the one or more programs including instructions for:
   providing information to the display generation component that defines an appearance of a vehicle instrument cluster for display, via the display generation component, as a first vehicle instrument cluster interface with a first appearance, the first vehicle instrument cluster interface including a first set of one or more instrument cluster elements;
   subsequent to providing information to the display generation component that defines an appearance of the vehicle instrument cluster, detecting a sequence of one or more user reconfiguration inputs directed to a reconfiguration user interface for the vehicle instrument cluster; and
   after receiving the sequence of one or more user reconfiguration inputs, providing information to the display generation component that defines an updated appearance of the vehicle instrument cluster for display, via the display generation component, as a second vehicle instrument cluster interface with a second appearance that is different from the first appearance, the second vehicle instrument cluster interface including a second set of one or more instrument cluster elements that are different in appearance, location and/or arrangement from the first set of one or more instrument cluster elements.
18. A computer system, comprising:
   a display generation component;
   one or more processors; and
   memory storing one or more programs configured to be executed by the one or more processors, the one or more programs including instructions for:
      providing information to the display generation component that defines an appearance of a vehicle instrument cluster for display, via the display generation component, as a first vehicle instrument cluster interface with a first appearance, the first vehicle instrument cluster interface including a first set of one or more instrument cluster elements;
      subsequent to providing information to the display generation component that defines an appearance of the vehicle instrument cluster, detecting a sequence of one or more user reconfiguration inputs directed to a reconfiguration user interface for the vehicle instrument cluster; and
      after receiving the sequence of one or more user reconfiguration inputs, providing information to the display generation component that defines an updated appearance of the vehicle instrument cluster for display, via the display generation component, as a second vehicle instrument cluster interface with a second appearance that is different from the first appearance, the second vehicle instrument cluster interface including a second set of one or more instrument cluster elements that are different in appearance, location and/or arrangement from the first set of one or more instrument cluster elements.
19. A computer system, comprising:
   a display generation component;
   means for providing information to the display generation component that defines an appearance of a vehicle instrument cluster for display, via the display generation component, as a first vehicle instrument cluster interface with a first appearance, the first vehicle instrument cluster interface including a first set of one or more instrument cluster elements;
   means, subsequent to providing information to the display generation component that defines an appearance of the vehicle instrument cluster, for detecting a sequence of one or more user reconfiguration inputs directed to a reconfiguration user interface for the vehicle instrument cluster; and
   means, after receiving the sequence of one or more user reconfiguration inputs, for providing information to the display generation component that defines an updated appearance of the vehicle instrument cluster for display, via the display generation component, as a second vehicle instrument cluster interface with a second appearance that is different from the first appearance, the second vehicle instrument cluster interface including a second set of one or more instrument cluster elements that are different in appearance, location and/or arrangement from the first set of one or more instrument cluster elements.
20. A computer program product, comprising one or more programs configured to be executed by one or more processors of a computer system that is in communication with a display generation component, the one or more programs including instructions for:
   providing information to the display generation component that defines an appearance of a vehicle instrument cluster for display, via the display generation component, as a first vehicle instrument cluster interface with a first appearance, the first vehicle instrument cluster interface including a first set of one or more instrument cluster elements;
   subsequent to providing information to the display generation component that defines an appearance of the vehicle instrument cluster, detecting a sequence of one or more user reconfiguration inputs directed to a reconfiguration user interface for the vehicle instrument cluster; and
   after receiving the sequence of one or more user reconfiguration inputs, providing information to the display generation component that defines an updated appearance of the vehicle instrument cluster for display, via the display generation component, as a second vehicle instrument cluster interface with a second appearance that is different from the first appearance, the second vehicle instrument cluster interface including a second set of one or more instrument cluster elements that are different in appearance, location and/or arrangement from the first set of one or more instrument cluster elements.
21. A method, comprising:
   at a computer system that is in communication with a display generation component:
   providing information to the display generation component that defines an appearance of a vehicle instrument cluster for display, via the display generation component, as a respective vehicle instrument cluster interface with a respective appearance, including:
   in accordance with a determination that the display generation component is a display generation component of a first type of vehicle, the information provided to the display generation component defines a first vehicle instrument cluster interface with a first appearance; and
   in accordance with a determination that the display generation component is a display generation component of a second type of vehicle different from the first type of vehicle, the information provided to the display generation component defines a second vehicle instrument cluster interface with a second appearance that is different from the first appearance.
22. The method of item 21, wherein the first type is a vehicle manufacturer and wherein the first vehicle instrument cluster interface with the first appearance includes one or more visual aspects that are specific to the first type of vehicle.
23. The method of any of items 21-22, wherein:
   the first vehicle instrument cluster interface with the first appearance includes a first plurality of instrument cluster elements, including a first instrument cluster element; and
   the second vehicle instrument cluster interface with the second appearance includes a second plurality of instrument cluster elements, including the first instrument cluster element.
24. The method of any of items 21-23, further comprising:
   subsequent to providing information to the display generation component that defines the appearance of the vehicle instrument cluster for display, via the display generation component, as the respective vehicle instrument cluster interface with the respective appearance, detecting a first sequence of one or more user reconfiguration inputs directed to a reconfiguration user interface for the first vehicle instrument cluster interface; and
   after receiving the first sequence of one or more user reconfiguration inputs, providing information to the display generation component that defines an appearance of a vehicle instrument cluster for display, via the display generation component, as the respective vehicle instrument cluster interface with the respective appearance, including:
      in accordance with a determination that the display generation component is a display generation component of the first type of vehicle, the information provided to the display generation component defines the first vehicle instrument cluster interface with the second appearance; and
      in accordance with a determination that the display generation component is a display generation component of the second type of vehicle, the information provided to the display generation component defines a second vehicle instrument cluster interface with the second appearance.
25. The method of any of items 21-24, further comprising:
   subsequent to providing information to the display generation component that defines the appearance of the vehicle instrument cluster for display, via the display generation component, as the respective vehicle instrument cluster interface with the respective appearance, detecting a second sequence of one or more user reconfiguration inputs directed to a reconfiguration user interface for the second vehicle instrument cluster interface; and
   after receiving the first sequence of one or more user reconfiguration inputs, providing information to the display generation component that defines an appearance of a vehicle instrument cluster for display, via the display generation component, as the respective vehicle instrument cluster interface with the respective appearance, including:
      in accordance with a determination that the display generation component is a display generation component of the first type of vehicle, the information provided to the display generation component defines the first vehicle instrument cluster interface with the first appearance; and
      in accordance with a determination that the display generation component is a display generation component of the second type of vehicle, the information provided to the display generation component defines a second vehicle instrument cluster interface with the first appearance.
26. The method of any of items 21-23 and 25, further comprising:
   subsequent to providing information to the display generation component that defines the appearance of the vehicle instrument cluster for display, via the display generation component, as the respective vehicle instrument cluster interface with the respective appearance, displaying a reconfiguration user interface for the first vehicle instrument cluster interface, wherein the reconfiguration user interface for the first vehicle instrument cluster interface does not enable customization of the first vehicle instrument cluster interface to have the second appearance.
27. The method of any of items 21-24 and 26, further comprising:
   subsequent to providing information to the display generation component that defines the appearance of the vehicle instrument cluster for display, via the display generation component, as the respective vehicle instrument cluster interface with the respective appearance, displaying a reconfiguration user interface for the second vehicle instrument cluster interface, wherein the reconfiguration user interface for the second vehicle instrument cluster interface does not enable customization of the second vehicle instrument cluster interface to have the first appearance.
28. The method of any of items 21-27, further comprising:
   subsequent to providing information to the display generation component that defines the appearance of the vehicle instrument cluster for display, via the display generation component, as the respective vehicle instrument cluster interface with the respective appearance:
      detecting a third sequence of one or more user reconfiguration inputs directed to a reconfiguration user interface for the first vehicle instrument cluster interface;
      in response to detecting the third sequence of one or more user reconfiguration inputs directed to the reconfiguration user interface for the first vehicle instrument cluster interface, customizing the first vehicle instrument cluster interface to have a third appearance;
      detecting a fourth sequence of one or more user reconfiguration inputs directed to a reconfiguration user interface for the second vehicle instrument cluster interface; and
      in response to detecting the fourth sequence of one or more user reconfiguration inputs directed to the reconfiguration user interface for the second vehicle instrument cluster interface, customizing the second vehicle instrument cluster interface to have the third appearance; and
   after receiving the third sequence of one or more user reconfiguration inputs and the fourth sequence of one or more user reconfiguration inputs, providing information to the display generation component that defines an appearance of a vehicle instrument cluster for display, via the display generation component, as the respective vehicle instrument cluster interface with the respective appearance, including:
      in accordance with a determination that the display generation component is a display generation component of the first type of vehicle, the information provided to the display generation component defines the first vehicle instrument cluster interface with the third appearance; and
      in accordance with a determination that the display generation component is a display generation component of the second type of vehicle, the information provided to the display generation component defines a second vehicle instrument cluster interface with the third appearance.
29. The method of any of items 21-27, wherein the information provided, in accordance with the determination that the display generation component is the display generation component of the first type of vehicle, is based on the same user selections of instrument cluster appearance as the information provided, in accordance with the determination that the display generation component is the display generation component of the second type of vehicle.
30. A non-transitory computer-readable storage medium storing one or more programs configured to be executed by one or more processors of a computer system that is in communication with a display generation component, the one or more programs including instructions for performing the method of any of items 21-29.
31. A computer system, comprising:
   a display generation component;
   one or more processors; and
   memory storing one or more programs configured to be executed by the one or more processors, the one or more programs including instructions for performing the method of any of items 21-29.
32. A computer system, comprising:
   a display generation component; and
   means for performing the method of any of items 21-29.
33. A non-transitory computer-readable storage medium storing one or more programs configured to be executed by one or more processors of a computer system that is in communication with a display generation component, the one or more programs including instructions for:
   providing information to the display generation component that defines an appearance of a vehicle instrument cluster for display, via the display generation component, as a respective vehicle instrument cluster interface with a respective appearance, including:
   in accordance with a determination that the display generation component is a display generation component of a first type of vehicle, the information provided to the display generation component defines a first vehicle instrument cluster interface with a first appearance; and
   in accordance with a determination that the display generation component is a display generation component of a second type of vehicle different from the first type of vehicle, the information provided to the display generation component defines a second vehicle instrument cluster interface with a second appearance that is different from the first appearance.
34. A computer system, comprising:
   a display generation component;
   one or more processors; and
   memory storing one or more programs configured to be executed by the one or more processors, the one or more programs including instructions for:
      providing information to the display generation component that defines an appearance of a vehicle instrument cluster for display, via the display generation component, as a respective vehicle instrument cluster interface with a respective appearance, including:
      in accordance with a determination that the display generation component is a display generation component of a first type of vehicle, the information provided to the display generation component defines a first vehicle instrument cluster interface with a first appearance; and
      in accordance with a determination that the display generation component is a display generation component of a second type of vehicle different from the first type of vehicle, the information provided to the display generation component defines a second vehicle instrument cluster interface with a second appearance that is different from the first appearance.
35. A computer system, comprising:
   a display generation component; and
   means for providing information to the display generation component that defines an appearance of a vehicle instrument cluster for display, via the display generation component, as a respective vehicle instrument cluster interface with a respective appearance, including:
      in accordance with a determination that the display generation component is a display generation component of a first type of vehicle, the information provided to the display generation component defines a first vehicle instrument cluster interface with a first appearance; and
      in accordance with a determination that the display generation component is a display generation component of a second type of vehicle different from the first type of vehicle, the information provided to the display generation component defines a second vehicle instrument cluster interface with a second appearance that is different from the first appearance.
36. A computer program product, comprising one or more programs configured to be executed by one or more processors of a computer system that is in communication with a display generation component, the one or more programs including instructions for:
   providing information to the display generation component that defines an appearance of a vehicle instrument cluster for display, via the display generation component, as a respective vehicle instrument cluster interface with a respective appearance, including:
   in accordance with a determination that the display generation component is a display generation component of a first type of vehicle, the information provided to the display generation component defines a first vehicle instrument cluster interface with a first appearance; and
   in accordance with a determination that the display generation component is a display generation component of a second type of vehicle different from the first type of vehicle, the information provided to the display generation component defines a second vehicle instrument cluster interface with a second appearance that is different from the first appearance.
37. A method, comprising:
   at a computer system that is in communication with a display generation component:
   displaying, via the display generation component, a speedometer indicating a current vehicle speed, wherein:
   in accordance with a determination that a current speed limit is a first speed and the current vehicle speed is a second speed that is above the first speed, a portion of the speedometer between a location on the speedometer corresponding to the first speed and a location on the speedometer corresponding to the second speed has a first appearance; and
   in accordance with a determination that the current speed limit is a third speed that is higher than the first speed and the current vehicle speed is the second speed that is not above the third speed, the portion of the speedometer between the location on the speedometer corresponding to the first speed and the location on the speedometer corresponding to the second speed has a second appearance that is different from the first appearance.
38. The method of item 37, further comprising:
   while displaying, via the display generation component, the speedometer indicating the current vehicle speed, detecting a change in speed limit to a fourth speed that is between the first speed and the second speed; and
   in response to detecting the change in speed limit to the fourth speed, changing display, via the display generation component, of the appearance of the portion of the speedometer between the location on the speedometer corresponding to the first speed and the location on the speedometer corresponding to the second speed to a third appearance that is different from the first appearance and the second appearance.
39. The method of any of items 37-38, further comprising:
   while displaying, via the display generation component, the speedometer indicating the second speed as the current vehicle speed, detecting a change in the current vehicle speed to a fifth speed that is below the second speed; and
   in response to detecting the change in the current vehicle speed to the fifth speed, changing display, via the display generation component, of the appearance of the portion of the speedometer between the location on the speedometer corresponding to the first speed and the location on the speedometer corresponding to the second speed to a fourth appearance that is different from the first appearance and the second appearance.
40. The method of any of items 37-39, wherein:
   displaying, via the display generation component, the speedometer indicating the current vehicle speed, includes:
   in accordance with the determination that the current speed limit is the first speed and the current vehicle speed is the second speed that is above the first speed, a portion of the speedometer between a location on the speedometer corresponding to the second speed and a location on the speedometer corresponding to a sixth speed has a fifth appearance; and
   in accordance with a determination that the current speed limit is the third speed that is higher than the first speed and the current vehicle speed is the second speed that is not above the third speed, the portion of the speedometer between the location on the speedometer corresponding to the second speed and a location on the speedometer corresponding to the sixth speed has the fifth appearance.
41. The method of any of items 37-40, wherein the first appearance has a first color and the second appearance has a second color that is different from the first color.
42. The method of any of items 37-41, wherein the speedometer includes a plurality of numerical indicators of a plurality of speeds and wherein a respective numerical indicator, of the plurality of numerical indicators, corresponding to the current speed limit has an appearance that is different from the appearance of other numerical indicators of the plurality of numerical indicators.
43. The method of item 42, further comprising:
   while displaying, via the display generation component, the speedometer indicating the current vehicle speed, detecting a change in speed limit from the first speed to the third speed; and
   in response to detecting the change in speed limit from the first speed to the third speed, changing, via the display generation component, the appearance of a numerical indicator corresponding to the first speed.
44. The method of any of items 37-43, further comprising:
   concurrently displaying, via the display generation component, with the speedometer indicating the current vehicle speed, a plurality of instrument cluster elements.
45. The method of any of items 37-44, wherein the speedometer is based at least in part on information provided to the display generation component from a companion device that is separate from the computer system, wherein the information provided to the display generation component defines an appearance of the speedometer for display.
46. The method of any of items 37-45, wherein:
   the first appearance has first visual qualities while a first speedometer appearance is selected and the first appearance has second visual qualities, different from the first visual qualities, while a second speedometer appearance is selected; and
   the second appearance has third visual qualities while the first speedometer appearance is selected and the second appearance has fourth visual qualities, different from the third visual qualities, while the second speedometer appearance is selected.
47. The method of any of items 37-46, further comprising:
   displaying, via the display generation component and concurrently with the speedometer, a speed indicator that indicates the current vehicle speed.
48. A non-transitory computer-readable storage medium storing one or more programs configured to be executed by one or more processors of a computer system that is in communication with a display generation component, the one or more programs including instructions for performing the method of any of items 37-47.
49. A computer system, comprising:
   a display generation component;
   one or more processors; and
   memory storing one or more programs configured to be executed by the one or more processors, the one or more programs including instructions for performing the method of any of items 37-47.
50. A computer system, comprising:
   a display generation component; and
   means for performing the method of any of items 37-47.
51. A non-transitory computer-readable storage medium storing one or more programs configured to be executed by one or more processors of a computer system that is in communication with a display generation component, the one or more programs including instructions for:
   displaying, via the display generation component, a speedometer indicating a current vehicle speed, wherein:
   in accordance with a determination that a current speed limit is a first speed and the current vehicle speed is a second speed that is above the first speed, a portion of the speedometer between a location on the speedometer corresponding to the first speed and a location on the speedometer corresponding to the second speed has a first appearance; and
   in accordance with a determination that the current speed limit is a third speed that is higher than the first speed and the current vehicle speed is the second speed that is not above the third speed, the portion of the speedometer between the location on the speedometer corresponding to the first speed and the location on the speedometer corresponding to the second speed has a second appearance that is different from the first appearance.
52. A computer system, comprising:
   a display generation component;
   one or more processors; and
   memory storing one or more programs configured to be executed by the one or more processors, the one or more programs including instructions for:
      displaying, via the display generation component, a speedometer indicating a current vehicle speed, wherein:
      in accordance with a determination that a current speed limit is a first speed and the current vehicle speed is a second speed that is above the first speed, a portion of the speedometer between a location on the speedometer corresponding to the first speed and a location on the speedometer corresponding to the second speed has a first appearance; and
      in accordance with a determination that the current speed limit is a third speed that is higher than the first speed and the current vehicle speed is the second speed that is not above the third speed, the portion of the speedometer between the location on the speedometer corresponding to the first speed and the location on the speedometer corresponding to the second speed has a second appearance that is different from the first appearance.
53. A computer system, comprising:
   a display generation component; and
   means for displaying, via the display generation component, a speedometer indicating a current vehicle speed, wherein:
      in accordance with a determination that a current speed limit is a first speed and the current vehicle speed is a second speed that is above the first speed, a portion of the speedometer between a location on the speedometer corresponding to the first speed and a location on the speedometer corresponding to the second speed has a first appearance; and
      in accordance with a determination that the current speed limit is a third speed that is higher than the first speed and the current vehicle speed is the second speed that is not above the third speed, the portion of the speedometer between the location on the speedometer corresponding to the first speed and the location on the speedometer corresponding to the second speed has a second appearance that is different from the first appearance.
54. A computer program product, comprising one or more programs configured to be executed by one or more processors of a computer system that is in communication with a display generation component, the one or more programs including instructions for:
   displaying, via the display generation component, a speedometer indicating a current vehicle speed, wherein:
   in accordance with a determination that a current speed limit is a first speed and the current vehicle speed is a second speed that is above the first speed, a portion of the speedometer between a location on the speedometer corresponding to the first speed and a location on the speedometer corresponding to the second speed has a first appearance; and
   in accordance with a determination that the current speed limit is a third speed that is higher than the first speed and the current vehicle speed is the second speed that is not above the third speed, the portion of the speedometer between the location on the speedometer corresponding to the first speed and the location on the speedometer corresponding to the second speed has a second appearance that is different from the first appearance.
55. A method, comprising:
   at a computer system that is in communication with a display generation component:
   providing information to the display generation component that defines an appearance of a vehicle instrument cluster for display, via the display generation component, as a respective vehicle instrument cluster interface with a respective appearance, including:
   in accordance with a determination that display of the vehicle instrument cluster interface is subject to a first set of constraints on the visible display region of the display of the vehicle instrument cluster, the vehicle instrument cluster interface is displayed with a first appearance; and
   in accordance with a determination that display of the vehicle instrument cluster interface is subject to a second set of constraints on the visible display region of the display of the vehicle instrument cluster, wherein the second set of constraints are different from the first set of constraints, the vehicle instrument cluster interface is displayed with a second appearance that is different from the first appearance.
56. The method of item 55, wherein at least one of the first set of constraints and the second set of constraints includes a constraint based on a shape of the display of the vehicle instrument cluster.
57. The method of any of items 55-56, wherein at least one of the first set of constraints and the second set of constraints includes a constraint based on a position of a steering wheel relative to the displayed vehicle instrument cluster.
58. The method of any of items 55-57, wherein at least one of the first set of constraints and the second set of constraints includes a constraint based on a position of a seat.
59. The method of any of items 55-58, wherein at least one of the first set of constraints and the second set of constraints includes a constraint based on a physiological parameter of a user.
60. The method of any of items 55-59, wherein at least one of the first set of constraints and the second set of constraints includes a constraint based on one or more prior adjustments of the vehicle instrument cluster interface.
61. The method of any of items 55-60, wherein the computer system is in communication with a second display generation component, the method further comprising:
   providing information to the second display generation component that defines an appearance of a secondary interface for display, via the second display generation component, as a respective secondary interface with a respective appearance, including:
   in accordance with a determination that display of the secondary interface is subject to a third set of constraints on the visible display region of the display of the secondary interface, the secondary interface is displayed with a third appearance; and
   in accordance with a determination that display of the secondary interface is subject to a fourth set of constraints on the visible display region of the display of the secondary interface, wherein the fourth set of constraints are different from the third set of constraints, the secondary interface is displayed with a fourth appearance that is different from the third appearance.
62. The method of any of items 55-61, wherein when a change is detected in one or more parameters of a vehicle in which the vehicle instrument cluster is displayed, the respective appearance of the respective vehicle instrument cluster interface changes based on the change in the parameter.
63. The method of item 62, wherein a first parameter, of the one or more parameters of the vehicle, is a position of a steering wheel of the vehicle.
64. The method of any of items 62-63, wherein a second parameter, of the one or more parameters of the vehicle, is a position of a seat of the vehicle.
65. The method of any of items 55-64, wherein:
   the first set of constraints and the second set of constraints are determined based on a first user being a driver of the vehicle;
   providing information to the display generation component that defines an appearance of a vehicle instrument cluster for display, via the display generation component, as a respective vehicle instrument cluster interface with a respective appearance, includes:
      in accordance with a determination that display of the vehicle instrument cluster interface is subject to a third set of constraints on the visible display region of the display of the vehicle instrument cluster that is different from the first set of constraints and the second set of constraints, the vehicle instrument cluster interface is displayed with a third appearance that is different from the first appearance and the second appearance; and
      in accordance with a determination that display of the vehicle instrument cluster interface is subject to a fourth set of constraints on the visible display region of the display of the vehicle instrument cluster, wherein the fourth set of constraints are different from the first set of constraints, the second set of constraints, and the third set of constraints, the vehicle instrument cluster interface is displayed with a fourth appearance that is different from the first appearance, the second appearance, and the third appearance; and
   the third set of constraints and the fourth set of constraints are determined based on a second user being a driver of the vehicle.
66. The method of any of items 55-65, wherein:
   the first set of constraints and the second set of constraints are determined based on a first instrument cluster template being used for the instrument cluster;
   providing information to the display generation component that defines an appearance of a vehicle instrument cluster for display, via the display generation component, as a respective vehicle instrument cluster interface with a respective appearance, includes:
      in accordance with a determination that display of the vehicle instrument cluster interface is subject to a third set of constraints on the visible display region of the display of the vehicle instrument cluster that is different from the first set of constraints and the second set of constraints, the vehicle instrument cluster interface is displayed with a third appearance that is different from the first appearance and the second appearance; and
      in accordance with a determination that display of the vehicle instrument cluster interface is subject to a fourth set of constraints on the visible display region of the display of the vehicle instrument cluster, wherein the fourth set of constraints are different from the first set of constraints, the second set of constraints, and the third set of constraints, the vehicle instrument cluster interface is displayed with a fourth appearance that is different from the first appearance, the second appearance, and the third appearance; and
   the third set of constraints and the fourth set of constraints are determined based on a second instrument cluster template being used for the instrument cluster.
67. The method of any of items 55-66, wherein the vehicle instrument cluster interface with the first appearance has the same quantity of instrument cluster elements as the vehicle instrument cluster interface with the second appearance.
68. The method of any of items 55-67, wherein the vehicle instrument cluster interface with the first appearance has a same set of one or more instrument cluster elements as the vehicle instrument cluster interface with the second appearance, wherein the vehicle instrument cluster interface with the first appearance does not have any instrument cluster elements that are not part of the vehicle instrument cluster interface with the second appearance, and wherein the vehicle instrument cluster interface with the second appearance does not have any instrument cluster elements that are not part of the vehicle instrument cluster interface with the first appearance.
69. The method of any one of items 55-68, wherein:
   the vehicle instrument cluster interface with the first appearance includes a first instrument cluster element with a first size and the vehicle instrument cluster interface with the second appearance includes the first instrument cluster element with a second size that is different from the first size.
70. The method of any one of items 55-69, wherein:
   the vehicle instrument cluster interface with the first appearance includes a first instrument cluster element at a first position in the vehicle instrument cluster interface and the vehicle instrument cluster interface with the second appearance includes the first instrument cluster element at a second position in the vehicle instrument cluster interface that is different from the first position.
71. The method of any one of items 55-70, wherein:
   the vehicle instrument cluster interface with the first appearance includes a first instrument cluster element with a first aspect ratio and the vehicle instrument cluster interface with the second appearance includes the first instrument cluster element with a second aspect ratio that is different from the first aspect ratio.
72. A non-transitory computer-readable storage medium storing one or more programs configured to be executed by one or more processors of a computer system that is in communication with a display generation component, the one or more programs including instructions for performing the method of any of items 55-71.
73. A computer system, comprising:
   a display generation component;
   one or more processors; and
   memory storing one or more programs configured to be executed by the one or more processors, the one or more programs including instructions for performing the method of any of items 55-71.
74. A computer system, comprising:
   a display generation component; and
   means for performing the method of any of items 55-71.
75. A non-transitory computer-readable storage medium storing one or more programs configured to be executed by one or more processors of a computer system that is in communication with a display generation component, the one or more programs including instructions for:
   providing information to the display generation component that defines an appearance of a vehicle instrument cluster for display, via the display generation component, as a respective vehicle instrument cluster interface with a respective appearance, including:
   in accordance with a determination that display of the vehicle instrument cluster interface is subject to a first set of constraints on the visible display region of the display of the vehicle instrument cluster, the vehicle instrument cluster interface is displayed with a first appearance; and
   in accordance with a determination that display of the vehicle instrument cluster interface is subject to a second set of constraints on the visible display region of the display of the vehicle instrument cluster, wherein the second set of constraints are different from the first set of constraints, the vehicle instrument cluster interface is displayed with a second appearance that is different from the first appearance.
76. A computer system, comprising:
   a display generation component;
   one or more processors; and
   memory storing one or more programs configured to be executed by the one or more processors, the one or more programs including instructions for:
      providing information to the display generation component that defines an appearance of a vehicle instrument cluster for display, via the display generation component, as a respective vehicle instrument cluster interface with a respective appearance, including:
      in accordance with a determination that display of the vehicle instrument cluster interface is subject to a first set of constraints on the visible display region of the display of the vehicle instrument cluster, the vehicle instrument cluster interface is displayed with a first appearance; and
      in accordance with a determination that display of the vehicle instrument cluster interface is subject to a second set of constraints on the visible display region of the display of the vehicle instrument cluster, wherein the second set of constraints are different from the first set of constraints, the vehicle instrument cluster interface is displayed with a second appearance that is different from the first appearance.
77. A computer system, comprising:
   a display generation component; and
   means for providing information to the display generation component that defines an appearance of a vehicle instrument cluster for display, via the display generation component, as a respective vehicle instrument cluster interface with a respective appearance, including:
      in accordance with a determination that display of the vehicle instrument cluster interface is subject to a first set of constraints on the visible display region of the display of the vehicle instrument cluster, the vehicle instrument cluster interface is displayed with a first appearance; and
      in accordance with a determination that display of the vehicle instrument cluster interface is subject to a second set of constraints on the visible display region of the display of the vehicle instrument cluster, wherein the second set of constraints are different from the first set of constraints, the vehicle instrument cluster interface is displayed with a second appearance that is different from the first appearance.
78. A computer program product, comprising one or more programs configured to be executed by one or more processors of a computer system that is in communication with a display generation component, the one or more programs including instructions for:
   providing information to the display generation component that defines an appearance of a vehicle instrument cluster for display, via the display generation component, as a respective vehicle instrument cluster interface with a respective appearance, including:
   in accordance with a determination that display of the vehicle instrument cluster interface is subject to a first set of constraints on the visible display region of the display of the vehicle instrument cluster, the vehicle instrument cluster interface is displayed with a first appearance; and
   in accordance with a determination that display of the vehicle instrument cluster interface is subject to a second set of constraints on the visible display region of the display of the vehicle instrument cluster, wherein the second set of constraints are different from the first set of constraints, the vehicle instrument cluster interface is displayed with a second appearance that is different from the first appearance.
79. A method, comprising:
   at a computer system that is in communication with a display generation component, a touch-sensitive surface, and an external device:
   receiving, from the external device, a first content for display;
   generating, at the computer system, a second content for display that is different from the first content;
   concurrently displaying, via the display generation component, a user interface that includes:
      the first content at a first area in the user interface; and
      the second content at a second area in the user interface that is different from the first area;
   while concurrently display the first video feed at the first area of the user interface and the second video feed at the second area in the user interface, receiving, via the touch-sensitive surface, an input; and
   in response to receiving the input:
      in accordance with a determination that the input was received at a location corresponding to the first area, transmitting one or more characteristics of the input to the external device; and
      in accordance with a determination that the input was not received at a location that corresponds to the first area, forgoing transmitting the one or more characteristics of the input to the external device.
80. The method of item 79, wherein the one or more characteristics of the input includes an indication of a location of the input relative to the first area.
81. The method of any of items 79-80, wherein the one or more characteristics of the input includes an indication of a duration of the input relative to the first area.
82. The method of any of items 79-81, wherein the one or more characteristics of the input are transmitted to the external device while continuing to receive the input.
83. The method of any of items 79-82, wherein the first content continues to be displayed while continuing to receive the input.
84. The method of any of items 79-83, further comprising:
   in response to receiving the input:
   in accordance with the determination that the input was not received at a location that corresponds to the first area, performing an operation based on the location of the input.
85. A non-transitory computer-readable storage medium storing one or more programs configured to be executed by one or more processors of a computer system that is in communication with a display generation component, a touch-sensitive surface, and an external device, the one or more programs including instructions for performing the method of any of items 79-84.
86. A computer system that is configured to communicate with a display generation component, a touch-sensitive surface, and an external device, the computer system comprising:
   one or more processors; and
   memory storing one or more programs configured to be executed by the one or more processors, the one or more programs including instructions for performing the method of any of items 79 - 84.
87. A computer system that is configured to communicate with a display generation component, a touch-sensitive surface, and an external device, comprising:
   means for performing the method of any of items 79-84.
88. A computer program product, comprising one or more programs configured to be executed by one or more processors of a computer system that is in communication with a display generation component, a touch-sensitive surface, and an external device, the one or more programs including instructions for performing the method of any of items 79-84.
89. A non-transitory computer-readable storage medium storing one or more programs configured to be executed by one or more processors of a computer system that is in communication with a display generation component, a touch-sensitive surface, and an external device, the one or more programs including instructions for:
   receiving, from the external device, a first content for display;
   generating, at the computer system, a second content for display that is different from the first content;
   concurrently displaying, via the display generation component, a user interface that includes:
      the first content at a first area in the user interface; and
      the second content at a second area in the user interface that is different from the first area;
   while concurrently display the first video feed at the first area of the user interface and the second video feed at the second area in the user interface, receiving, via the touch-sensitive surface, an input; and
   in response to receiving the input:
      in accordance with a determination that the input was received at a location corresponding to the first area, transmitting one or more characteristics of the input to the external device; and
      in accordance with a determination that the input was not received at a location that corresponds to the first area, forgoing transmitting the one or more characteristics of the input to the external device.
90. A computer system configured to communicate with a display generation component, a touch-sensitive surface, and an external device, comprising:
   one or more processors; and
   memory storing one or more programs configured to be executed by the one or more processors, the one or more programs including instructions for:
      receiving, from the external device, a first content for display;
      generating, at the computer system, a second content for display that is different from the first content;
      concurrently displaying, via the display generation component, a user interface that includes:
         the first content at a first area in the user interface; and
         the second content at a second area in the user interface that is different from the first area;
      while concurrently display the first video feed at the first area of the user interface and the second video feed at the second area in the user interface, receiving, via the touch-sensitive surface, an input; and
      in response to receiving the input:
         in accordance with a determination that the input was received at a location corresponding to the first area, transmitting one or more characteristics of the input to the external device; and
         in accordance with a determination that the input was not received at a location that corresponds to the first area, forgoing transmitting the one or more characteristics of the input to the external device.
91. A computer system configured to communicate with a display generation component, a touch-sensitive surface, and an external device, comprising:
   means for receiving, from the external device, a first content for display;
   means for generating, at the computer system, a second content for display that is different from the first content;
   means for concurrently displaying, via the display generation component, a user interface that includes:
      the first content at a first area in the user interface; and
      the second content at a second area in the user interface that is different from the first area;
   means, while concurrently display the first video feed at the first area of the user interface and the second video feed at the second area in the user interface, for receiving, via the touch-sensitive surface, an input; and
   means, responsive to receiving the input, for:
      in accordance with a determination that the input was received at a location corresponding to the first area, transmitting one or more characteristics of the input to the external device; and
      in accordance with a determination that the input was not received at a location that corresponds to the first area, forgoing transmitting the one or more characteristics of the input to the external device.
92. A computer program product, comprising one or more programs configured to be executed by one or more processors of a computer system that is in communication with a a display generation component, a touch-sensitive surface, and an external device, the one or more programs including instructions for:
   receiving, from the external device, a first content for display;
   generating, at the computer system, a second content for display that is different from the first content;
   concurrently displaying, via the display generation component, a user interface that includes:
      the first content at a first area in the user interface; and
      the second content at a second area in the user interface that is different from the first area;
   while concurrently display the first video feed at the first area of the user interface and the second video feed at the second area in the user interface, receiving, via the touch-sensitive surface, an input; and
   in response to receiving the input:
      in accordance with a determination that the input was received at a location corresponding to the first area, transmitting one or more characteristics of the input to the external device; and
      in accordance with a determination that the input was not received at a location that corresponds to the first area, forgoing transmitting the one or more characteristics of the input to the external device.
93. A method, comprising:
   at a computer system that is in communication with a display generation component:
   while the display generation component is in an inactive state, detecting a display initiation event; and
   in response to detecting the display initiation event, transitioning the display generation component to an active state and:
      in accordance with a determination that a first set of display content criteria are met, displaying, via the display generation component, a first user interface that includes first content; and
      in accordance with a determination that a second set of display content criteria are met, displaying, via the display generation component, a second user interface that includes second content transmitted from a first external device, wherein:
         the second set of display content criteria includes a criterion that is met when the computer system is in communication with the first external device, and
         the second user interface is displayed without having previously displayed the first user interface, since transitioning from the inactive state to the active state.
94. The method of item 93, wherein the computer system is integrated into a vehicle.
95. The method of any one of items 93-94, wherein the first content is generated by the computer system.
96. The method of any one of items 93-95, wherein the second set of display content criteria includes a criterion that is met when the first external device was previously connected to the computer system and previously transmitted third content that was displayed via the display generation component.
97. The method of any one of items 93-96, wherein the computer system is in communication with one or more input devices, the method further comprising:
   while the display generation component is in the active state, receiving, via the one or more input devices, an input; and
   in response to receiving the input:
      in accordance with a determination that the input corresponds to the first content, performing a first function at the computer system; and
      in accordance with a determination that the input corresponds to the second content, causing the first external device to perform a second function, different than the first function.
98. A non-transitory computer-readable storage medium storing one or more programs configured to be executed by one or more processors of a computer system that is in communication with a display generation component, the one or more programs including instructions for performing the method of any of items 93-97.
99. A computer system that is configured to communicate with a display generation component, the computer system comprising:
   one or more processors; and
   memory storing one or more programs configured to be executed by the one or more processors, the one or more programs including instructions for performing the method of any of items 93-97.
100. A computer system that is configured to communicate with a display generation component, comprising:
   means for performing the method of any of items 93-97.
101. A computer program product, comprising one or more programs configured to be executed by one or more processors of a computer system that is in communication with a display generation component, the one or more programs including instructions for performing the method of any of items 93-97.
102. A non-transitory computer-readable storage medium storing one or more programs configured to be executed by one or more processors of a computer system that is in communication with a display generation component, the one or more programs including instructions for:
   while the display generation component is in an inactive state, detecting a display initiation event; and
   in response to detecting the display initiation event, transitioning the display generation component to an active state and:
      in accordance with a determination that a first set of display content criteria are met, displaying, via the display generation component, a first user interface that includes first content; and
      in accordance with a determination that a second set of display content criteria are met, displaying, via the display generation component, a second user interface that includes second content transmitted from a first external device, wherein:
         the second set of display content criteria includes a criterion that is met when the computer system is in communication with the first external device, and
         the second user interface is displayed without having previously displayed the first user interface, since transitioning from the inactive state to the active state.
103. A computer system configured to communicate with a display generation component, comprising:
   one or more processors; and
   memory storing one or more programs configured to be executed by the one or more processors, the one or more programs including instructions for:
      while the display generation component is in an inactive state, detecting a display initiation event; and
      in response to detecting the display initiation event, transitioning the display generation component to an active state and:
         in accordance with a determination that a first set of display content criteria are met, displaying, via the display generation component, a first user interface that includes first content; and
         in accordance with a determination that a second set of display content criteria are met, displaying, via the display generation component, a second user interface that includes second content transmitted from a first external device, wherein:
            the second set of display content criteria includes a criterion that is met when the computer system is in communication with the first external device, and
            the second user interface is displayed without having previously displayed the first user interface, since transitioning from the inactive state to the active state.
104. A computer system configured to communicate with a display generation component, comprising:
   means for, while the display generation component is in an inactive state, detecting a display initiation event; and
   means for, in response to detecting the display initiation event, transitioning the display generation component to an active state and:
      in accordance with a determination that a first set of display content criteria are met, displaying, via the display generation component, a first user interface that includes first content; and
      in accordance with a determination that a second set of display content criteria are met, displaying, via the display generation component, a second user interface that includes second content transmitted from a first external device, wherein:
         the second set of display content criteria includes a criterion that is met when the computer system is in communication with the first external device, and
         the second user interface is displayed without having previously displayed the first user interface, since transitioning from the inactive state to the active state.

## Claims

1. A method, comprising:
at a computer system that is in communication with a display generation component:
providing information to the display generation component that defines an appearance of a vehicle instrument cluster for display, via the display generation component, as a first vehicle instrument cluster interface with a first appearance, the first vehicle instrument cluster interface including a first set of one or more instrument cluster elements;
subsequent to providing information to the display generation component that defines an appearance of the vehicle instrument cluster, detecting a sequence of one or more user reconfiguration inputs directed to a reconfiguration user interface for the vehicle instrument cluster, wherein the sequence of one or more user reconfiguration inputs directed to the reconfiguration user interface includes selection of a first template instrument cluster interface from among a plurality of template instrument cluster interfaces; and
after receiving the sequence of one or more user reconfiguration inputs, providing information to the display generation component that defines an updated appearance of the vehicle instrument cluster for display, via the display generation component, as a second vehicle instrument cluster interface with a second appearance that is different from the first appearance, the second vehicle instrument cluster interface including a second set of one or more instrument cluster elements that are different in appearance, location and/or arrangement from the first set of one or more instrument cluster elements.

2. The method of claim 1, wherein the sequence of one or more user reconfiguration inputs are detected at one or more input devices of the computer system.

3. The method of any of claims 1-2, wherein the sequence of one or more user reconfiguration inputs are detected while the computer system is not connected to the display generation component.

4. The method of any of claims 1-3, wherein the updated appearance includes a change in font relative to the first appearance.

5. The method of any of claims 1-4, wherein the updated appearance includes a change in color relative to the first appearance.

6. The method of any of claims 1-5, wherein the updated appearance includes a change in line widths relative to the first appearance.

7. The method of any of claims 1-6, wherein the updated appearance includes the addition and/or removal of one or more instrument cluster elements relative to the first appearance.

8. The method of any of claims 1-7, wherein the updated appearance includes a change in shape of one or more instrument cluster elements relative to the first appearance.

9. The method of any of claims 1-8, wherein the updated appearance includes a change in a quantity of instrument cluster elements relative to the first appearance.

10. The method of any of claims 1-9, wherein the updated appearance includes a change in location of one or more instrument cluster elements relative to the first appearance.

11. The method of any of claims 1-10, wherein:
prior to providing information to the display generation component that defines the updated appearance of the vehicle instrument cluster, the first vehicle instrument cluster interface with the first appearance is an initial instrument cluster displayed, via the display generation component, upon start of a vehicle in which the display generation component is located; and
subsequent to providing information to the display generation component that defines an updated appearance of the vehicle instrument cluster, the second vehicle instrument cluster interface with the second appearance is an initial instrument cluster displayed, via the display generation component, upon start of the vehicle in which the display generation component is located.

12. The method of any of claims 1-11, wherein the first appearance of the first vehicle instrument cluster interface is determined by the computer system and the second appearance of the second vehicle instrument cluster interface is determined by the computer system.

13. The method of any of claims 1-12, wherein the updated appearance is based on the selection of the first template instrument cluster interface.

14. A computer-readable storage medium storing one or more programs configured to be executed by one or more processors of a computer system that is in communication with a display generation component, the one or more programs including instructions for performing the method of any of claims 1-13.

15. A computer system, comprising:
a display generation component;
one or more processors; and
memory storing one or more programs configured to be executed by the one or more processors, the one or more programs including instructions for performing the method of any of claims 1-13.
